(19) Europäisches Patentamt
European Patent Office
Office européen des brevets

(11) EP 3 070 521 B1

(12) # EUROPEAN PATENT SPECIFICATION

(45) Date of publication and mention of the grant of the patent:
**16.01.2019 Bulletin 2019/03**

(21) Application number: **14862983.5**

(22) Date of filing: **04.11.2014**

(51) Int Cl.:
***G02F 1/1368*** (2006.01) ***C09K 19/12*** (2006.01)
***C09K 19/30*** (2006.01) ***C09K 19/32*** (2006.01)
***C09K 19/34*** (2006.01) ***C09K 19/38*** (2006.01)
***C09K 19/42*** (2006.01) ***C09K 19/54*** (2006.01)
***G02F 1/13*** (2006.01) ***C09K 19/04*** (2006.01)
***G02F 1/1337*** (2006.01) ***G02F 1/1333*** (2006.01)
***G02F 1/1343*** (2006.01) ***G02F 1/1362*** (2006.01)

(86) International application number:
**PCT/JP2014/079197**

(87) International publication number:
**WO 2015/072369 (21.05.2015 Gazette 2015/20)**

(54) **LIQUID-CRYSTAL DISPLAY ELEMENT**
FLÜSSIGKRISTALLANZEIGEELEMENT
ÉLÉMENT D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.11.2013 JP 2013233959**

(43) Date of publication of application:
**21.09.2016 Bulletin 2016/38**

(73) Proprietor: **DIC Corporation**
**Tokyo 174-8520 (JP)**

(72) Inventors:
- **OGAWA Shinji**
**Kitaadachi-gun**
**Saitama 362-8577 (JP)**
- **IWASHITA Yoshinori**
**Kitaadachi-gun**
**Saitama 362-8577 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
**EP-A1- 2 607 451**
**WO-A1-2012/117875**
**JP-A- 2013 144 796**
**JP-A- 2013 173 915**
**JP-A- 2013 173 915**
**US-A1- 2010 140 614**

- **KENJI NOMURA ET AL.: 'Room-temperature fabrication of transparent flexible thin-film transistors using amorphous oxide semiconductors' NATURE vol. 432, no. 7016, 25 November 2004, pages 488 - 492, XP002412994**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 070 521 B1

## Description

Technical Field

The present invention relates to liquid crystal display devices.

Background Art

Liquid crystal display devices are used in various products, including clocks, calculators, household electrical appliances, measuring instruments, automotive instrument panels, word processors, electronic organizers, printers, computers, and televisions. Typical types of liquid crystal display devices include twisted nematic (TN), super-twisted nematic (STN), dynamic scattering (DS), guest-host (GH), in-plane switching (IPS), fringe-field switching (FFS), optically compensated birefringence (OCB), electrically controlled birefringence (ECB), vertically aligned (VA), color super-homeotropic (CSH), and ferroelectric liquid crystal (FLC) display devices. Although conventional liquid crystal display devices are statically driven, multiplexed liquid crystal display devices have been commonly used. Among the mainstream schemes are passive-matrix driving and, more recently, active-matrix (AM) driving with elements such as thin-film transistors (TFTs) and thin-film diodes (TFDs).

Silicon-based semiconductors are known for use in thin-film transistors for active-matrix driving. Recently, thin-film transistors fabricated from oxide semiconductors, such as zinc oxide and In-Ga-Zn-O, have also attracted attention for use in liquid crystal display devices (see PTL 1). Oxide semiconductor thin-film transistors have higher field-effect mobilities than silicon-based thin-film transistors and thus allow for improved display device performance and reduced power consumption. Accordingly, liquid crystal device manufacturers are focusing their efforts on the development of oxide semiconductor thin-film transistors, including the use of arrays thereof.

Unfortunately, oxide semiconductor thin-film transistors have low reliability due to variations in electrical characteristics. The variations in electrical characteristics are attributable to lattice defects, such as oxygen defects, which occur when oxygen desorbs from an oxide semiconductor layer. As a solution to this problem, a method has been researched that involves controlling the oxygen atmosphere conditions during the deposition of an oxide semiconductor to reduce the electron carrier concentration so that fewer oxygen defects occur (see PTL 2).

A liquid crystal composition used for a liquid crystal layer of a liquid crystal display device is subjected to strict impurity control since impurities present in the composition greatly affect the electrical characteristics of the display device. It is also known that impurities remaining in the material used for alignment layers, which directly contact the liquid crystal layer, migrate into the liquid crystal layer and affect the electrical characteristics thereof. Accordingly, research has been conducted on the influence of impurities in alignment layer materials on the characteristics of liquid crystal display devices.

Although research has been conducted on various solutions to the problem of lattice defects such as oxygen defects, as discussed in PTL 2, they have been unsuccessful in sufficiently reducing the desorption of oxygen from an oxide semiconductor layer. As oxygen desorbs from an oxide semiconductor layer, it diffuses into and alters an insulating layer covering the oxide semiconductor layer. A typical liquid crystal display device includes only a thin insulating layer, or a thin insulating layer and a thin alignment layer, between oxide semiconductor layers of thin-film transistors and a liquid crystal layer to separate the liquid crystal composition from the oxide semiconductor layer; therefore, the diffusion of oxygen desorbed from the oxide semiconductor layer and the resulting alteration of the insulating layer result in insufficient separation of the liquid crystal layer from the oxide semiconductor layer. As a result, the oxygen desorbed from the oxide semiconductor layer will affect the liquid crystal layer. The diffusion of impurities such as oxygen desorbed from the oxide semiconductor layer into the liquid crystal layer may decrease the voltage holding ratio (VHR) and increase the ion density (ID) of the liquid crystal layer and may thus cause display defects such as white spots, uneven alignment, and image-sticking.

Among further prior art, US 2010/0140614 discloses an oxide semiconductor device comprising an oxide semiconductor layer and an electrode contacting with a first surface of the oxide semiconductor layer, wherein the oxide semiconductor layer includes a first layer provided on the first surface side and having a substantially uniform oxygen concentration at a first concentration; and a second layer provided on a second surface side opposite to the first surface and having a substantially uniform oxygen oxygen-content concentration at a second concentration, and the first concentration is higher than the second concentration. Furthermore, EP 2 607 451 A1 discloses a liquid crystalline medium and its use for an active matrix display, particularly based on the VA, PSA, PS-VA, PALC, FFS, PS-FFS, PS-IPS or IPS effect.

Among further prior art, JP 2013-173915 A discloses a liquid crystal composition that satisfies at least one characteristic among a high upper limit temperature of the nematic phase, a low lower limit temperature of the nematic phase, a small viscosity, adequate optical anisotropy, large negative dielectric anisotropy, a large specific resistance, high stability to ultraviolet waves and high stability to heat or has an appropriate balance between at least two of the

characteristics, and an AM element that has short response time, a large voltage holding ratio, a large contrast ratio and a long life.

However, as disclosed in PTL 2, the previous inventions are intended to reduce the desorption of oxygen from oxide semiconductors; no research has been conducted on the direct relationship between oxide semiconductor thin-film transistors and liquid crystal compositions.

Citation List

Patent Literature

PTL 1: Japanese Unexamined Patent Application Publication No. 2007-96055

PTL 2: Japanese Unexamined Patent Application Publication No. 2006-165528

Summary of Invention

Technical Problem

Accordingly, an object of the present invention is to provide a liquid crystal display device, including an oxide semiconductor, that does not exhibit a significant decrease in voltage holding ratio (VHR) or increase in ion density (ID) of the liquid crystal layer and thus does not suffer from the problem of display defects such as white spots, uneven alignment, and image-sticking.

Solution to Problem

To achieve the foregoing object, the inventors have conducted extensive research on various liquid crystal compositions suitable for liquid crystal display devices including oxide semiconductor thin-film transistors. As a result, the inventors have discovered that a liquid crystal display device including a liquid crystal layer containing a particular liquid crystal composition does not exhibit a significant decrease in voltage holding ratio (VHR) or increase in ion density (ID) of the liquid crystal layer and thus does not suffer from the problem of display defects such as white spots, uneven alignment, and image-sticking and also consumes less power. This discovery has led to the present invention.

Specifically, the present invention provides a liquid crystal display device including first and second opposing substrates, a liquid crystal layer containing a liquid crystal composition between the first and second substrates, a plurality of gate lines and data lines arranged in a matrix on the first substrate, thin-film transistors disposed at intersections of the gate lines and the data lines, and pixel electrodes that are driven by the transistors and that are made of a transparent conductive material. Each thin-film transistor includes a gate electrode, an oxide semiconductor layer disposed over the gate electrode with an insulating layer therebetween, and source and drain electrodes electrically connected to the oxide semiconductor layer. The liquid crystal composition contains at least one compound selected from the group consisting of compounds represented by general formulas (LC3) to (LC5).

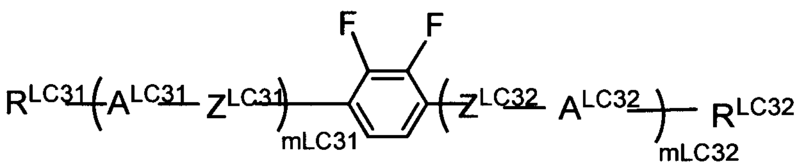

(LC3)

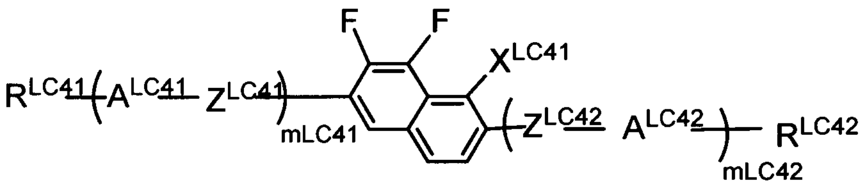

(LC4)

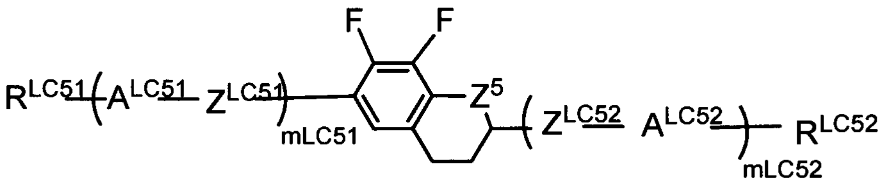 (LC5)

In the formulas, $R^{LC31}$, $R^{LC32}$, $R^{LC41}$, $R^{LC42}$, $R^{LC51}$, and $R^{LC52}$ are each independently an alkyl group of 1 to 15 carbon atoms, where one or more $-CH_2-$ groups in the alkyl group are optionally replaced with -O-, -CH=CH-, -CO-, -OCO-, -COO-, or -C≡C- such that no oxygen atoms are directly adjacent to each other, and one or more hydrogen atoms in the alkyl group are optionally replaced with halogen. $A^{LC31}$, $A^{LC32}$, $A^{LC41}$, $A^{LC42}$, $A^{LC51}$, and $A^{LC52}$ are each independently any of the following structures.

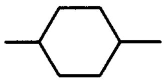 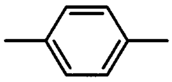 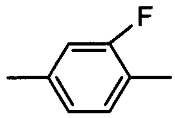 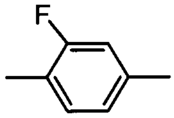 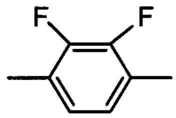

In the structures, one or more $-CH_2-$ groups in the cyclohexylene group are optionally replaced with oxygen; one or more -CH= groups in the 1,4-phenylene group are optionally replaced with nitrogen; and one or more hydrogen atoms in the structures are optionally replaced with fluorine, chlorine, $-CF_3$, or $-OCF_3$. $Z^{LC31}$, $Z^{LC32}$, $Z^{LC41}$, $Z^{LC42}$, $Z^{LC51}$, and $Z^{LC51}$ are each independently a single bond, -CH=CH-, -C≡C-, $-CH_2CH_2-$, $-(CH_2)_4-$, -COO-, $-OCH_2-$, $-CH_2O-$, $-OCF_2-$, or$-CF_2O-$. $Z^5$ is $-CH_2-$ or oxygen. $X^{LC41}$ is hydrogen or fluorine. $m^{LC31}$, $m^{LC32}$, $m^{LC41}$, $m^{LC42}$, $m^{LC51}$, and $m^{LC52}$ are each independently 0 to 3. $m^{LC31} + m^{LC32}$, $m^{LC41} + m^{LC42}$, and $m^{LC51} + m^{LC52}$ are each 1, 2, or 3. Each occurrence of $A^{LC31}$ to $A^{LC52}$ and $Z^{LC31}$ to $Z^{LC52}$, if present, may be the same or different. The liquid crystal composition further contains at least one compound selected from the group consisting of compounds represented by general formulas (II-a) to (II-f).

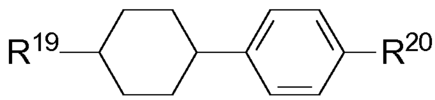 (II-a)

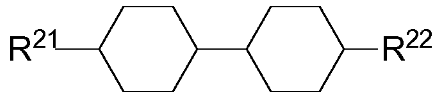 (II-b)

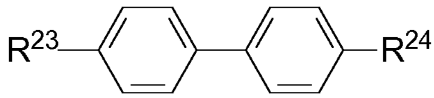 (II-c)

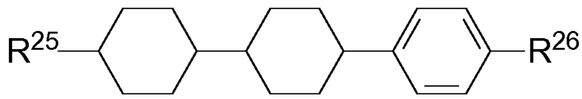 (II-d)

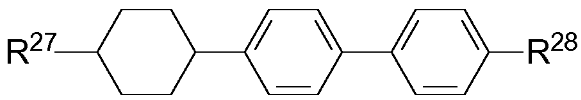 (II-e)

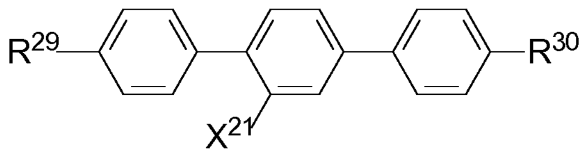 (II-f)

In the formulas, $R^{19}$ to $R^{30}$ are each independently an alkyl group of 1 to 10 carbon atoms, an alkoxy group of 1 to 10 carbon atoms, or an alkenyl group of 2 to 10 carbon atoms; and $X^{21}$ is hydrogen or fluorine.

Advantageous Effects of Invention

The liquid crystal display device according to the present invention, which includes oxide semiconductor TFTs and a particular liquid crystal composition, does not exhibit a significant decrease in voltage holding ratio (VHR) or increase in ion density (ID) of the liquid crystal layer and thus does not suffer from display defects such as white spots, uneven alignment, and image-sticking and also consumes less power.

Brief Description of Drawings

Fig. 1 is a schematic exploded perspective view illustrating the structure of a liquid crystal display device.

Fig. 2 is an enlarged plan view of an area enclosed by line II of an electrode layer 103 including thin-film transistors formed on a substrate in Fig. 1.

Fig. 3 is an example of a sectional view of the thin-film transistor layer 103 taken along line III-III in Fig. 2.

Fig. 4 is a schematic exploded perspective view illustrating the structure of a liquid crystal display device.

Fig. 5 is an example of an enlarged plan view of an area enclosed by line II of an electrode layer 3 including thin-film transistors formed on a substrate in Fig. 4.

Fig. 6 is an example of a sectional view of the liquid crystal display device taken along line III-III in Fig. 5.

Fig. 7 is another example of an enlarged plan view of the area enclosed by line II of the electrode layer 3 including the thin-film transistors formed on the substrate in Fig. 4.

Fig. 8 is another example of a sectional view of the liquid crystal display device taken along line III-III in Fig. 5.

Fig. 9 is an enlarged plan view of the electrode structure of a liquid crystal display device. A sectional view of a color-filter-on-array liquid crystal display device.

Fig. 10 is a sectional view of a color-filter-on-array liquid crystal display device.

Fig. 11 is a sectional view of another color-filter-on-array liquid crystal display device.

Description of Embodiments

First Embodiment

A liquid crystal display device according to a first preferred embodiment of the present invention includes oxide semiconductor thin-film transistors and a particular liquid crystal composition and generates a substantially perpendicular electric field between first and second substrates. The liquid crystal display device according to the first preferred embodiment is a liquid crystal display device having electrodes on both first and second substrates, for example, a vertically aligned (VA) transmissive liquid crystal display device.

The liquid crystal display device according to the first preferred embodiment of the present invention preferably includes first and second opposing substrates, a liquid crystal layer containing a liquid crystal composition between the first and second substrates, a plurality of gate bus lines and data bus lines arranged in a matrix on the first substrate, thin-film transistors disposed at intersections of the gate bus lines and the data bus lines, and pixel electrodes that are driven by the transistors and that are made of a transparent conductive material. Each thin-film transistor preferably includes a gate electrode, an oxide semiconductor layer disposed over the gate electrode with an insulating layer therebetween, and source and drain electrodes electrically connected to the oxide semiconductor layer. The liquid crystal display device preferably further includes a common electrode made of a transparent conductive material on the second substrate. The liquid crystal layer is preferably homeotropically aligned when no voltage is applied.

An example liquid crystal display device according to the first embodiment is illustrated in Figs. 1 to 3. Fig. 1 is a schematic exploded perspective view illustrating the structure of a liquid crystal display device. In Fig. 1, various elements are shown as being separated for illustration purposes. Fig. 2 is an enlarged plan view of an area enclosed by line II of an electrode layer 103 including thin-film transistors (also referred to as "thin-film transistor layer 103") formed on a substrate in Fig. 1. Fig. 3 is a sectional view of the thin-film transistor layer 103 taken along line III-III in Fig. 2. The liquid crystal display device according to the present invention will now be described with reference to Figs. 1 to 3.

As shown in Fig. 1, a liquid crystal display device 100 according to the present invention includes a second substrate 108 having a transparent electrode (layer) 106 (also referred to as "common electrode 106") made of a transparent conductive material; a first substrate 102 having a thin-film transistor layer 103 including pixel electrodes disposed in individual pixels and made of a transparent conductive material and thin-film transistors that control the pixel

electrodes; and a liquid crystal composition (also referred to as "liquid crystal layer 105") disposed between the first substrate 102 and the second substrate 108. The liquid crystal molecules in the liquid crystal composition are aligned substantially perpendicular to the substrates 102 and 108 when no voltage is applied. The liquid crystal display device 100 is characterized by the use of oxide semiconductor TFTs and a particular liquid crystal composition, as described later. By "the liquid crystal molecules in the liquid crystal composition are aligned substantially perpendicular to the substrates 102 and 108 when no voltage is applied", it is meant that the liquid crystal composition is homeotropically aligned when no voltage is applied.

As shown in Fig. 1, the first substrate 102 and the second substrate 108 may be disposed between a pair of polarizers 101 and 109. In Fig. 1, a color filter 107 is disposed between the second substrate 109 and the common electrode 106. A pair of alignment layers 104 may be formed on the thin-film transistor layer 103 and the transparent electrode (layer) 106 such that the alignment layers 104 are adjacent to the liquid crystal layer 105 according to the present invention and directly contact the liquid crystal composition forming the liquid crystal layer 105.

That is, the liquid crystal display device 100 according to the present invention includes, in sequence, the first polarizer 101, the first substrate 102, the electrode layer 103 including the thin-film transistors (also referred to as "thin-film transistor layer"), the alignment layer 104, the layer 105 containing the liquid crystal composition, the alignment layer 104, the common electrode 106, the color filter 107, the second substrate 108, and the first polarizer 109.

As shown in Fig. 2, the electrode layer 103 including the thin-film transistors formed on the first substrate 102 includes gate lines 126 for supplying scan signals and data lines 125 for supplying display signals. The gate lines 126 and the data lines 125 intersect each other. Pixel electrodes 121 are formed in a matrix in the areas surrounded by the gate lines 126 and the data lines 125. The thin-film transistors are disposed near the intersections of the gate lines 126 and the data lines 125 and are coupled to the pixel electrodes 121, serving as switching elements for supplying display signals to the pixel electrodes 121. Each thin-film transistor includes a source electrode 127, a drain electrode 124, and a gate electrode 128. Storage capacitors 123 for storing display signals supplied via the data lines 125 may be disposed in the areas surrounded by the gate lines 126 and the data lines 125.

Substrates

The first substrate 102 and the second substrate 108 may be made of a glass or a flexible transparent material such as a plastic, and one of them may be made of a nontransparent material such as silicon. The two substrates 1102 and 108 are bonded together with a sealant, such as a thermosetting epoxy composition, applied to the periphery thereof. The distance between the two substrates 102 and 108 may be maintained, for example, using spacer particles such as glass, plastic, or alumina particles or resin spacer pillars formed by photolithography.

Thin-Film Transistors

The liquid crystal display device according to the present invention preferably includes inverted-staggered thin-film transistors. As shown in Fig. 3, a preferred example of an inverted-staggered thin-film transistor structure includes a gate electrode 111 formed on the substrate 102, a gate insulating layer 112 covering the gate electrode 111 and substantially the entire surface of the substrate 102, a semiconductor layer 113 formed on the gate insulating layer 12 and opposite the gate electrode 111, a drain electrode 116 covering one end of the semiconductor layer 113 and contacting the gate insulating layer 112 formed on the substrate 102, a source electrode 117 covering the other end of the semiconductor layer 113 and contacting the gate insulating layer 112 formed on the substrate 102, and an insulating protective layer 118 covering the drain electrode 116 and the source electrode 117. An anodized coating (not shown) may be formed on the gate electrode 111, for example, to eliminate the steps formed by the gate electrodes.

As used herein, the phrase "on a substrate" refers to both direct and indirect contact with the substrate and encompasses the situation where an element is supported by the substrate.

The semiconductor layer 113 according to the present invention is made of an oxide semiconductor. The oxide semiconductor preferably contains at least one element selected from In, Ga, Zn, and Sn. To reduce variations in the electrical characteristics of the oxide transistors, the oxide semiconductor may further contain one or more of hafnium (Hf), zirconium (Zr), aluminum (Al), lanthanum (La), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu).

Examples of oxide semiconductors include indium oxide, tin oxide, zinc oxide, and gallium oxide. Oxides containing a plurality of metal elements can also be used, including In-Zn-based, Sn-Zn-based, Al-Zn-based, Zn-Mg-based, Sn-Mg-based, In-Mg-based, In-Ga-based, In-Ga-Zn-based, In-Al-Zn-based, In-Sn-Zn-based, Sn-Ga-Zn-based, Al-Ga-Zn-based, Sn-Al-Zn-based, In-Hf-Zn-based, In-Zr-Zn-based, In-La-Zn-based, In-Ce-Zn-based, In-Pr-Zn-based, In-Nd-Zn-based, In-Sm-Zn-based, In-Eu-Zn-based, In-Gd-Zn-based, In-Tb-Zn-based, In-Dy-Zn-based, In-Ho-Zn-based, In-Er-Zn-based, In-Tm-Zn-based, In-Yb-Zn-based, In-Lu-Zn-based, In-Sn-Ga-Zn-based, In-Hf-Ga-Zn-based, In-Al-Ga-Zn-based, In-Sn-Al-Zn-based, In-Sn-Hf-Zn-based, and In-Hf-Al-Zn-based oxides. In-Ga-Zn-based oxides (IGZO), which are oxides containing In, Ga, and Zn, are preferred to reduce the power consumption of the liquid crystal display device and to improve the characteristics such as transmittance of the liquid crystal display device.

For example, the term "In-Ga-Zn-based oxide" refers to an oxide containing In, Ga, and Zn, which may be present in any ratio. Metal elements other than In, Ga, and Zn may also be present.

These are non-limiting examples, and any oxide semiconductor of suitable composition may be used depending on the required semiconductor characteristics (e.g., mobility, threshold, and variations). To achieve the required semiconductor characteristics, it is also preferred to optimize other properties such as carrier density, impurity concentration, defect density, the atomic ratios of metal elements to oxygen, interatomic distance, and density.

The oxide semiconductor layer 113 takes the form of, for example, a monocrystalline, polycrystalline, C-axis aligned crystalline (CAAC), or amorphous film. Preferably, the oxide semiconductor layer 113 is a C-axis aligned crystalline oxide semiconductor (CAAC-OS) film. Some of the oxygen atoms forming the oxide semiconductor film may be replaced with nitrogen.

Oxide semiconductor thin-film transistors allow only a small current to flow in an off state (off current), retain electrical signals such as image signals for a long period of time, and allow a long write cycle to be set in an on state. This provides the advantage of reducing the refresh rate and thus reducing the power consumption. Oxide semiconductor thin-film transistors also have high field-effect mobility, which allows them to operate at high speed. Oxide semiconductor thin-film transistors also have a smaller size than conventional thin-film transistors, which allows more light to pass through each pixel. Thus, the use of oxide semiconductor thin-film transistors in the pixels of the liquid crystal display device provides a high-quality image. It is also preferred to use a transparent oxide semiconductor film, which reduces the influence of photocarriers due to light absorption and thus increases the aperture ratio of the device.

An ohmic contact layer may be disposed between the semiconductor layer 113 and the drain electrode 116 or the source electrode 117 to reduce the width and height of the Schottky barrier. The ohmic contact layer may be made of a material heavily doped with an impurity such as phosphorus, for example, n-type amorphous silicon or n-type polycrystalline silicon.

The gate bus lines 126 and the data bus lines 125 are preferably made of a metal film, more preferably Al, Cu, Au, Ag, Cr, Ta, Ti, Mo, W, Ni, or an alloy thereof, even more preferably Al or an alloy thereof. The gate bus lines 126 and the data bus lines 125 overlap each other with the gate insulating layer therebetween. The insulating protective layer 118, which functions as an insulator, is made of, for example, a silicon nitride, silicon dioxide, or silicon oxynitride film.

Transparent Electrodes

A conductive metal oxide may be used as a transparent electrode material for the pixel electrodes 121 and the transparent electrode (layer) 106 (also referred to as "common electrode 106") of the liquid crystal display device according to the present invention. Examples of metal oxides that can be used include indium oxide ($In_2O_3$), tin oxide ($SnO_2$), zinc oxide (ZnO), indium tin oxide ($In_2O_3$-$SnO_2$), indium zinc oxide ($In_2O_3$-ZnO), niobium-doped titanium dioxide ($Ti_{1-x}Nb_xO_2$), fluorine-doped tin oxide, graphene nanoribbons, and metal nanowires, preferably zinc oxide (ZnO), indium tin oxide ($In_2O_3$-$SnO_2$), and indium zinc oxide ($In_2O_3$-ZnO). These transparent conductive films may be patterned by techniques such as photoetching and mask patterning.

Color Filter

The color filter 107 includes a black matrix and pixel regions of at least three colors including RGB. To reduce the leakage of light, the black matrix (not shown) is preferably formed in the area of the color filter 107 corresponding to the thin-film transistors and the storage capacitors 123.

Alignment Layers

The liquid crystal display device according to the present invention may include alignment layers disposed on the surfaces of the first and second substrates adjacent to the liquid crystal composition to align the liquid crystal composition. If the liquid crystal display device requires an alignment layer, it may be disposed between the color filter and the liquid crystal layer. Even a thick alignment layer has a thickness of only 100 nm or less, which is insufficient to completely reduce the diffusion of oxygen desorbed from the oxide semiconductor layer 113 into the liquid crystal layer 5.

If the liquid crystal display device includes no alignment layer, a larger interaction occurs between the oxide semiconductor layer and the liquid crystal compounds forming the liquid crystal layer.

Examples of alignment layer materials that can be used include transparent organic materials such as polyimides, polyamides, benzocyclobutene (BCB) polymers, and polyvinyl alcohol. Particularly preferred are polyimide alignment layers, which are formed by the imidation of polyamic acids synthesized from diamines such as aliphatic and

alicyclic diamines, including p-phenylenediamine and 4,4'-diaminodiphenylmethane, and aliphatic and alicyclic tetracarboxylic anhydrides such as butanetetracarboxylic anhydride and 2,3,5-tricarboxycyclopentylacetic anhydride or aromatic tetracarboxylic anhydrides such as pyromellitic dianhydride. Although a typical alignment process for polyimide alignment layers is rubbing, they may be used without an alignment process, for example, if they are used as vertical alignment layers.

Other alignment layer materials include those containing a chalcone, cinnamate, cinnamoyl, or azo group in the compound. These alignment layer materials may be used in combination with other materials such as polyimides and polyamides. These alignment layers may be subjected to either rubbing or photoalignment.

Although a typical alignment layer is a resin layer formed by applying an alignment layer material to a substrate using a process such as spin coating, other techniques such as uniaxial drawing and the Langmuir-Blodgett technique may also be used.

Liquid Crystal Layer

The liquid crystal layer of the liquid crystal display device according to the present invention contains at least one compound selected from the group consisting of compounds represented by general formulas (LC3) to (LC5).

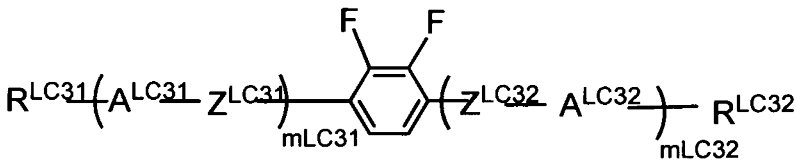

(LC3)

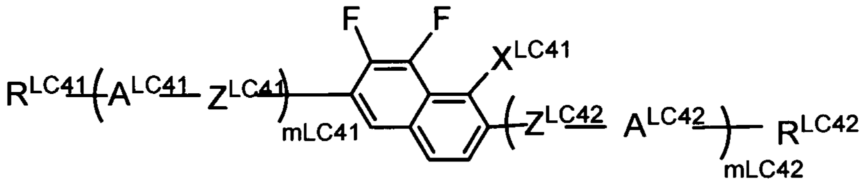

(LC4)

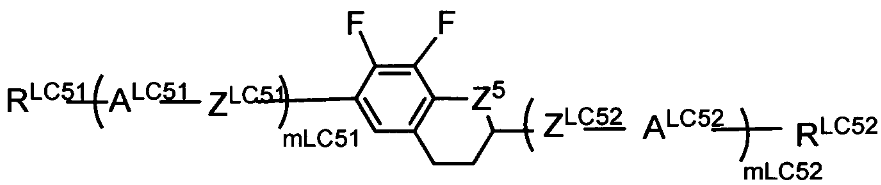

(LC5)

In the formulas, $R^{LC31}$, $R^{LC32}$, $R^{LC41}$, $R^{LC42}$, $R^{LC51}$, and $R^{LC52}$ are each independently an alkyl group of 1 to 15 carbon atoms, where one or more $-CH_2-$ groups in the alkyl group are optionally replaced with -O-, -CH=CH-, -CO-, -OCO-, -COO-, or -C≡C- such that no oxygen atoms are directly adjacent to each other, and one or more hydrogen atoms in the alkyl group are optionally replaced with halogen. $A^{LC31}$, $A^{LC32}$, $A^{LC41}$, $A^{LC42}$, $A^{LC51}$, and $A^{LC52}$ are each independently any of the following structures.

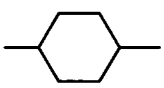 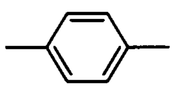 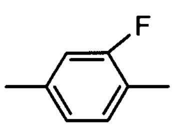 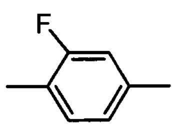 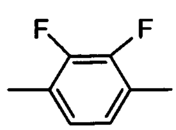

In the structures, one or more $-CH_2-$ groups in the cyclohexylene group are optionally replaced with oxygen; one or more -CH= groups in the 1,4-phenylene group are optionally replaced with nitrogen; and one or more hydrogen atoms in the structures are optionally replaced with fluorine, chlorine, $-CF_3$, or $-OCF_3$. $Z^{LC31}$, $Z^{LC32}$, $Z^{LC41}$, $Z^{LC42}$, $Z^{LC51}$, and $Z^{LC51}$ are each independently a single bond, -CH=CH-, -C≡C-, $-CH_2CH_2-$, $-(CH_2)_4-$, -COO-, $-OCH_2-$, $-CH_2O-$, $-OCF_2-$, or $-CF_2O-$. $Z^5$ is $-CH_2-$ or oxygen. $X^{LC41}$ is hydrogen or fluorine. $m^{LC31}$, $m^{LC32}$, $m^{LC41}$, $m^{LC42}$, $m^{LC51}$, and $m^{LC52}$ are each independently 0 to 3. $m^{LC31} + m^{LC32}$, $m^{LC41} + m^{LC42}$, and $m^{LC51} + m^{LC52}$ are each 1, 2, or 3. Each occurrence of $A^{LC31}$ to $A^{LC52}$ and $Z^{LC31}$ to $Z^{LC52}$, if present, may be the same or different.

$R^{LC31}$ to $R^{LC52}$ are preferably each independently an alkyl group of 1 to 7 carbon atoms, an alkoxy group of 1 to 7 carbon atoms, or an alkenyl group of 2 to 7 carbon atoms. Most preferred are alkenyl groups having the following structures.

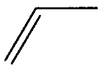 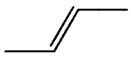 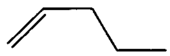 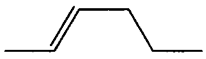

In the formulas, the right end is linked to the cyclic structure.

$A^{LC31}$ to $A^{LC52}$ are preferably each independently any of the following structures.

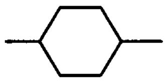 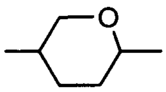 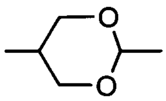 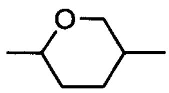 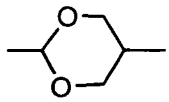

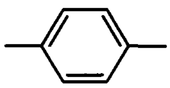 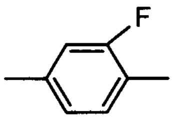 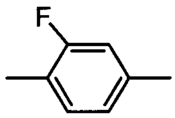 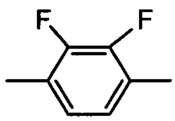 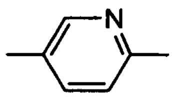 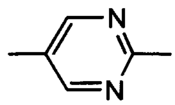

$Z^{LC31}$ to $Z^{LC51}$ are preferably each independently a single bond, $-CH_2O-$, -COO-, -OCO-, $-CH_2CH_2-$, $-CF_2O-$, $-OCF_2-$, or-$OCH_2$-.

The liquid crystal layer preferably contains, as the compounds represented by general formulas (LC3), (LC4), and (LC5), at least one compound selected from the group consisting of compounds represented by general formulas (LC3-1), (LC4-1), and (LC5-1).

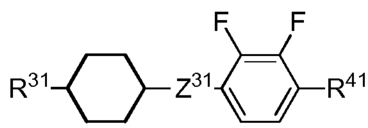 (LC3-1)

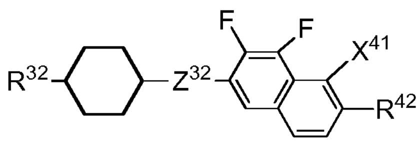 (LC4-1)

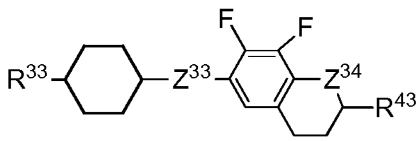 (LC5-1)

In the formulas, $R^{31}$ to $R^{33}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $R^{41}$ to $R^{43}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $Z^{31}$ to $Z^{33}$ are each a single bond, -CH=CH-, -C≡C-, $-CH_2CH_2-$, $-(CH_2)_4-$, -COO-,-OCO-, $-OCH_2-$, $-CH_2O-$, $-OCF_2-$, or $-CF_2O-$; $X^{41}$ is hydrogen or fluorine; and $Z^{34}$ is $-CH_2-$ or oxygen.

Although $R^{31}$ to $R^{33}$ in general formulas (LC3-1) to (LC5-1) are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms, $R^{31}$ to $R^{33}$ are each preferably an alkyl group of 1 to 5 carbon atoms or an alkenyl group of 2 to 5 carbon atoms, more preferably an alkyl group of 2 to 5 carbon atoms or an alkenyl group of 2 to 4 carbon atoms, even more preferably an alkyl group of 3 to 5 carbon atoms or an alkenyl group of 2 carbon atoms, still even more preferably an alkyl group of 3 carbon atoms.

Although $R^{41}$ to $R^{43}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms, $R^{41}$ to $R^{43}$ are each preferably an alkyl group of 1 to 5 carbon atoms, an alkoxy group of 1 to 5 carbon atoms, an alkenyl group of 4 to 8 carbon atoms, or an alkenyloxy group of 3 to 8 carbon atoms, more preferably an alkyl group of 1 to 3 carbon atoms or an alkoxy group of 1 to 3 carbon atoms, even more preferably an alkyl group of 3 carbon atoms or an alkoxy group of 2 carbon atoms, still even more preferably an alkoxy group of 2 carbon atoms.

Although $Z^{31}$ to $Z^{33}$ are each a single bond, -CH=CH-,-C≡C-, $-CH_2CH_2-$, $-(CH_2)_4-$, -COO-, -OCO-, $-OCH_2-$, $-CH_2O-$, $-OCF_2-$, or $-CF_2O-$, $Z^{31}$ to $Z^{33}$ are each preferably a single bond,$-CH_2CH_2-$, -COO-, $-OCH_2-$, $-CH_2O-$, $-OCF_2-$, or $-CF_2O-$, more preferably a single bond or $-CH_2O-$.

The compound selected from the group consisting of compounds represented by general formulas (LC3-1), (LC4-1), and (LC5-1) is preferably present in the liquid crystal composition in an amount of 5% to 50% by mass, more preferably 5% to 40% by mass, even more preferably 5% to 30% by mass, still even more preferably 8% to 27% by mass, further preferably 10% to 25% by mass.

Specific preferred compounds represented by general formula (LC3-1) include those represented by general formulas (LC3-11) to (LC3-14) shown below.

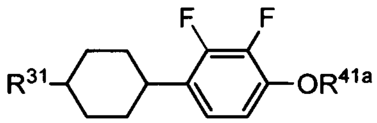 (LC3-11) 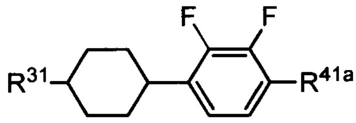 (LC3-12)

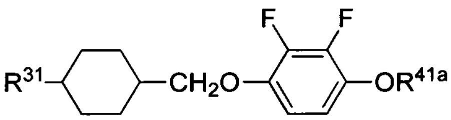 (LC3-13) 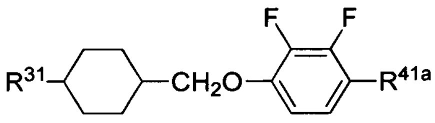 (LC3-14)

In the formulas, $R^{31}$ is an alkyl group of 1 to 5 carbon atoms or an alkenyl group of 2 to 5 carbon atoms; and $R^{41a}$ is an alkyl group of 1 to 5 carbon atoms.

Specific preferred compounds represented by general formula (LC4-1) include those represented by general formulas (LC4-11) to (LC4-14) shown below.

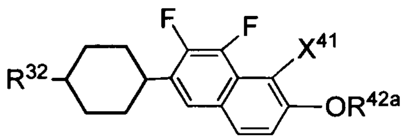 (LC4-11) 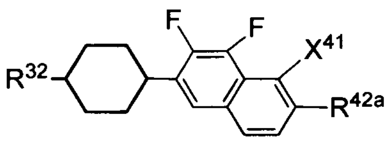 (LC4-12)

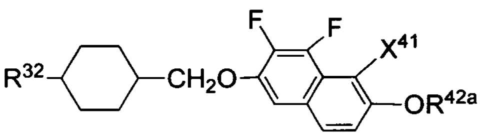 (LC4-13) 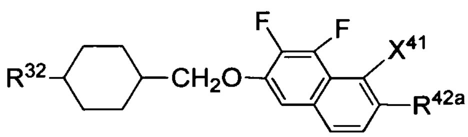 (LC4-14)

In the formulas, $R^{32}$ is an alkyl group of 1 to 5 carbon atoms or an alkenyl group of 2 to 5 carbon atoms; $R^{42a}$ is an alkyl group of 1 to 5 carbon atoms; and $X^{41}$ is hydrogen or fluorine.

Specific preferred compounds represented by general formula (LC5-1) include those represented by general formulas (LC5-11) to (LC5-14) shown below.

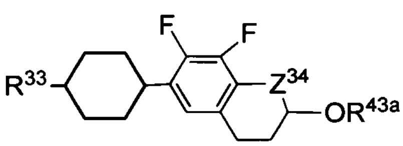 (LC5-11) 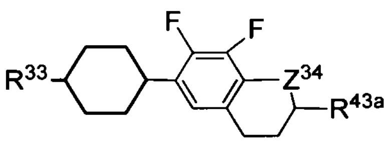 (LC5-12)

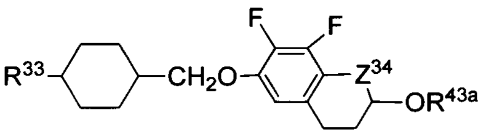 (LC5-13) 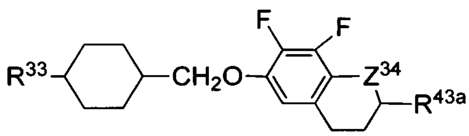 (LC5-14)

In the formulas, $R^{33}$ is an alkyl group of 1 to 5 carbon atoms or an alkenyl group of 2 to 5 carbon atoms; $R^{43a}$ is an alkyl group of 1 to 5 carbon atoms; and $Z^{34}$ is $-CH_2-$ or oxygen.

In general formulas (LC3-11), (LC3-13), (LC4-11), (LC4-13), (LC5-11), and (LC5-13), $R^{31}$ to $R^{33}$ are each preferably as defined in general formulas (LC3-1) to (LC5-1) . $R^{41a}$ to $R^{41c}$ are each preferably an alkyl group of 1 to 3

carbon atoms, more preferably an alkyl group of 1 or 2 carbon atoms, even more preferably an alkyl group of 2 carbon atoms.

In general formulas (LC3-12), (LC3-14), (LC4-12), (LC4-14), (LC5-12), and (LC5-14), $R^{31}$ to $R^{33}$ are each preferably as defined in general formula (II-1). $R^{41a}$ to $R^{41c}$ are each preferably an alkyl group of 1 to 3 carbon atoms, more preferably an alkyl group of 1 or 3 carbon atoms, even more preferably an alkyl group of 3 carbon atoms.

Among general formulas (LC3-11) to (LC5-14), general formulas (LC3-11), (LC4-11), (LC5-11), (LC3-13), (LC4-13) and (LC5-13) are preferred to achieve a larger absolute value of dielectric anisotropy. General formulas (LC3-11), (LC4-11), and (LC5-11) are more preferred.

The liquid crystal layer of the liquid crystal display device according to the present invention preferably contains one or more compounds, more preferably one or two compounds, selected from compounds represented by general formulas (LC3-11) to (LC5-14), and preferably contains one or two compounds represented by general formula (LC3-1).

Also preferably, the liquid crystal layer contains, as the compounds represented by general formulas (LC3), (LC4), and (LC5), at least one compound selected from the group consisting of compounds represented by general formulas (LC3-2), (LC4-2), and (LC5-2).

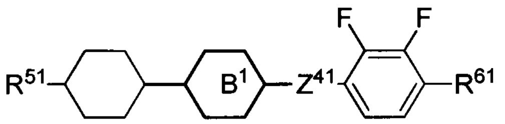

(LC3-2)

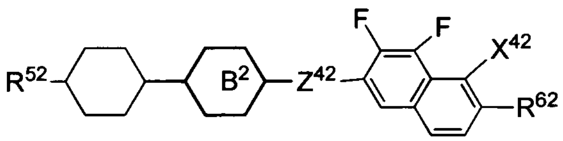

(LC4-2)

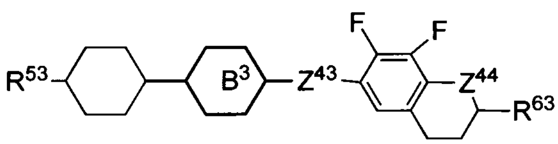

(LC5-2)

In the formulas, $R^{51}$ to $R^{53}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $R^{61}$ to $R^{63}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $B^1$ to $B^3$ are each 1,4-phenylene or trans-1,4-cyclohexylene optionally substituted with fluorine; $Z^{41}$ to $Z^{43}$ are each a single bond, $-CH=CH-$, $-C\equiv C-$, $-CH_2CH_2-$, $-(CH_2)_4-$, -COO-, -OCO-, $-OCH_2-$,$-CH_2O-$, $-OCF_2-$, or $-CF_2O-$; $X^{42}$ is hydrogen or fluorine; and $Z^{44}$ is $-CH_2-$ or oxygen.

Although $R^{51}$ to $R^{53}$ in general formulas (LC3-2), (LC4-2), and (LC5-2) are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms, $R^{51}$ to $R^{53}$ are each preferably an alkyl group of 1 to 5 carbon atoms or an alkenyl group of 2 to 5 carbon atoms, more preferably an alkyl group of 2 to 5 carbon atoms or an alkenyl group of 2 to 4 carbon atoms, even more preferably an alkyl group of 3 to 5 carbon atoms or an alkenyl group of 2 carbon atoms, still even more preferably an alkyl group of 3 carbon atoms.

Although $R^{61}$ to $R^{63}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms, $R^{61}$ to $R^{63}$ are each preferably an alkyl group of 1 to 5 carbon atoms, an alkoxy group of 1 to 5 carbon atoms, an alkenyl group of 4 to 8 carbon atoms, or an alkenyloxy group of 3 to 8 carbon atoms, more preferably an alkyl group of 1 to 3 carbon atoms or an alkoxy group of 1 to 3 carbon atoms, even more preferably an alkyl group of 3 carbon atoms or an alkoxy group of 2 carbon atoms, still even more preferably an alkoxy group of 2 carbon atoms.

Although $B^{31}$ to $B^{33}$ are 1,4-phenylene or trans-1,4-cyclohexylene optionally substituted with fluorine, $B^{31}$ to $B^{33}$ are preferably unsubstituted 1,4-phenylene or trans-1,4-cyclohexylene, more preferably trans-1,4-cyclohexylene.

Although $Z^{41}$ to $Z^{43}$ are each a single bond, $-CH=CH-$,$-C\equiv C-$, $-CH_2CH_2-$, $-(CH_2)_4-$, -COO-, -OCO-, $-OCH_2-$, $-CH_2O-$, $-OCF_2-$, or $-CF_2O-$, $Z^{41}$ to $Z^{43}$ are each preferably a single bond,$-CH_2CH_2-$, -COO-, $-OCH_2-$, $-CH_2O-$, $-OCF_2-$, or $-CF_2O-$, more preferably a single bond or $-CH_2O-$.

The compounds represented by general formulas (LC3-2), (LC4-2), and (LC5-2) are preferably present in the liquid crystal composition in an amount of 10% to 60%, more preferably 20% to 50%, even more preferably 25% to 45% by mass, still even more preferably 28% to 42% by mass, further preferably 30% to 40% by mass.

Specific preferred compounds represented by general formula (LC3-2) include those represented by general formulas (LC3-21) to (LC3-26) shown below.

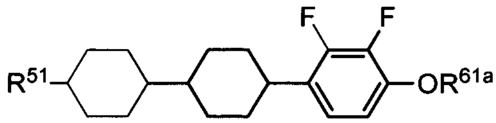
(LC3-21)

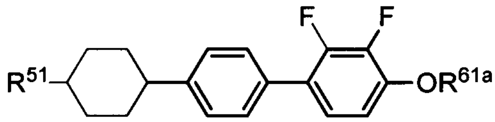
(LC3-22)

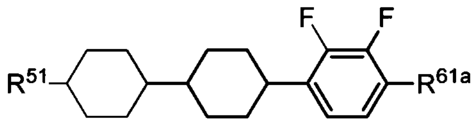
(LC3-23)

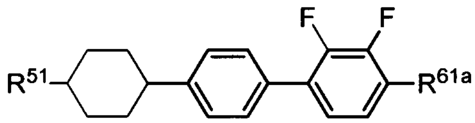
(LC3-24)

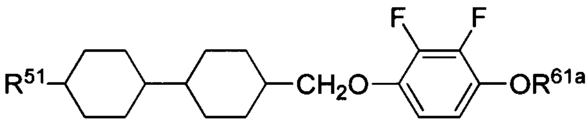
(LC3-25)

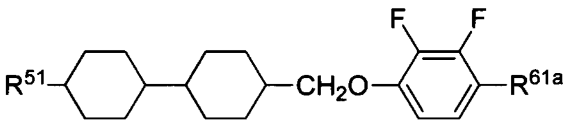
(LC3-26)

In the formulas, $R^{51}$ is an alkyl group of 1 to 5 carbon atoms or an alkenyl group of 2 to 5 carbon atoms; and $R^{61a}$ is an alkyl group of 1 to 5 carbon atoms. Preferably, $R^{51}$ and $R^{61a}$ are as defined for $R^{51}$ and $R^{61}$, respectively, in general formula (LC3-2).

Specific preferred compounds represented by general formula (LC4-2) include those represented by general formulas (LC4-21) to (LC4-26) shown below.

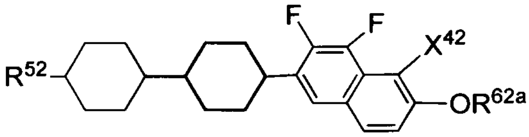
(LC4-21)

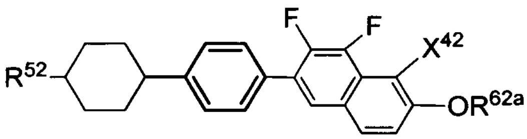
(LC4-22)

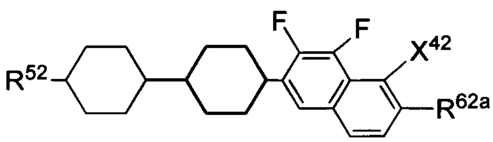
(LC4-23)

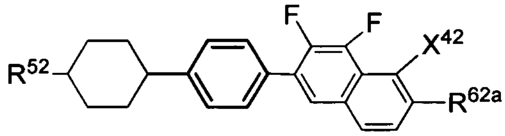

(LC4-24)

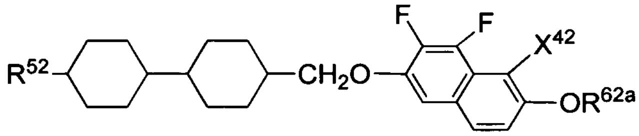

(LC4-25)

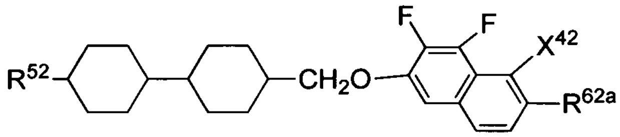

(LC4-26)

In the formulas, $R^{52}$ is an alkyl group of 1 to 5 carbon atoms or an alkenyl group of 2 to 5 carbon atoms; $R^{62a}$ is an alkyl group of 1 to 5 carbon atoms; and $X^{42}$ is hydrogen or fluorine. Preferably, $R^{52}$ and $R^{62a}$ are as defined for $R^{52}$ and $R^{62}$, respectively, in general formula (LC4-2).

Specific preferred compounds represented by general formula (LC5-2) include those represented by general formulas (LC5-21) to (LC5-26) shown below.

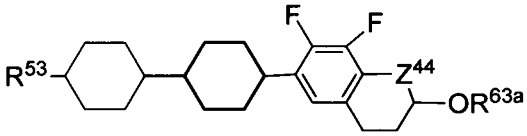

(LC5-21)

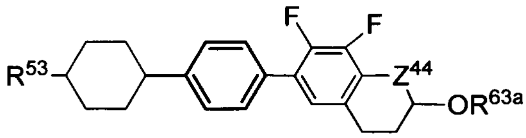

(LC5-22)

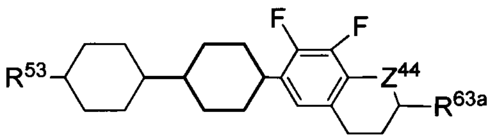

(LC5-23)

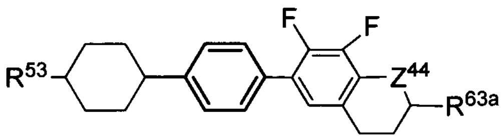

(LC5-24)

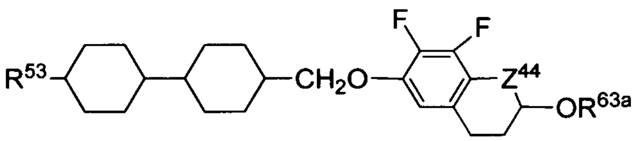

(LC5-25)

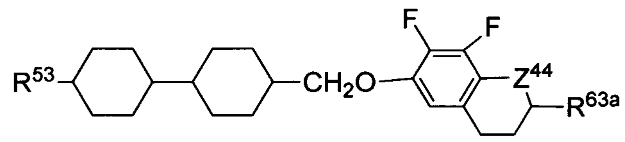

(LC5-26)

In the formulas, $R^{53}$ is an alkyl group of 1 to 5 carbon atoms or an alkenyl group of 2 to 5 carbon atoms; $R^{63a}$ is an alkyl group of 1 to 5 carbon atoms; and $W^2$ is $-CH_2-$ or oxygen. Preferably, $R^{53}$ and $R^{63a}$ are as defined for $R^{53}$ and $R^{63}$, respectively, in general formula (LC5-2).

In general formulas (LC3-21), (LC3-22), (LC3-25), (LC4-21), (LC4-22), (LC4-25), (LC5-21), (LC5-22), and (LC5-25), $R^{51}$ to $R^{53}$ are each preferably as defined in general formulas (LC3-2), (LC4-2), and (LC5-2). $R^{61a}$ to $R^{63a}$ are each preferably an alkyl group of 1 to 3 carbon atoms, more preferably an alkyl group of 1 or 2 carbon atoms, even more preferably an alkyl group of 2 carbon atoms.

In general formulas (LC3-23), (LC3-24), (LC3-26), (LC4-23), (LC4-24), (LC4-26), (LC5-23), (LC5-24), and (LC5-26), $R^{51}$ to $R^{53}$ are each preferably as defined in general formulas (LC3-2), (LC4-2), and (LC5-2). $R^{61a}$ to $R^{63a}$ are each preferably an alkyl group of 1 to 3 carbon atoms, more preferably an alkyl group of 1 or 3 carbon atoms, even more preferably an alkyl group of 3 carbon atoms.

Among general formulas (LC3-21) to (LC5-26), general formulas (LC3-21), (LC3-22), (LC3-25), (LC4-21), (LC4-22), (LC4-25), (LC5-21), (LC5-22), and (LC5-25) are preferred to achieve a larger absolute value of dielectric anisotropy.

The liquid crystal layer may contain at least one compound selected from compounds represented by general formulas (LC3-2), (LC4-2) and (LC5-2). Preferably, the liquid crystal layer contains at least one compound where $B^1$ to $B^3$ are 1,4-phenylene and at least one compound where $B^1$ to $B^3$ are trans-1,4-cyclohexylene.

Also preferably, the liquid crystal layer contains, as the compounds represented by general formula (LC3), at least one compound selected from the group consisting of compounds represented by general formulas (LC3-a) and (LC3-b) below.

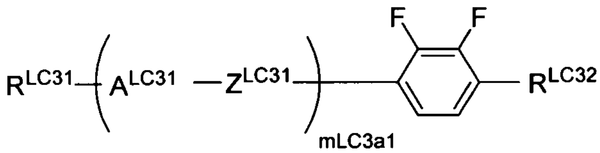

( LC3-a)

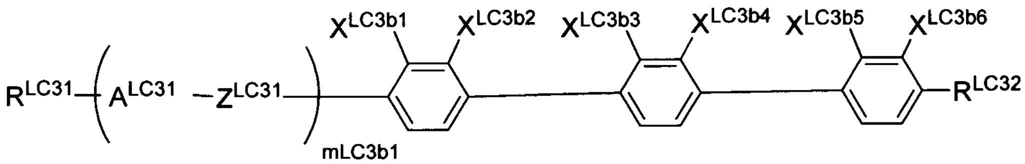

( LC3-b)

In the formulas, $R^{LC31}$, $R^{LC32}$, $A^{LC31}$, and $Z^{LC31}$ are each independently as defined for $R^{LC31}$, $R^{LC32}$, $A^{LC31}$, and $Z^{LC31}$, respectively, in general formula (LC3); $x^{LC3b1}$ to $X^{LC3b6}$ are hydrogen or fluorine, with the proviso that either $X^{LC3b1}$ and $X^{LC3b2}$ or $X^{LC3b3}$ and $X^{LC3b4}$, or both, are fluorine; and $m^{LC3a1}$ is 1, 2, or 3, and $m^{LC3b1}$ is 0 or 1, where each occurrence of $A^{LC31}$ and $Z^{LC31}$, if present, may be the same or different.

$R^{LC31}$ and $R^{LC32}$ are preferably each independently an alkyl group of 1 to 7 carbon atoms, an alkoxy group of 1 to 7 carbon atoms, an alkenyl group of 2 to 7 carbon atoms, or an alkenyloxy group of 2 to 7 carbon atoms.

$A^{LC31}$ is preferably 1,4-phenylene, trans-1,4-cyclohexylene, tetrahydropyran-2,5-diyl, or 1,3-dioxane-2,5-diyl, more preferably 1,4-phenylene or trans-1,4-cyclohexylene.

$Z^{LC31}$ is preferably a single bond, $-CH_2O-$, -COO-, -OCO-, or $-CH_2CH_2-$, more preferably a single bond.

General formula (LC3-a) is preferably general formula (LC3-a1) below.

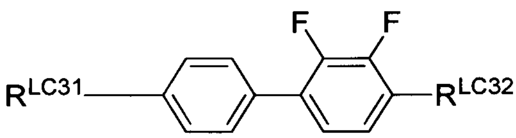

(LC3-a1)

In the formula, $R^{LC31}$ and $R^{LC32}$ are each independently as defined for $R^{LC31}$ and $R^{LC32}$, respectively, in general

formula (LC3) .

$R^{LC31}$ and $R^{LC32}$ are preferably each independently an alkyl group of 1 to 7 carbon atoms, an alkoxy group of 1 to 7 carbon atoms, or an alkenyl group of 2 to 7 carbon atoms. More preferably, $R^{LC31}$ is an alkyl group of 1 to 7 carbon atoms, and $R^{LC32}$ is an alkoxy group of 1 to 7 carbon atoms.

General formula (LC3-b) is preferably any of general formulas (LC3-b1) to (LC3-b12) below, more preferably general formula (LC3-b1), (LC3-b6), (LC3-b8), or (LC3-b11), even more preferably general formula (LC3-b1) or (LC3-b6), most preferably general formula (LC3-b1).

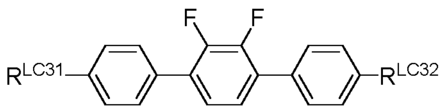 (LC3-b1)

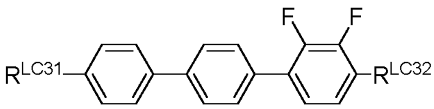 (LC3-b2)

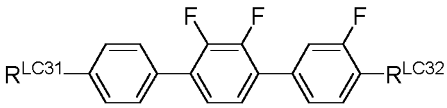 (LC3-b3)

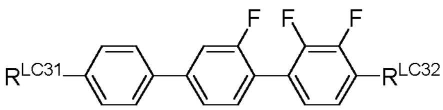 (LC3-b4)

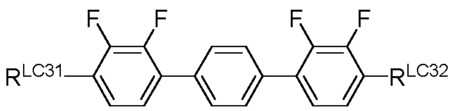 (LC3-b5)

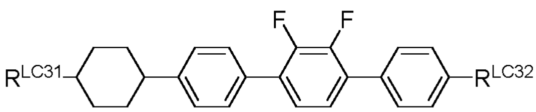 (LC3-b6)

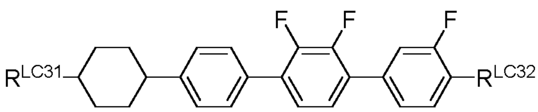 (LC3-b7)

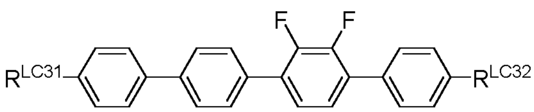 (LC3-b8)

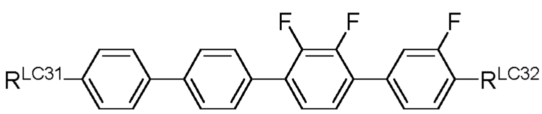 (LC3-b9)

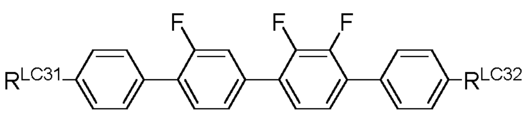 (LC3-b10)

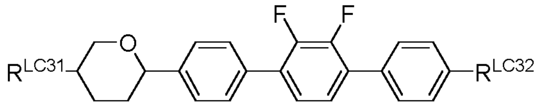 (LC3-b11)

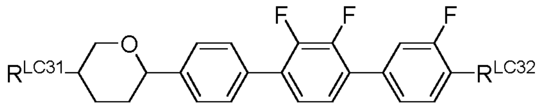 (LC3-b12)

In the formulas, $R^{LC31}$ and $R^{LC32}$ are each independently as defined for $R^{LC31}$ and $R^{LC32}$, respectively, in general formula (LC3).

$R^{LC31}$ and $R^{LC32}$ are preferably each independently an alkyl group of 1 to 7 carbon atoms, an alkoxy group of 1 to 7 carbon atoms, or an alkenyl group of 2 to 7 carbon atoms. More preferably, $R^{LC31}$ is an alkyl group of 2 or 3 carbon atoms, and $R^{LC32}$ is an alkyl group of 2 carbon atoms.

Preferred compounds represented by general formula (LC4) include those represented by general formulas (LC4-a) to (LC4-c) below. Preferred compounds represented by general formula (LC5) include those represented by general formulas (LC5-a) to (LC5-c) below.

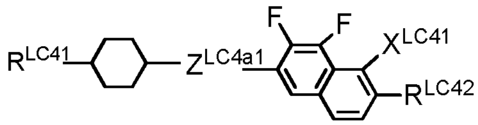 (LC4-a)

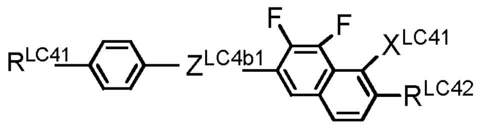 (LC4-b)

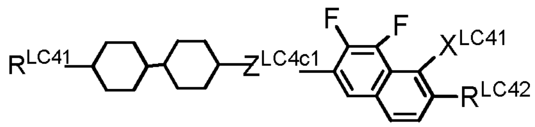 (LC4-c)

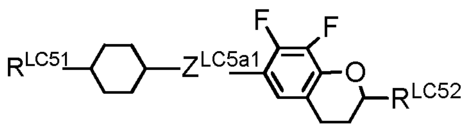 (LC5-a)

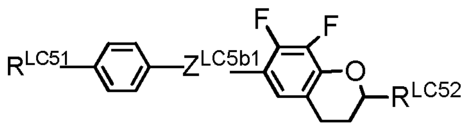 (LC5-b)

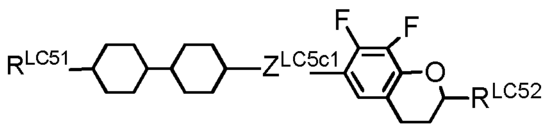 (LC5-c)

In the formulas, $R^{LC41}$, $R^{LC42}$, and $X^{LC41}$ are each independently as defined for $R^{LC41}$, $R^{LC42}$, and $X^{LC41}$, respectively, in general formula (LC4); $R^{LC51}$ and $R^{LC52}$ are each independently as defined for $R^{LC51}$ and $R^{LC52}$, respectively, in general formula (LC5) ; and $Z^{LC4a1}$, $Z^{LC4b1}$, $Z^{LC4c1}$, $Z^{LC5a1}$, $Z^{LC5b1}$, and $Z^{LC5c1}$ are each independently a single bond, -CH=CH-,-C≡C-, $-CH_2CH_2-$, $-(CH_2)_4-$, -COO-, $-OCH_2-$, $-CH_2O-$, $-OCF_2-$, or$-CF_2O-$.

$R^{LC41}$, $R^{LC42}$, $R^{LC51}$, and $R^{LC52}$ are each independently an alkyl group of 1 to 7 carbon atoms, an alkoxy group 1 to 7 of carbon atoms, an alkenyl group of 2 to 7 carbon atoms, or an alkenyloxy group of 2 to 7 carbon atoms.

$Z^{LC4a1}$ to $Z^{LC5c1}$ are preferably each independently a single bond, $-CH_2O-$, -COO-, -OCO-, or $-CH_2CH_2-$, more preferably a single bond.

The liquid crystal layer of the liquid crystal display device according to the present invention further contains

at least one compound selected from the group consisting of compounds represented by general formulas (II-a) to (II-f).

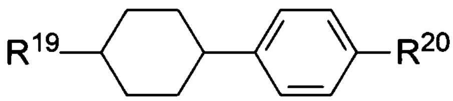
(II-a)

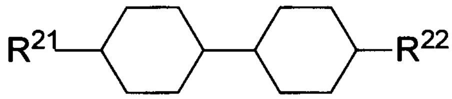
(II-b)

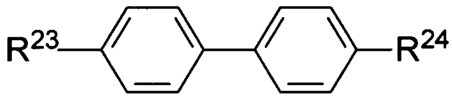
(II-c)

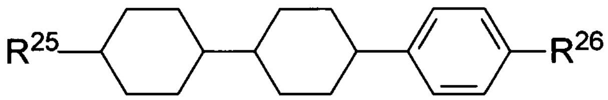
(II-d)

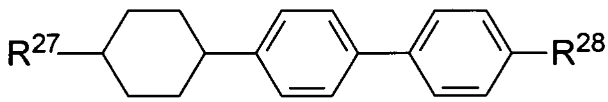
(II-e)

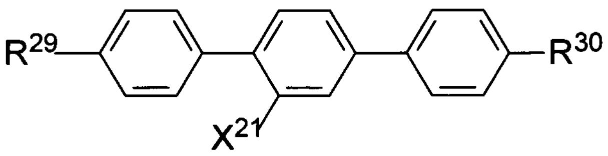
(II-f)

In the formulas, $R^{19}$ to $R^{30}$ are each independently an alkyl group of 1 to 10 carbon atoms, an alkoxy group of 1 to 10 carbon atoms, or an alkenyl group of 2 to 10 carbon atoms; and $X^{21}$ is hydrogen or fluorine.

If $R^{19}$ to $R^{30}$ in general formulas (IIa) to (IIf) are linked to phenyl (aromatic group), they are each preferably a linear alkyl group of 1 to 5 carbon atoms, a linear alkoxy group of 1 to 4 (or more) carbon atoms, or an alkenyl group of 4 or 5 carbon atoms. If $R^{19}$ to $R^{30}$ are linked to a saturated cyclic structure such as cyclohexane, pyran, or dioxane, they are each preferably a linear alkyl group of 1 to 5 carbon atoms, a linear alkoxy group of 1 to 4 (or more) carbon atoms, or a linear alkenyl group of 2 to 5 carbon atoms.

If it is desirable to achieve good chemical stability to heat and light, $R^{19}$ to $R^{30}$ are preferably alkyl. If it is desirable to produce a liquid crystal display device with low viscosity and fast response time, $R^{19}$ to $R^{30}$ are preferably alkenyl. If it is desirable to achieve a low viscosity, a high nematic-isotropic phase transition temperature (Tni), and a faster response time, it is preferred to use an alkenyl group having no unsaturated bond at the end thereof, more preferably an alkenyl group having methyl at the end thereof. If it is desirable to achieve good solubility at low temperature, $R^{19}$ to $R^{30}$ are preferably alkoxy. Alternatively, it is preferred to use a combination of compounds having different groups at $R^{19}$ to $R^{30}$. For example, it is preferred to use a combination of compounds having alkyl or alkenyl groups of 2, 3, and 4 carbon atoms at $R^{19}$ to $R^{30}$, a combination of compounds having alkyl or alkenyl groups of 3 and 5 carbon atoms at $R^{19}$ to $R^{30}$, or a combination of compounds having alkyl or alkenyl groups of 3, 4, and 5 carbon atoms at $R^{19}$ to $R^{30}$.

$R^{19}$ and $R^{20}$ are each preferably alkyl or alkoxy, and at least one of them is preferably alkoxy. More preferably, $R^{19}$ is alkyl, and $R^{20}$ is alkoxy. Even more preferably, $R^{19}$ is an alkyl group of 3 to 5 carbon atoms, and $R^{20}$ is an alkoxy group of 1 or 2 carbon atoms.

$R^{21}$ and $R^{22}$ are each preferably alkyl or alkenyl, and at least one of them is preferably alkenyl. Although compounds where both $R^{21}$ and $R^{22}$ are alkenyl are preferred to achieve a faster response time, they are not preferred to improve the chemical stability of the liquid crystal display device.

At least one of $R^{23}$ and $R^{24}$ is preferably an alkyl group of 1 to 5 carbon atoms, an alkoxy group of 1 to 5 carbon atoms, or an alkenyl group of 4 or 5 carbon atoms. If it is desirable to achieve a good balance of response time and $T_{ni}$, at least one of $R^{23}$ and $R^{24}$ is preferably alkenyl. If it is desirable to achieve a good balance of response time and solubility

at low temperature, at least one of $R^{23}$ and $R^{24}$ is preferably alkoxy.

At least one of $R^{25}$ and $R^{26}$ is preferably an alkyl group of 1 to 5 carbon atoms, an alkoxy group of 1 to 5 carbon atoms, or an alkenyl group of 2 to 5 carbon atoms. If it is desirable to achieve a good balance of response time and Tni, at least one of $R^{25}$ and $R^{26}$ is preferably alkenyl. If it is desirable to achieve a good balance of response time and solubility at low temperature, at least one of $R^{25}$ and $R^{26}$ is preferably alkoxy. More preferably, $R^{25}$ is alkenyl, and $R^{26}$ is alkyl. Also preferably, $R^{25}$ is alkyl, and $R^{26}$ is alkoxy.

At least one of $R^{27}$ and $R^{28}$ is preferably an alkyl group of 1 to 5 carbon atoms, an alkoxy group of 1 to 5 carbon atoms, or an alkenyl group of 2 to 5 carbon atoms. If it is desirable to achieve a good balance of response time and Tni, at least one of $R^{27}$ and $R^{28}$ is preferably alkenyl. If it is desirable to achieve a good balance of response time and solubility at low temperature, at least one of $R^{27}$ and $R^{28}$ is preferably alkoxy. More preferably, $R^{27}$ is alkyl or alkenyl, and $R^{28}$ is alkyl. Also preferably, $R^{27}$ is alkyl, and $R^{28}$ is alkoxy. Even more preferably, $R^{27}$ is alkyl, and $R^{28}$ is alkyl.

$X^{21}$ is preferably fluorine.

At least one of $R^{29}$ and $R^{30}$ is preferably an alkyl group of 1 to 5 carbon atoms or an alkenyl group of 4 or 5 carbon atoms. If it is desirable to achieve a good balance of response time and Tni, at least one of $R^{29}$ and $R^{30}$ is preferably alkenyl. If it is desirable to achieve good reliability, at least one of $R^{29}$ and $R^{30}$ is preferably alkyl. More preferably, $R^{29}$ is alkyl or alkenyl, and $R^{30}$ is alkyl or alkenyl. Also preferably, $R^{29}$ is alkyl, and $R^{30}$ is alkenyl. Also preferably, $R^{29}$ is alkyl, and $R^{30}$ is alkyl.

The liquid crystal layer preferably contains one to ten, more preferably one to eight, compounds selected from the group consisting of compounds represented by general formulas (II-a) to (II-f). These compounds are preferably present in an amount of 5% to 80% by mass, more preferably 10% to 70% by mass, even more preferably 20% to 60% by mass, still even more preferably 30% to 50% by mass, further preferably 32% to 48% by mass, even further preferably 34% to 46% by mass.

The liquid crystal layer of the liquid crystal display device according to the present invention preferably further contains a compound represented by general formula (LC).

$$R^{LC}\left(A^{LC1}-Z^{LC}\right)_a A^{LC2}-Y^{LC} \qquad \text{(LC)}$$

In general formula (LC),

$R^{LC}$ is an alkyl group of 1 to 15 carbon atoms, where one or more $-CH_2-$ groups in the alkyl group are optionally replaced with -O-, -CH=CH-, -CO-, -OCO-, -COO-, or -C≡C-such that no oxygen atoms are directly adjacent to each other, and one or more hydrogen atoms in the alkyl group are optionally replaced with halogen;

$A^{LC1}$ and $A^{LC2}$ are each independently a group selected from the group consisting of

(a) trans-1,4-cyclohexylene (where one or more non-adjacent $-CH_2-$ groups present in the group are optionally replaced with oxygen or sulfur),

(b) 1,4-phenylene (where one or more non-adjacent -CH= groups present in the group are optionally replaced with nitrogen), and

(c) 1,4-bicyclo(2.2.2)octylene, naphthalene-2,6-diyl, decahydronaphthalene-2,6-diyl, 1,2,3,4-tetrahydronaphthalene-2,6-diyl, and chromane-2,6-diyl, where one or more hydrogen atoms present in groups (a), (b), and (c) are each optionally replaced with fluorine, chlorine, $-CF_3$, or $-OCF_3$;

$Z^{LC}$ is a single bond, -CH=CH-, -CF=CF-, -C≡C-, $-CH_2CH_2-$, $-(CH_2)_4-$, $-OCH_2-$, $-CH_2O-$, $-OCF_2-$, $-CF_2O-$, -COO-, or -OCO-;

$Y^{LC}$ is hydrogen, fluorine, chlorine, cyano, or an alkyl group of 1 to 15 carbon atoms, where one or more $-CH_2-$groups in the alkyl group are optionally replaced with -O-, -CH=CH-, -CO-, -OCO-, -COO-, -C≡C-, $-CF_2O-$, or $-OCF_2-$ such that no oxygen atoms are directly adjacent to each other, and one or more hydrogen atoms in the alkyl group are optionally replaced with halogen; and

a is an integer of 1 to 4, where if a is 2, 3, or 4, each occurrence of $A^{LC1}$ may be the same or different, and each occurrence of $Z^{LC}$ may be the same or different,

with the proviso that compounds represented by general formulas (LC3), (LC4), (LC5), and (II-a) to (II-f) are excluded.

The liquid crystal layer preferably contains one to ten, more preferably one to eight, compounds selected from the group consisting of compounds represented by general formula (LC). These compounds are preferably present in an amount of 5% to 50% by mass, more preferably 10% to 40% by mass.

To achieve a faster response time, the liquid crystal composition preferably contains, as the compound represented by general formula (LC), at least one compound represented by general formula (LC6) below.

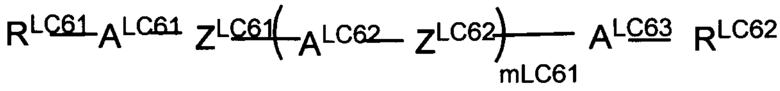

(LC6)

In the formula, $R^{LC61}$ and $R^{LC62}$ are each independently an alkyl group of 1 to 15 carbon atoms, where one or more $-CH_2$-groups in the alkyl group are optionally replaced with -O-, -CH=CH-, -CO-, -OCO-, -COO-, or -C≡C- such that no oxygen atoms are directly adjacent to each other, and one or more hydrogen atoms in the alkyl group are optionally replaced with halogen. $A^{LC61}$ to $A^{LC63}$ are each independently any of the following structures.

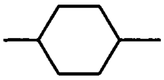 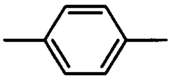 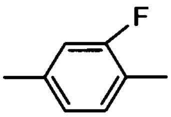 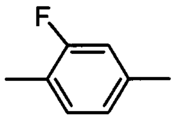

In the structures, one or more $-CH_2-$ groups in the cyclohexylene group are optionally replaced with -CH=CH-,$-CF_2O-$, or $-OCF_2-$, and one or more CH groups in the 1,4-phenylene group are optionally replaced with nitrogen. $Z^{LC61}$ and $Z^{LC62}$ are each independently a single bond, -CH=CH-, -C≡C-, $-CH_2CH_2-$, $-(CH_2)_4-$, -COO-, $-OCH_2-$, $-CH_2O-$, $-OCF_2-$, or $-CF_2O-$. $m^{iii1}$ is 0 to 3. Compounds represented by general formula (I) are excluded.

$R^{LC61}$ and $R^{LC62}$ are preferably each independently an alkyl group of 1 to 7 carbon atoms, an alkoxy group of 1 to 7 carbon atoms, or an alkenyl group of 2 to 7 carbon atoms. Most preferred are alkenyl groups having the following structures.

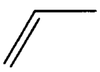 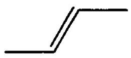 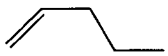 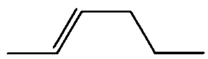

In the formulas, the right end is linked to the cyclic structure.

$A^{LC61}$ to $A^{LC63}$ are preferably each independently any of the following structures.

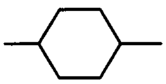 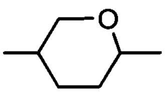 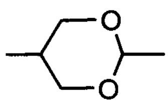 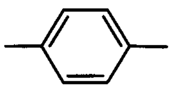 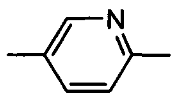 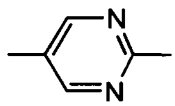

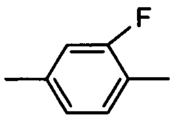 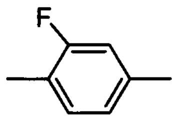

$Z^{LC61}$ and $Z^{LC62}$ are preferably each independently a single bond, $-CH_2CH_2-$, -COO-, $-OCH_2-$, $-CH_2O-$, $-OCF_2-$, or $-CF_2O-$.

More preferably, the liquid crystal layer contains, as the compound represented by general formula (LC6), at least one compound selected from the group consisting of compounds represented by general formulas (LC6-a) to (LC6-g).

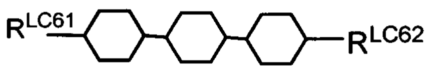

(LC6-a)

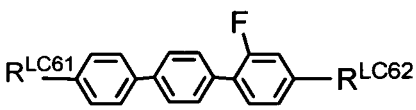

(LC6-b)

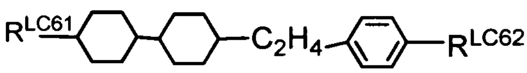

(LC6-c)

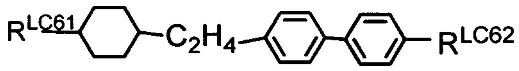 (LC6-d)

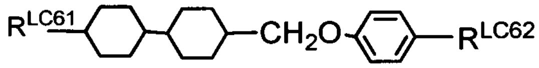 (LC6-e)

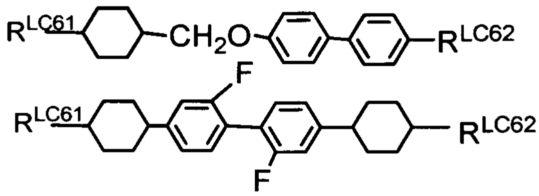 (LC6-f)

(LC6-g)

In the formulas, $R^{LC61}$ and $R^{LC62}$ are each independently an alkyl group of 1 to 7 carbon atoms, an alkoxy group of 1 to 7 carbon atoms, an alkenyl group of 2 to 7 carbon atoms, or an alkenyloxy group of 2 to 7 carbon atoms.

The compounds represented by general formulas (LC3) to (LC5), which have relatively large absolute values of negative dielectric anisotropy, are preferably present in a total amount of 30% to 65%, more preferably 40% to 55%, even more preferably 43% to 50%.

The compounds represented by general formula (LC) include both those with positive dielectric anisotropy and those with negative dielectric anisotropy. If compounds with absolute values of negative dielectric anisotropy of 0.3 or more are used, the compounds represented by general formulas (LC3) to (LC5) and (LC) are preferably present in a total amount of 35% to 70%, more preferably 45% to 65%, even more preferably 50% to 60%.

Preferably, the compounds represented by general formulas (II-a) to (II-f) are present in an amount of 30% to 50%, and the compounds represented by general formulas (LC3) to (LC5) and (LC) are present in an amount of 35% to 70%. More preferably, the compounds represented by general formulas (II-a) to (II-f) are present in an amount of 35% to 45%, and the compounds represented by general formulas (LC3) to (LC5) and (LC) are present in an amount of 45% to 65%. Even more preferably, the compounds represented by general formulas (II-a) to (II-f) are present in an amount of 38% to 42%, and the compounds represented by general formulas (LC3) to (LC5) and (LC) are present in an amount of 50% to 60%.

The compounds represented by general formulas (LC3) to (LC5), (II-a) to (II-f), and (LC) are preferably present in a total amount of 80% to 100%, more preferably 90% to 100%, even more preferably 95% to 100%, of the total composition.

Although the liquid crystal layer of the liquid crystal display device according to the present invention can have a wide range of nematic phase-isotropic liquid phase transition temperature ($T_{ni}$), the nematic phase-isotropic liquid phase transition temperature ($T_{ni}$) is preferably 60°C to 120°C, more preferably 70°C to 100°C, even more preferably 70°C to 85°C.

The dielectric anisotropy at 25°C is preferably -2.0 to -6.0, more preferably -2.5 to -5.0, even more preferably-2.5 to -4.0.

The refractive index anisotropy at 25°C is preferably 0.08 to 0.13, more preferably 0.09 to 0.12. Specifically, the refractive index anisotropy at 25°C is preferably 0.10 to 0.12 for small cell gaps and is preferably 0.08 to 0.10 for large cell gaps.

The rotational viscosity ($\gamma 1$) is preferably 150 or less, more preferably 130 or less, even more preferably 120 or less.

The liquid crystal layer of the liquid crystal display device according to the present invention preferably has a particular value of Z, which is a function of rotational viscosity and refractive index anisotropy.

[Math. 1]

$$Z = \gamma 1 / \Delta n^2$$

In the formula, $\gamma 1$ is the rotational viscosity, and $\Delta n$ is the refractive index anisotropy.

Z is preferably 13,000 or less, more preferably 12,000 or less, even more preferably 11,000 or less.

The liquid crystal layer of the liquid crystal display device according to the present invention, when used in an active-matrix display device, preferably has a resistivity of $10^{12}$ Ω·m or more, more preferably $10^{13}$ Ω·m, even more preferably $10^{14}$ Ω·m or more.

In addition to the compounds discussed above, the liquid crystal layer of the liquid crystal display device according to the present invention may contain other ingredients depending on the application, including common nematic, smectic, and cholesteric liquid crystals, antioxidants, ultraviolet absorbers, and polymerizable monomers.

The liquid crystal layer may contain, as a polymerizable monomer, a polymerizable compound containing one reactive group, i.e., a monofunctional polymerizable compound, or a polymerizable compound containing two or more reactive groups, i.e., a polyfunctional polymerizable compound, such as a di- or trifunctional polymerizable compound. The reactive-group-containing polymerizable compounds may or may not contain a mesogenic moiety.

The reactive-group-containing polymerizable compounds preferably contain a photopolymerizable substituent, particularly if vertical alignment layers are formed by thermal polymerization. This reduces the reaction of the reactive-group-containing polymerizable compounds during the thermal polymerization of the vertical alignment layer material.

Among reactive-group-containing polymerizable compounds, specific preferred monofunctional reactive-group-containing polymerizable compounds include polymerizable compounds represented by general formula (VI) below.

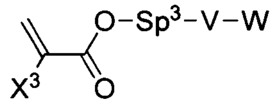

(VI)

In the formula, $X^3$ is hydrogen or methyl; $Sp^3$ is a single bond, an alkylene group of 1 to 8 carbon atoms, or-O-$(CH_2)_t$- (where t is an integer of 2 to 7, and the oxygen atom is linked to the aromatic ring); V is a linear or branched polyvalent alkylene group of 2 to 20 carbon atoms or a polyvalent cyclic substituent of 5 to 30 carbon atoms, where the alkylene group in the polyvalent alkylene group is optionally substituted with oxygen such that no oxygen atoms are adjacent to each other and is optionally substituted with an alkyl group of 5 to 20 carbon atoms (where the alkylene group in the group is optionally substituted with oxygen such that no oxygen atoms are adjacent to each other) or a cyclic substituent; and W is hydrogen, halogen, or an alkylene group of 1 to 8 carbon atoms.

Although $X^3$ in general formula (VI) above is hydrogen or methyl, $X^3$ is preferably hydrogen if it is desirable to achieve a higher reaction rate and is preferably methyl if it is desirable to achieve a lower residual monomer content.

Although $Sp^3$ in general formula (VI) above is a single bond, an alkylene group of 1 to 8 carbon atoms, or -O-$(CH_2)_t$-(where t is an integer of 2 to 7, and the oxygen atom is linked to the aromatic ring), shorter carbon chains are preferred. Specifically, $Sp^3$ is preferably a single bond or an alkylene group of 1 to 5 carbon atoms, more preferably a single bond or an alkylene group of 1 to 3 carbon atoms. If $Sp^3$ is -O-$(CH_2)_t$-, t is preferably 1 to 5, more preferably 1 to 3.

Although V in general formula (VI) above is a linear or branched polyvalent alkylene group of 2 to 20 carbon atoms or a polyvalent cyclic substituent of 5 to 30 carbon atoms, the alkylene group in the polyvalent alkylene group may optionally be substituted with oxygen such that no oxygen atoms are adjacent to each other and may optionally be substituted with an alkyl group of 5 to 20 carbon atoms (where the alkylene group in the group is optionally substituted with oxygen such that no oxygen atoms are adjacent to each other) or a cyclic substituent, preferably with two or more cyclic substituents.

Specific polymerizable compounds represented by general formula (VI) include compounds represented by general formula (X1a).

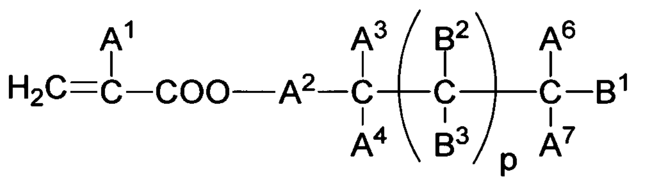

(X1a)

In the formula,

$A^1$ is hydrogen or methyl;

$A^2$ is a single bond or an alkylene group of 1 to 8 carbon atoms (where one or more methylene groups in the alkylene group are each independently optionally replaced with oxygen, -CO-, -COO-, or -OCO- such that no oxygen atoms are directly linked to each other, and one or more hydrogen atoms in the alkylene group are each independently optionally replaced with fluorine, methyl, or ethyl);

$A^3$ and $A^6$ are each independently hydrogen, halogen, or an alkyl group of 1 to 10 carbon atoms (where one or more

methylene groups in the alkyl group are each independently optionally replaced with oxygen, -CO-, -COO-, or -OCO- such that no oxygen atoms are directly linked to each other, and one or more hydrogen atoms in the alkyl group are each independently optionally replaced with halogen or an alkyl group of 1 to 17 carbon atoms);

$A^4$ and $A^7$ are each independently hydrogen, halogen, or an alkyl group of 1 to 10 carbon atoms (where one or more methylene groups in the alkyl group are each independently optionally replaced with oxygen, -CO-, -COO-, or -OCO- such that no oxygen atoms are directly linked to each other, and one or more hydrogen atoms in the alkyl group are each independently optionally replaced with halogen or an alkyl group of 1 to 9 carbon atoms);

p is 1 to 10; and

$B^1$, $B^2$, and $B^3$ are each independently hydrogen or a linear or branched alkyl group of 1 to 10 carbon atoms (where one or more methylene groups in the alkyl group are each independently optionally replaced with oxygen, -CO-,-COO-, or -OCO- such that no oxygen atoms are directly linked to each other, and one or more hydrogen atoms in the alkyl group are each independently optionally replaced with halogen or a trialkoxysilyl group of 3 to 6 carbon atoms.

Other specific polymerizable compounds represented by general formula (VI) include compounds represented by general formula (X1b).

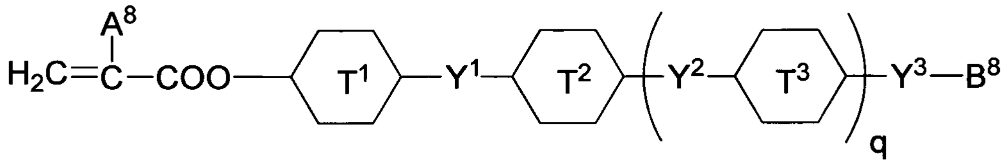

(X1b)

In the formula,

$A^8$ is hydrogen or methyl; and

the six-membered rings, $T^1$, $T^2$, and $T^3$, are each independently any of the following structures.

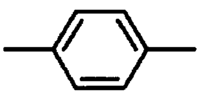
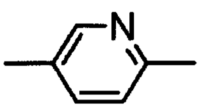
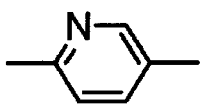
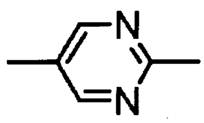
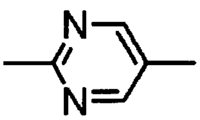
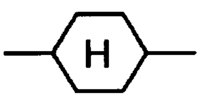
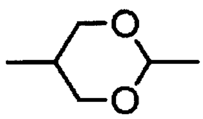
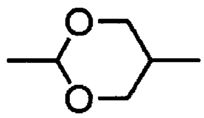
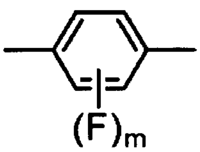
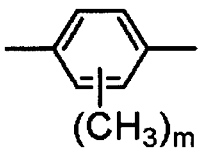
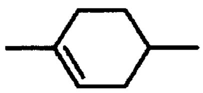
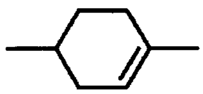

In the structures, q is an integer of 1 to 4.

In general formula (X1b) above,

q is 0 or 1;

$Y^1$ and $Y^2$ are each independently a single bond, $-CH_2CH_2-$, $-CH_2O-$, $-OCH_2-$, -COO-, -OCO-, -C≡C-, -CH=CH-, -CF=CF-,$-(CH_2)_4-$, $-CH_2CH_2CH_2O-$, $-OCH_2CH_2CH_2-$, $-CH_2=CHCH_2CH_2-$, or$-CH_2CH_2CH=CH-$;

$Y^3$ is a single bond, -COO-, or -OCO-; and

$B^8$ is a hydrocarbyl group of 1 to 18 carbon atoms.

Still other specific polymerizable compounds represented by general formula (VI) include compounds represented by general formula (X1c).

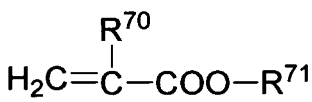

(X1c)

In the formula, $R^{70}$ is hydrogen or methyl, and $R^{71}$ is a hydrocarbyl group having a fused ring.

Among reactive-group-containing polymerizable compounds, preferred polyfunctional reactive-group-containing polymerizable compounds include polymerizable compounds represented by general formula (V) below.

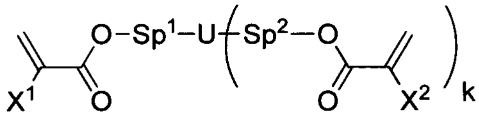
(V)

In the formula, $X^1$ and $X^2$ are each independently hydrogen or methyl; $Sp^1$ and $Sp^2$ are each independently a single bond, an alkylene group of 1 to 8 carbon atoms, or-O-$(CH_2)_s$- (where s is an integer of 2 to 7, and the oxygen atom is linked to the aromatic ring); U is a linear or branched polyvalent alkylene group of 2 to 20 carbon atoms or a polyvalent cyclic substituent of 5 to 30 carbon atoms, where the alkylene group in the polyvalent alkylene group is optionally substituted with oxygen such that no oxygen atoms are adjacent to each other and is optionally substituted with an alkyl group of 5 to 20 carbon atoms (where the alkylene group in the group is optionally substituted with oxygen such that no oxygen atoms are adjacent to each other) or a cyclic substituent; and k is an integer of 1 to 5.

Although $X^1$ and $X^2$ in general formula (V) above are each independently hydrogen or methyl, $X^1$ and $X^2$ are preferably hydrogen if it is desirable to achieve a higher reaction rate and are preferably methyl if it is desirable to achieve a lower residual monomer content.

Although $Sp^1$ and $Sp^2$ in general formula (V) above are each independently a single bond, an alkylene group of 1 to 8 carbon atoms, or -O-$(CH_2)_s$- (where s is an integer of 2 to 7, and the oxygen atom is linked to the aromatic ring), shorter carbon chains are preferred. Specifically, $Sp^1$ and $Sp^2$ are preferably a single bond or an alkylene group of 1 to 5 carbon atoms, more preferably a single bond or an alkylene group of 1 to 3 carbon atoms. If $Sp^1$ and $Sp^2$ are-O-$(CH_2)_s$-, s is preferably 1 to 5, more preferably 1 to 3. More preferably, at least one of $Sp^1$ and $Sp^2$ is a single bond, and even more preferably, both of them are single bonds.

Although U in general formula (V) above is a linear or branched polyvalent alkylene group of 2 to 20 carbon atoms or a polyvalent cyclic substituent of 5 to 30 carbon atoms, the alkylene group in the polyvalent alkylene group may optionally be substituted with oxygen such that no oxygen atoms are adjacent to each other and may optionally be substituted with an alkyl group of 5 to 20 carbon atoms (where the alkylene group in the group is optionally substituted with oxygen such that no oxygen atoms are adjacent to each other) or a cyclic substituent, preferably with two or more cyclic substituents.

Specifically, U in general formula (V) above is preferably any of formulas (Va-1) to (Va-5) below, more preferably any of formulas (Va-1) to (Va-3), even more preferably formula (Va-1).

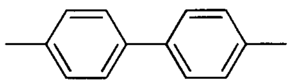
(Va-1)

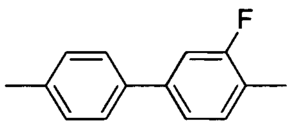
(Va-2)

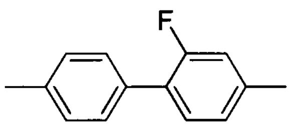
(Va-3)

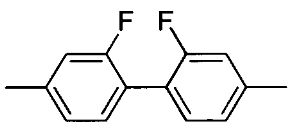
(Va-4)

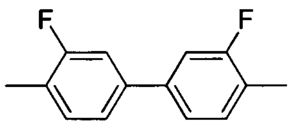
(Va-5)

In the formulas, both ends are linked to $Sp^1$ and $Sp^2$.

If U has a cyclic structure, it is preferred that at least one of $Sp^1$ and $Sp^2$ be a single bond, and it is also preferred that both be single bonds.

Although k in general formula (V) above is an integer of 1 to 5, difunctional compounds, where k is 1, and trifunctional compounds, where k is 2, are preferred, and difunctional compounds are more preferred.

Specific preferred compounds represented by general formula (V) above include compounds represented by general formula (Vb) below.

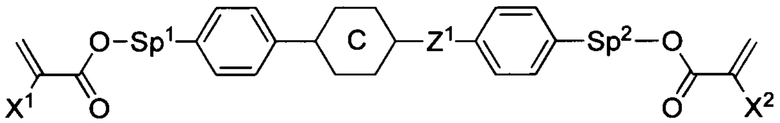

(Vb)

In the formula, $X^1$ and $X^2$ are each independently hydrogen or methyl; $Sp^1$ and $Sp^2$ are each independently a single bond, an alkylene group of 1 to 8 carbon atoms, or-O-$(CH_2)_s$- (where s is an integer of 2 to 7, and the oxygen atom is linked to the aromatic ring); $Z^1$ is -$OCH_2$-, -$CH_2O$-,-COO-, -OCO-, -$CF_2O$-, -$OCF_2$-, -$CH_2CH_2$-, -$CF_2CF_2$-, -CH=CH-COO-, -CH=CH-OCO-, -COO-CH=CH-, -OCO-CH=CH-, -COO-$CH_2CH_2$-, -OCO-$CH_2CH_2$-, -$CH_2CH_2$-COO-, -$CH_2CH_2$-OCO-, -COO-$CH_2$-, -OCO-$CH_2$-,-$CH_2$-COO-, -$CH_2$-OCO-, -$CY^1$=$CY^2$-, -C≡C-, or a single bond; and C is 1,4-phenylene, trans-1,4-cyclohexylene, or a single bond. Any hydrogen atom in any 1,4-phenylene group in the formula is optionally replaced with fluorine.

Although $X^1$ and $X^2$ in general formula (Vb) above are each independently hydrogen or methyl, diacrylate derivatives, where both $X^1$ and $X^2$ are hydrogen, and dimethacrylate derivatives, where both $X^1$ and $X^2$ are methyl, are preferred. Also preferred are compounds where one of $X^1$ and $X^2$ is hydrogen and the other is methyl. Among these compounds, diacrylate derivatives have the highest rates of polymerization, dimethacrylate derivatives have the lowest rates of polymerization, and asymmetrical compounds have intermediate rates of polymerization. Any suitable compound may be used depending on the application. In particular, dimethacrylate derivatives are preferred for PSA liquid crystal display devices.

Although $Sp^1$ and $Sp^2$ in general formula (Vb) above are each independently a single bond, an alkylene group of 1 to 8 carbon atoms, or -O-$(CH_2)_s$-, compounds where at least one of $Sp^1$ and $Sp^2$ is a single bond are preferred for PSA liquid crystal display devices. Specifically, compounds where both of $Sp^1$ and $Sp^2$ are single bonds and compounds where one of $Sp^1$ and $Sp^2$ is a single bond and the other is an alkylene group of 1 to 8 carbon atoms or -O-$(CH_2)_s$- are preferred. In this case, an alkylene group of 1 to 4 carbon atoms is preferred, and s is preferably 1 to 4.

Although $Z^1$ in general formula (Vb) above is -$OCH_2$-,-$CH_2O$-, -COO-, -OCO-, -$CF_2O$-, -$OCF_2$-, -$CH_2CH_2$-, -$CF_2CF_2$-,-CH=CH-COO-, -CH=CH-OCO-, -COO-CH=CH-, -OCO-CH=CH-, -COO-$CH_2CH_2$-, -OCO-$CH_2CH_2$-, -$CH_2CH_2$-COO-, -$CH_2CH_2$-OCO-, -COO-$CH_2$-,-OCO-$CH_2$-, -$CH_2$-COO-, -$CH_2$-OCO-, -$CY^1$=$CY^2$-, -C≡C-, or a single bond, $Z^1$ is preferably -$OCH_2$-, -$CH_2O$-, -COO-, -OCO-, -$CF_2O$-, -$OCF_2$-, -$CH_2CH_2$-, -$CF_2CF_2$-, or a single bond, more preferably -COO-, -OCO-, or a single bond, even more preferably a single bond.

Although C in general formula (Vb) above is 1,4-phenylene or trans-1,4-cyclohexylene where any hydrogen atom is optionally replaced with fluorine, or a single bond, C is preferably 1,4-phenylene or a single bond. If C is a cyclic structure, rather than a single bond, $Z^1$ is also preferably a linking group other than a single bond. If C is a single bond, $Z^1$ is preferably a single bond.

As discussed above, C in general formula (Vb) above is preferably a single bond, and the cyclic structure is preferably composed of two rings. Specific preferred polymerizable compounds having a cyclic structure include compounds represented by general formulas (V-1) to (V-6) below, more preferably compounds represented by general formulas (V-1) to (V-4), most preferably a compound represented by general formula (V-2).

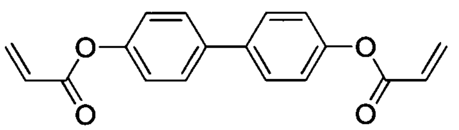

(V-1)

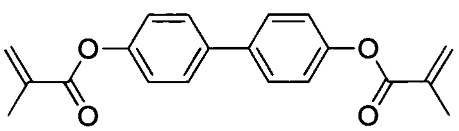

(V-2)

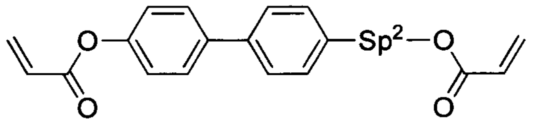

(V-3)

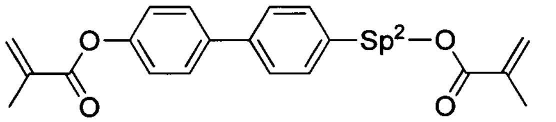

(V-4)

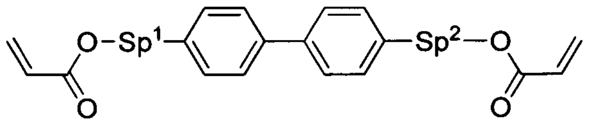

(V-5)

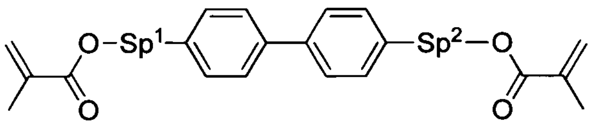

(V-6)

Other specific preferred compounds represented by general formula (V) above include compounds represented by general formula (Vc) below.

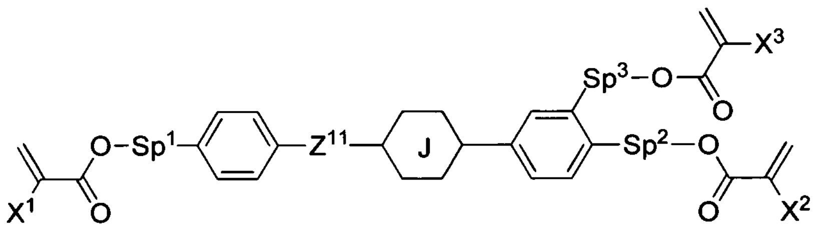

(Vc)

In the formula, $X^1$, $X^2$, and $X^3$ are each independently hydrogen or methyl; $Sp^1$, $Sp^2$, and $Sp^3$ are each independently a single bond, an alkylene group of 1 to 8 carbon atoms, or $-O-(CH_2)_s-$ (where s is an integer of 2 to 7, and the oxygen atom is linked to the aromatic ring); $Z^{11}$ and $Z^{12}$ are each independently $-OCH_2-$, $-CH_2O-$, -COO-, -OCO-, $-CF_2O-$, $-OCF_2-$,$-CH_2CH_2-$, $-CF_2CF_2-$, -CH=CH-COO-, -CH=CH-OCO-, -COO-CH=CH-,-OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, $-CY^1=CY^2-$,-C≡C-, or a single bond; and J is 1,4-phenylene, trans-1,4-cyclohexylene, or a single bond. Any hydrogen atom in any 1,4-phenylene group in the formula is optionally replaced with fluorine.

If a polymerizable monomer is added, polymerization proceeds without the use of a polymerization initiator; however, a polymerization initiator may be added to promote the polymerization. Examples of polymerization initiators include benzoin ethers, benzophenones, acetophenones, benzyl ketals, and acylphosphine oxides. A stabilizer may also be added to improve storage stability. Examples of stabilizers that can be used include hydroquinones, hydroquinone monoalkyl ethers, tert-butylcatechols, pyrogallols, thiophenols, nitro compounds, β-naphthylamines, β-naphthols, and nitroso compounds.

A liquid crystal layer containing a polymerizable monomer is useful in liquid crystal display devices, particularly active-matrix-driven liquid crystal display devices, including PSA, PSVA, VA, IPS, and ECB liquid crystal display devices.

A liquid crystal layer containing a polymerizable monomer acquires the ability to align liquid crystal molecules when the polymerizable monomer present therein is polymerized by exposure to ultraviolet radiation. The liquid crystal layer is used in a liquid crystal display device that controls the intensity of transmitted light by means of the birefringence of the liquid crystal composition.

As discussed above, liquid crystal display devices including oxide semiconductor thin-film transistors have the problem of the diffusion of oxygen desorbed from the oxide semiconductor layer 113 into the insulating layer 118 covering the oxide semiconductor layer 113. As shown in Fig. 3, the oxide semiconductor layer 113 is separated from the liquid crystal composition only by members such as the insulating layer 118 and the alignment layer 4. Since these members are thin, typically 0.1 μm or less thick, they cannot sufficiently reduce the influence of oxygen desorbed from the oxide semiconductor layer on the liquid crystal layer.

However, the use of a particular liquid crystal composition in the liquid crystal display device according to the

present invention reduces the influence of the interaction between the oxide semiconductor layer and the liquid crystal composition. The liquid crystal display device according to the present invention does not exhibit a significant decrease in voltage holding ratio (VHR) or increase in ion density (ID) of the liquid crystal layer and thus does not suffer from display defects such as white spots, uneven alignment, and image-sticking and also consumes less power.

Second Embodiment

A liquid crystal display device according to a second embodiment of the present invention includes oxide semiconductor thin-film transistors and a particular liquid crystal composition and generates an electric field containing a component parallel to the substrate surface. The liquid crystal display device according to the second preferred embodiment is an in-plane switching (IPS) liquid crystal display device or a fringe-field switching (FFS) liquid crystal display device, which is a type of IPS liquid crystal display device.

An IPS liquid crystal display device according to the second preferred embodiment of the present invention preferably includes first and second opposing substrates, a liquid crystal layer containing a liquid crystal composition between the first and second substrates, a plurality of gate lines and data lines arranged in a matrix on the first substrate, thin-film transistors disposed at intersections of the gate lines and the data lines, and pixel electrodes that are driven by the transistors and that are made of a transparent conductive material. Each thin-film transistor preferably includes a gate electrode, an oxide semiconductor layer disposed over the gate electrode with an insulating layer therebetween, and source and drain electrodes electrically connected to the oxide semiconductor layer. The thin-film transistors are preferably disposed at the intersections of the gate lines and the data lines. The pixel electrodes are preferably connected to the thin-film transistors. The liquid crystal display device preferably further includes common electrodes disposed on the first or second substrate and separated from the pixel electrodes and alignment layers that are disposed between the first and second substrates and the liquid crystal layer and close to the liquid crystal layer and that induce homogeneous alignment to the liquid crystal composition. The first and second substrates are preferably transparent insulating substrates. The pixel electrodes and the common electrodes are preferably arranged such that the shortest path from the pixel electrodes to the common electrodes located close to the pixel electrodes contains a component parallel to the first or second substrate.

By "the shortest path from the pixel electrodes to the common electrodes located close to the pixel electrodes contains a component parallel to the first or second substrate", it is meant that the direction vector indicating the shortest path from the pixel electrodes to the common electrodes located closest to the pixel electrodes contains a component parallel to the first or second substrate. For example, if the pixel electrodes and the counter electrodes overlap each other in the direction perpendicular to the first or second substrate, the shortest path from the pixel electrodes to the common electrodes located close to the pixel electrodes is perpendicular to the first or second substrate; therefore, it contains no component parallel to the first or second substrate. That is, the pixel electrodes and the counter electrodes are arranged such that they do not overlap each other in the direction perpendicular to the first or second substrate. The counter electrodes may be disposed either on the first substrate or on the second substrate.

Since the common electrodes and the pixel electrodes are separated such that they do not overlap each other in the direction perpendicular to the first or second substrate, an electric field (E) containing a planar component can be generated between the common electrodes and the pixel electrodes. For example, if alignment layers are used that induce homogeneous alignment to the liquid crystal composition, the liquid crystal molecules are aligned in the alignment direction of the alignment layers, i.e., in the planar direction, thereby blocking light, before a voltage is applied across the common electrodes and the pixel electrodes. When a voltage is applied, the liquid crystal molecules are rotated horizontally relative to the substrate by the planar electric field (E) and are aligned in the electric field direction, thereby transmitting light.

An FFS liquid crystal display device according to the second preferred embodiment of the present invention preferably includes first and second opposing substrates, a liquid crystal layer containing a liquid crystal composition between the first and second substrates, a plurality of gate lines and data lines arranged in a matrix on the first substrate, thin-film transistors disposed at intersections of the gate lines and the data lines, and pixel electrodes that are driven by the transistors and that are made of a transparent conductive material. Each thin-film transistor preferably includes a gate electrode, an oxide semiconductor layer disposed over the gate electrode with an insulating layer therebetween, and source and drain electrodes electrically connected to the oxide semiconductor layer. The liquid crystal display device preferably further includes common electrodes disposed on the first substrate and separated from the pixel electrodes and alignment layers that are disposed between the first and second substrates and the liquid crystal layer and close to the liquid crystal layer and that induce homogeneous alignment to the liquid crystal composition. The first and second substrates are preferably transparent insulating substrates. The pixel electrodes and the common electrodes are preferably arranged such that the shortest distance d between the common electrodes and the pixel electrodes located close to each other is shorter than the shortest distance G between the alignment layers.

As used herein, the term "IPS liquid crystal display device" refers to a liquid crystal display device in which the

shortest distance d between the common electrodes and the pixel electrodes is longer than the shortest distance G between the alignment layers, whereas the term "FFS liquid crystal display device" refers to a liquid crystal display device in which the shortest distance d between the common electrodes and the pixel electrodes located close to each other is shorter than the shortest distance G between the alignment layers. The only requirement for FFS is that the shortest distance d between the common electrodes and the pixel electrodes located close to each other is shorter than the shortest distance G between the alignment layers; therefore, there may be any positional relationship between the surfaces of the common electrodes and the pixel electrodes in the thickness direction. Example FSS liquid crystal display devices according to the present invention include those in which the pixel electrodes are disposed closer to the liquid crystal layer than are the common electrodes, as shown in Figs. 4 to 8, and those in which the pixel electrodes and the common electrodes are disposed on the same surface, as shown in Fig. 9.

An example FFS liquid crystal display device according to the second embodiment of the present invention will now be described with reference to Figs. 4 to 9. Fig. 4 is a schematic exploded perspective view illustrating the structure of a liquid crystal display device, i.e., an FFS liquid crystal display device. A liquid crystal display device 10 according to the present invention includes, in sequence, a first polarizer 1, a first substrate 2, an electrode layer 3 including thin-film transistors (also referred to as "thin-film transistor layer"), an alignment layer 4, a liquid crystal layer 5 containing a liquid crystal composition, an alignment layer 4, a color filter 6, a second substrate 7, and a second polarizer 8. As shown in Fig. 4, the first substrate 2 and the second substrate 7 may be disposed between the pair of polarizers 1 and 8. As shown in Fig. 4, the color filter 6 is disposed between the second substrate 7 and the alignment layer 4. The pair of alignment layers 4 may be formed on the (transparent) electrode (layer) 3 such that they are located close to the liquid crystal layer 5 and in direct contact with the liquid crystal composition forming the liquid crystal layer 5.

The FFS liquid crystal display device utilizes a fringe field, which is formed between the common electrodes and the pixel electrodes since the shortest distance d between the common electrodes and the pixel electrodes located close to each other is shorter than the shortest distance G between the alignment layers. This allows horizontal alignment and vertical alignment of liquid crystal molecules to be efficiently utilized. Specifically, the FFS liquid crystal display device can utilize a horizontal electric field perpendicular to the lines forming the comb-shaped pattern of pixel electrodes 21 and a parabolic electric field.

Fig. 5 is an enlarged plan view of an area enclosed by line II of the electrode layer 3 including the thin-film transistors formed on the substrate in Fig. 4. The thin-film transistors are disposed near intersections of gate lines 26 and data lines 25 and are coupled to the pixel electrodes 21, serving as switching elements for supplying display signals to the pixel electrodes 21. Each thin-film transistor includes a source electrode 27, a drain electrode 24, and a gate electrode 28. In the example in Fig. 4, planar common electrodes 22 are formed below the comb-shaped pixel electrodes 21 with an insulating layer (not shown) therebetween. The surfaces of the pixel electrodes 21 may be covered with a protective insulating layer and an alignment layer. Storage capacitors 23 for storing display signals supplied via the data lines 25 may be disposed in the areas surrounded by the gate lines 26 and the data lines 25. Common lines 29 extend parallel to the gate lines 26 and are coupled to the common electrodes 22 to supply common signals to the common electrodes 22.

Fig. 6 is an example of a sectional view of the liquid crystal display device taken along line III-III in Fig. 5. The first substrate 2 having the alignment layer 4 and the electrode layer 3, including the thin-film transistors (11, 12, 13, 14, 15, 16, and 17), formed thereon and the second substrate 7 having the alignment layer 4 formed thereon are separated from each other by a predetermined distance G such that the alignment layers 4 face each other. This space is filled with the liquid crystal layer 5 containing the liquid crystal composition. A gate insulating layer 12 is formed on part of the surface of the first substrate 2. The common electrodes 22 are formed on part of the surface of the gate insulating layer 12. An insulating layer 18 is formed over the common electrodes 22 and the thin-film transistors. The pixel electrodes 21 are disposed on the insulating layer 18. The pixel electrodes 21 face the liquid crystal layer 5 with the alignment layer 4 therebetween. The minimum distance d between the pixel electrodes and the common electrodes can be adjusted depending on the (average) thickness of the gate insulating layer 12. In other words, the distance between the pixel electrodes and the common electrodes in the direction parallel to the substrates in the embodiment in Fig. 6 is zero. The electrode width l of the comb-shaped pixel electrodes 21 and the gap width m of the comb-shaped pixel electrodes 21 are preferably selected so that the resulting electric field can drive all liquid crystal molecules in the liquid crystal layer 5.

For the FFS liquid crystal display device, in which the shortest distance d between the common electrodes and the pixel electrodes located close to each other is shorter than the shortest distance G between the alignment layers, as shown in Figs. 4 to 8, a voltage applied to the liquid crystal molecules, which have the major axes thereof aligned parallel to the alignment direction of the alignment layers, generates a parabolic electric field between the pixel electrodes 21 and the common electrodes 22. The equipotential lines of the parabolic electric field extend above the pixel electrodes 21 and the common electrodes 22. The liquid crystal molecules in the liquid crystal layer 5 are rotated along the resulting electric field and serve as switching elements. More specifically, for example, if alignment layers are used that induce homogeneous alignment to the liquid crystal composition, the liquid crystal molecules are aligned in the alignment direction of the alignment layers, i.e., in the planar direction, thereby blocking light, before a voltage is applied across

the common electrodes and the pixel electrodes. When a voltage is applied, a planar electric field is generated since the common electrodes and the pixel electrodes are separated from each other on the same substrate (or electrode layer), and a perpendicular electric field (fringe field) is generated at the fringes of the electrodes since the shortest distance d between the common electrodes and the pixel electrodes located close to each other is shorter than the shortest distance G between the alignment layers. These electric fields can drive liquid crystal molecules with low dielectric anisotropy. This allows the amount of compound with high dielectric anisotropy ($\Delta\varepsilon$) to be minimized and thus allows a larger amount of compound with low viscosity to be used in the liquid crystal composition.

The rubbing direction of the alignment layers 4 in the second embodiment is preferably selected such that the major axes of the liquid crystal molecules are aligned at an angle $\theta$ of about 0° to 45° with respect to the x-axis, which is the direction perpendicular to the lines forming the comb-shaped pattern of the pixel electrodes 21 (the direction in which the horizontal electric field is formed). The liquid crystal composition used in the second embodiment is of the same type the liquid crystal composition described in the first embodiment, i.e., a liquid crystal composition with negative dielectric anisotropy. When no voltage is applied, the liquid crystal molecules are aligned such that the major axes thereof are parallel to the alignment direction of the alignment layers 4. When a voltage is applied, the liquid crystal molecules, which have negative dielectric anisotropy, are rotated such that the major axes thereof are perpendicular to the direction of the resulting electric field. Although the liquid crystal molecules located near the pixel electrodes 21 are subject to the fringe field, they are not rotated such that the major axes thereof are perpendicular to the alignment layers 4 since liquid crystal molecules with negative dielectric anisotropy are polarized along the minor axes of the molecules; therefore, the major axes of all liquid crystal molecules 30 in the liquid crystal layer 5 can be maintained parallel to the alignment layers 4. Thus, the FFS liquid crystal display device including liquid crystal molecules with negative dielectric anisotropy has superior transmittance characteristics.

Fig. 7 is another example of an enlarged plan view of the area enclosed by line II of the electrode layer 3 including the thin-film transistors (also referred to as "thin-film transistor layer 3") formed on the substrate in Fig. 4. The thin-film transistors are disposed near intersections of gate lines 26 and data lines 25 and are coupled to the pixel electrodes 21, serving as switching elements for supplying display signals to the pixel electrodes 21. Each thin-film transistor includes a source electrode 27, a drain electrode 24, and a gate electrode 28. Each pixel electrode 21 may have at least one cutout. An example of such a pixel electrode 21 is shown in Fig. 7. The pixel electrode 21 is formed in a rectangular planar shape with triangular cutouts in the center and at both ends thereof and eight rectangular cutouts in the remaining region, and the common electrode 22 is comb-shaped (not shown). The surfaces of the pixel electrodes may be covered with a protective insulating layer and an alignment layer. Storage capacitors 23 for storing display signals supplied via the data lines 24 may be disposed in the areas surrounded by the gate lines 25 and the data lines 24. The pixel electrodes 21 may have any number of cutouts formed in any shape.

Fig. 8 is another example of a sectional view of the liquid crystal display device, which is taken at a position in Fig. 7 similar to line III-III in Fig. 6. Specifically, this liquid crystal display device and the liquid crystal display device in Fig. 6 differ in that the liquid crystal display device in Fig. 5 includes planar common electrodes and comb-shaped pixel electrodes. As described above, the pixel electrodes 21 of the liquid crystal display device in Fig. 7 are formed in a rectangular planar shape with triangular cutouts in the center and at both ends thereof and eight rectangular cutouts in the remaining region, and the common electrodes 22 are comb-shaped. The minimum distance d between the pixel electrodes and the common electrodes is not smaller than the (average) thickness of the gate insulating layer 12 and is smaller the distance G between the alignment layers. Although Fig. 8 illustrates comb-shaped common electrodes, planar common electrodes may instead be used in this embodiment. In either case, the FFS liquid crystal display device according to the present invention needs only to satisfy the condition that the shortest distance d between the common electrodes and the pixel electrodes located close to each other is shorter than the shortest distance G between the alignment layers. Whereas the pixel electrodes 21 of the liquid crystal display device in Fig. 8 are covered with the protective layer 18, the pixel electrodes 21 of the liquid crystal display device in Fig. 5 are covered with the alignment layer 4. In the present invention, the pixel electrodes may be covered with either a protective layer or an alignment layer.

In Fig. 8, the polarizer is formed on one surface of the first substrate 2. The comb-shaped common electrodes 22 are formed on part of the other surface of the first substrate 2. The gate insulating layer 12 is formed over the common electrodes 22. The pixel electrodes 21 are formed on part of the surface of the gate insulating layer 12. The insulating layer 18 is formed over the pixel electrodes 21 and the thin-film transistors 20. The alignment layer 4, the liquid crystal layer 5, the alignment layer 4, the color filter 6, the second substrate 7, and the polarizer 8 are deposited on the insulating layer 18. The shortest distance d between the common electrodes and the pixel electrodes can be adjusted depending on the positions of both electrodes, the electrode width l of the comb-shaped pixel electrodes 21, and the gap width m of the comb-shaped pixel electrodes 21.

As shown in Fig. 8, the pixel electrodes are disposed closer to the second substrate than are the common electrodes. A planar electric field can be formed between the common electrodes and the pixel electrodes since they are disposed parallel to each other on the first substrate. At the same time, an electric field (E) extending in the thickness direction can be formed since the surfaces of the pixel electrodes and the common electrodes differ in height in the

thickness direction.

The FFS liquid crystal display device, which utilizes a fringe field, may have any configuration in which the shortest distance d between the common electrodes and the pixel electrodes located close to each other is shorter than the shortest distance G between the alignment layers. For example, as shown in Fig. 9, comb-shaped pixel electrodes 41 and comb-shaped common electrodes 42 may be disposed on the same surface, i.e., on the first substrate 2, such that the teeth of the pixel electrodes 41 mesh with the teeth of the common electrodes 42 without contact therebetween. In this case, an IPS liquid crystal display device can be constructed if the distance between the teeth of the common electrodes 42 and the teeth of the pixel electrodes 41 is longer than the shortest distance G between the alignment layers, whereas an FFS liquid crystal display device, which utilizes a fringe field, can be constructed if the distance between the teeth of the common electrodes 42 and the teeth of the pixel electrodes 41 is shorter than the shortest distance G between the alignment layers.

Thin-Film Transistors

The thin-film transistors shown in Figs. 6 and 8 include a gate electrode 11 formed on the substrate 2, a gate insulating layer 12 covering the gate electrode 11 and substantially the entire surface of the substrate 2, a semiconductor layer 13 formed on the gate insulating layer 12 and opposite the gate electrode 11, a protective layer 14 covering part of the surface of the semiconductor layer 13, a drain electrode 16 covering one end of the protective layer 14 and the semiconductor layer 13 and contacting the gate insulating layer 12 formed on the substrate 2, a source electrode 17 covering the other end of the protective layer 14 and the semiconductor layer 13 and contacting the gate insulating layer 12 formed on the substrate 2, and an insulating protective layer 18 covering the drain electrode 16 and the source electrode 17. These thin-film transistors differ from the thin-film transistors described with reference to Fig. 3 in the first embodiment in that the protective layer 14 covers part of the surface of the semiconductor layer 13. The protective layer 14 separates the liquid crystal layer 5 from the semiconductor layer 13, which is made of an oxide semiconductor, thus reducing the influence of oxygen desorbed from the oxide semiconductor layer on the liquid crystal layer.

The insulating layer 18 of the thin-film transistors shown in Fig. 8 covers the pixel electrodes 21 and the thin-film transistors 20. The insulating layer 18 separates the liquid crystal layer 5 from the semiconductor layer 13, which is made of an oxide semiconductor, thus reducing the influence of oxygen desorbed from the oxide semiconductor layer on the liquid crystal layer.

The first substrate 2, second substrate 7, transparent electrode 6, color filter 6, alignment layers 4, and liquid crystal layer 5 of the FFS liquid crystal display device shown in Figs. 4 to 8 are similar to the first substrate 102, second substrate 109, transparent electrode 107, color filter 108, alignment layers 104 and 106, and liquid crystal layer 105 in the first embodiment and are therefore not described herein.

As shown in Figs. 6 and 8, the oxide semiconductor layer 13 of the liquid crystal display device according to the second embodiment is separated from the liquid crystal composition only by members such as the insulating layer 18, the alignment layer 4, and the protective layer 14. Since these members are generally thin, they cannot sufficiently reduce the influence of oxygen desorbed from the oxide semiconductor layer on the liquid crystal layer.

However, the use of a particular liquid crystal composition in the liquid crystal display device according to the present invention reduces the influence of the interaction between the oxide semiconductor layer and the liquid crystal composition. The liquid crystal display device according to the present invention does not exhibit a significant decrease in voltage holding ratio (VHR) or increase in ion density (ID) of the liquid crystal layer and thus does not suffer from display defects such as white spots, uneven alignment, and image-sticking and also consumes less power.

Third Embodiment

A liquid crystal display device according to a third embodiment of the present invention includes oxide semiconductor thin-film transistors and a particular liquid crystal composition. The liquid crystal display device preferably includes color filters 6 formed on the same substrate as the electrode layer 3 including the thin-film transistors, i.e., on the first substrate. This structure is commonly known as color-filter-on-array (COA). Specific structures will now be described with reference to Figs. 10 and 11. Fig. 10 is another example of a sectional view of a liquid crystal display device. A first substrate 2 having an alignment layer 4, thin-film transistors (11, 13, 15, 16, and 17), color filters 6, and pixel electrodes 21 formed thereon and a second substrate 7 having an alignment layer 4 formed thereon are separated from each other such that the alignment layers 4 face each other. This space is filled with a liquid crystal layer 5 containing a liquid crystal composition. The thin-film transistors and a gate insulating layer 12 are formed on part of the surface of the first substrate 2. A buffer layer 30 serving as a planarization layer covers the thin-film transistors. The color filters 6, the pixel electrodes 21, and the alignment layer 4 are deposited in the above order on the buffer layer 30. Unlike the structure in Fig. 6, there is no color filter 6 on the second substrate 7.

The liquid crystal display device has a rectangular display area located in the center thereof and a rectangular

non-display area extending around the periphery of the display area. Red, green, and blue color filters are formed in the display area. More specifically, the peripheries of the color filters overlap signal lines (such as data lines and gate lines).

The pixel electrodes 21, which are made of a transparent conductive film such as ITO film, are disposed on the color filters. The individual pixel electrodes 21 are connected to the corresponding thin-film transistors via through-holes (not shown) formed in the insulating layer 18 and the color layers. More specifically, the pixel electrodes 21 are connected to the thin-film transistors via the contact electrodes described above. A plurality of spacers (not shown) such as pillars may be disposed on the pixel electrodes 21. The alignment layer 4 is formed on the color filters and the pixel electrodes 21.

Fig. 11 illustrates a color-filter-on-array liquid crystal display device different from that in Fig. 10, showing the thin-film transistors and the substrate 2 in an enlarged view. Whereas the color filters are disposed closer to the liquid crystal layer than are the thin-film transistors in Fig. 10, the thin-film transistors are disposed closer to the liquid crystal layer than are the color filters in Fig. 11. The thin-film transistors and the color filters are separated by the buffer layer.

Other members such as the oxide semiconductor layer and the liquid crystal layer in the third embodiment are similar to those in the first and second embodiments and are therefore not described herein.

The liquid crystal display devices according to the present invention can be used in combination with backlights for various applications, including liquid crystal display televisions, personal computer monitors, cellular phone and smartphone displays, notebook personal computers, portable information terminals, and digital signage. Examples of backlights include cold cathode fluorescent lamp backlights and two-peak-wavelength and three-peak-wavelength pseudo-white backlights including inorganic light-emitting diodes and organic EL devices.

## EXAMPLES

Some of the most preferred embodiments of the present invention are illustrated by the following examples, although these examples are not intended to limit the invention. The percentages for the compositions of the following Examples and Comparative Examples are by mass.

The properties measured in the examples are as follows:

- $T_{ni}$: nematic phase-isotropic liquid phase transition temperature (°C)
- $\Delta n$: refractive index anisotropy at 25°C
- $\Delta\varepsilon$: dielectric anisotropy at 25°C
- $\eta$: viscosity (mPa·s) at 20°C
- $\gamma_1$: rotational viscosity (mPa·s) at 25°C
- $d_{gap}$: cell gap ($\mu$m) between first and second substrates
- VHR: voltage holding ratio (%) at 70°C (the percentage of the voltage measured on a cell having a cell thickness of 3.5 $\mu$m and filled with a liquid crystal composition at an applied voltage of 5 V, a frame time of 200 ms, and a pulse duration of 64 $\mu$s, to the initial applied voltage)
- ID: ion density (pC/cm$^2$) at 70°C (the ion density measured on a cell having a cell thickness of 3.5 $\mu$m and filled with a liquid crystal composition at an applied voltage of 20 V and a frequency of 0.05 Hz using an MTR-1 measurement system (Toyo Corporation))

### Image-Sticking

Each liquid crystal display device was evaluated for image-sticking as follows. After a predetermined fixed pattern was displayed within the display area for 1,000 hours, a uniform image was displayed over the entire screen and was visually inspected for image-sticking of the fixed pattern. The liquid crystal display device was rated on the following four-level scale:

- A: no image-sticking
- B: slight and acceptable image-sticking
- C: unacceptable image-sticking
- D: severe image-sticking

### Transmittance

The transmittance of each liquid crystal display device is expressed as the percentage of the transmittance of the device after the injection of the liquid crystal composition to the transmittance of the device before the injection of the liquid crystal composition.

Side Chain Structures

-n: $-C_nH_{2n+1}$ linear alkyl group of n carbon atoms
n-: $C_nH_{2n+1}-$ linear alkyl group of n carbon atoms
-On: $-OC_nH_{2n+1}$ linear alkoxy group of n carbon atoms
nO-: $C_nH_{2n+1}O-$ linear alkoxy group of n carbon atoms
-V: $-CH=CH_2$
V-: $CH_2=CH-$
-V1: $-CH=CH-CH_3$
1V-: $CH_3-CH=CH-$
-2V: $-CH_2-CH_2-CH=CH_3$
V2-: $CH_3=CH-CH_2-CH_2-$
-2V1: $-CH_2-CH_2-CH=CH-CH_3$
1V2-: $CH_3-CH=CH-CH_2-CH_2$
0d3-: $CH_2=CH-CH_2-CH_2-$
-3d0: $-CH_2-CH_2-CH=CH_2$

Linking Structures

-VO-: -COO-
-T-: -C≡C-
-N-: -CH=N-N=CH-

Cyclic Structures

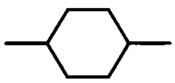
Cy

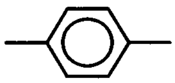
Ph

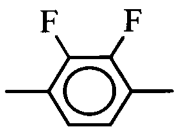
Ph5

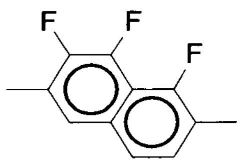
Nd4

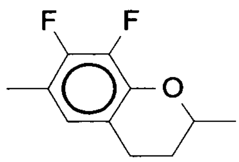
Ch3

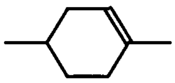
Cb

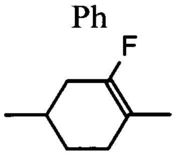
Cb1

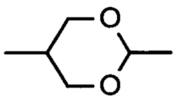
Oc

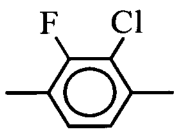
Ph15

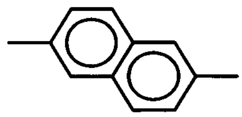
Nd

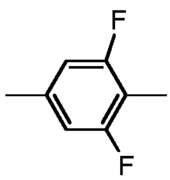
Ph3

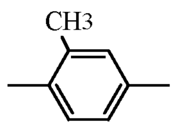
Ph9

Example 1

Thin-film transistors including an In-Ga-Zn oxide film as shown in Fig. 3 were formed on a first substrate by

sputtering to form a thin-film transistor layer. A counter electrode was formed on a second substrate. Vertical alignment layers were formed over the electrode structures on the first and second substrates and were subjected to weak rubbing. A VA cell was assembled, and Liquid Crystal Composition 1 shown in the following table was injected between the first and second substrates to obtain a liquid crystal display device of Example 1 ($d_{gap}$ = 3.5 μm, alignment layer: SE-5300). The resulting liquid crystal display device was tested for VHR, ID, and transmittance and was evaluated for image-sticking. The following tables summarize the composition and physical properties of the liquid crystal composition, the VHR, ID, and transmittance of the liquid crystal display device, and the results of the image-sticking evaluation.

[Table 1]

| Liquid Crystal Composition 1 | |
|---|---|
| $T_{NI}$/°C | 81.0 |
| Δn | 0.103 |
| Δε | -2.9 |
| η / mP·s | 20.3 |
| $\gamma_1$ / mPa·s | 112 |
| $\gamma_1 / \Delta n^2 \times 10^{-2}$ | 105 |
| 3-Cy-Cy-2 | 24% |
| 3-Cy-Cy-4 | 10% |
| 3-Cy-Cy-5 | 5% |
| 3-Cy-Ph-O1 | 2% |
| 3-Cy-Ph5-O2 | 13% |
| 2-Cy-Ph-Ph5-O2 | 9% |
| 3-Cy-Ph-Ph5-O2 | 9% |
| 3-Cy-Cy-Ph5-O3 | 5% |
| 4-Cy-Cy-Ph5-O2 | 6% |
| 5-Cy-Cy-Ph5-O2 | 5% |
| 3-Ph-Ph5-Ph-2 | 6% |
| 4-Ph-Ph5-Ph-2 | 6% |

[Table 2]

| | Example 1 |
|---|---|
| VHR | 99.5 |
| ID | 16 |
| Image-sticking | A |
| Maximum transmittance | 89.4% |

Liquid Crystal Composition 1 was found to have a liquid crystal layer temperature limit of 81°C, which is practical for televisions, a large absolute value of dielectric anisotropy, a low viscosity, and an optimal Δn.

The liquid crystal display device of Example 1 had a high VHR, a low ID, and a high transmittance. The liquid crystal display device also exhibited no or only slight and acceptable image-sticking.

Examples 2 and 3

Liquid Crystal Compositions 2 and 3 shown in the following tables were injected as in Example 1 to obtain liquid crystal display devices of Examples 2 and 3. The resulting liquid crystal display devices were tested for VHR, ID, and

transmittance and were evaluated for image-sticking. The following tables summarize the composition and physical properties of the liquid crystal compositions, the VHR, ID, and transmittance of the liquid crystal display devices, and the results of the image-sticking evaluation.

[Table 3]

| Liquid Crystal Composition 2 | |
|---|---|
| $T_{NI}$ / °C | 76.0 |
| $\Delta n$ | 0.103 |
| $\Delta\varepsilon$ | -2.9 |
| $\eta$ / mPa·s | 19.8 |
| $\gamma_1$ / mPa·s | 110 |
| $\gamma_1 / \Delta n^2 \times 10^{-2}$ | 103 |
| 3-Cy-Cy-2 | 24% |
| 3-Cy-Cy-4 | 10% |
| 3-Cy-Ph-O1 | 7% |
| 3-Cy-Ph5-O2 | 14% |
| 2-Cy-Ph-Ph5-O2 | 7% |
| 3-Cy-Ph-Ph5-O2 | 9% |
| 3-Cy-Cy-Ph5-O3 | 5% |
| 4-Cy-Cy-Ph5-O2 | 7% |
| 5-Cy-Cy-Ph5-O2 | 5% |
| 3-Ph-Ph5-Ph-2 | 6% |
| 4-Ph-Ph5-Ph-2 | 6% |
| Liquid Crystal Composition 3 | |
| $T_{NI}$ / °C | 84.8 |
| $\Delta n$ | 0.103 |
| $\Delta\varepsilon$ | -2.9 |
| $\eta$ / mPa·s | 21.4 |
| $\gamma_1$ / mPa·s | 119 |
| $\gamma_1 / \Delta n^2 \times 10^{-2}$ | 112 |
| 3-Cy-Cy-2 | 24% |
| 3-Cy-Cy-4 | 11% |
| 3-Cy-Ph5-O2 | 12% |
| 2-Cy-Ph-Ph5-O2 | 5% |
| 3-Cy-Ph-Ph5-O2 | 6% |
| 3-Cy-Cy-Ph5-O3 | 8% |
| 4-Cy-Cy-Ph5-O2 | 8% |
| 5-Cy-Cy-Ph5-O2 | 8% |
| 3-Ph-Ph5-Ph-2 | 6% |
| 4-Ph-Ph5-Ph-2 | 6% |
| 5-Ph-Ph-1 | 3% |

(continued)

| Liquid Crystal Composition 3 | |
|---|---|
| 3-Cy-Cy-Ph-1 | 3% |

[Table 4]

| | Example 2 | Example 3 |
|---|---|---|
| VHR | 99.6 | 99.4 |
| ID | 14 | 21 |
| Image-sticking | A | A |
| Maximum transmittance | 89.2% | 89.0% |

The liquid crystal display devices of Examples 2 and 3 had high VHRs, low IDs, and high transmittances. These liquid crystal display devices also exhibited no or only slight and acceptable image-sticking.

Examples 4 to 6

Liquid Crystal Compositions 4 to 6 shown in the following tables were injected as in Example 1 to obtain liquid crystal display devices of Examples 4 to 6. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 5]

| Liquid Crystal Composition 4 | |
|---|---|
| $T_{NI}$ / °C | 74.9 |
| $\Delta n$ | 0.102 |
| $\Delta\varepsilon$ | -2.9 |
| $\eta$ / mPa·s | 21.1 |
| $\gamma_1$ / mPa·s | 116 |
| $\gamma_1 / \Delta n^2 \times 10^{-2}$ | 111 |
| 3-Cy-Cy-2 | 22% |
| 3-Cy-Cy-4 | 11 % |
| 3-Cy-Ph5-O2 | 7% |
| 3-Cy-Ph5-O4 | 8% |
| 2-Cy-Ph-Ph5-O2 | 6% |
| 3-Cy-Ph-Ph5-O2 | 7% |
| 3-Cy-Cy-Ph5-O3 | 7% |
| 4-Cy-Cy-Ph5-O2 | 7% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 8% |
| 3-Cy-Cy-Ph-1 | 2% |

(continued)

| Liquid Crystal Composition 5 | |
|---|---|
| $T_{NI}$ / °C | 80.2 |
| $\Delta n$ | 0.105 |
| $\Delta\varepsilon$ | -2.9 |
| $\eta$ / mPa·s | 22.7 |
| $\gamma_1$ / mPa·s | 124 |
| $\gamma_1 / \Delta n^2 \times 10^{-2}$ | 112 |
| 3-Cy-Cy-2 | 20% |
| 3-Cy-Cy-4 | 10% |
| 3-Cy-Ph5-O2 | 7% |
| 3-Cy-Ph5-O4 | 7% |
| 2-Cy-Ph-Ph5-O2 | 6% |
| 3-Cy-Ph-Ph5-O2 | 7% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 8% |
| 3-Cy-Cy-Ph-1 | 5% |
| Liquid Crystal Composition 6 | |
| $T_{NI}$ / °C | 85.7 |
| $\Delta n$ | 0.104 |
| $\Delta\varepsilon$ | -3.0 |
| $\eta$ / mPa·s | 22.9 |
| $\gamma_1$ / mPa·s | 126 |
| $\gamma_1 / \Delta n^2 \times 10^{-2}$ | 116 |
| 3-Cy-Cy-2 | 20% |
| 3-Cy-Cy-4 | 10% |
| 3-Cy-Ph5-O2 | 7% |
| 3-Cy-Ph5-O4 | 7% |
| 2-Cy-Ph-Ph5-O2 | 6% |
| 3-Gy-Ph-Ph5-O2 | 7% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 5% |

(continued)

| Liquid Crystal Composition 6 | |
|---|---|
| 3-Cy-Cy-Ph-1 | 8% |

[Table 6]

| | Example 4 | Example 5 | Example 6 |
|---|---|---|---|
| VHR | 99.5 | 99.6 | 99.4 |
| ID | 16 | 13 | 22 |
| Image-sticking | A | A | A |

The liquid crystal display devices of Examples 4 to 6 had high VHRs and low IDs. These liquid crystal display devices also exhibited no or only slight and acceptable image-sticking.

Examples 7 to 9

Liquid Crystal Compositions 7 to 9 shown in the following tables were injected as in Example 1 to obtain liquid crystal display devices of Examples 7 to 9. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 7]

| Liquid Crystal Composition 7 | |
|---|---|
| $T_{NI}$ / °C | 75.1 |
| $\Delta n$ | 0.103 |
| $\Delta\varepsilon$ | -2.6 |
| $\eta$ / mPa·s | 20.5 |
| $\gamma_1$ / mPa·s | 117 |
| $\gamma_1 / \Delta n^2 \times 10^{-2}$ | 110 |
| 3-Cy-Cy-2 | 15% |
| 3-Cy-Cy-4 | 12% |
| 3-Cy-Cy-5 | 7% |
| 3-Cy-Ph-O1 | 12% |
| 3-Cy-Ph5-O2 | 6% |
| 3-Cy-Ph5-O4 | 7% |
| 2-Cy-Ph-Ph5-O2 | 11% |
| 3-Cy-Ph-Ph5-O2 | 12% |
| 3-Cy-Cy-Ph5-O3 | 3% |
| 4-Cy-Cy-Ph5-O2 | 4% |
| 5-Cy-Cy-Ph5-O2 | 3% |
| 3-Ph-Ph5-Ph-2 | 4% |
| 4-Ph-Ph5-Ph-2 | 4% |
| Liquid Crystal Composition 8 | |
| $T_{NI}$ / °C | 80.4 |

(continued)

| Liquid Crystal Composition 8 | |
|---|---|
| $\Delta n$ | 0.103 |
| $\Delta\varepsilon$ | -2.6 |
| $\eta$ / mPa·s | 21.6 |
| $\gamma_1$ / mPa·s | 125 |
| $\gamma_1 / \Delta n^2 \times 10^{-2}$ | 117 |
| 3-Cy-Cy-2 | 15% |
| 3-Cy-Cy-4 | 12% |
| 3-Cy-Cy-5 | 7% |
| 3-Cy-Ph-O1 | 12% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 4% |
| 4-Cy-Cy-Ph5-O2 | 6% |
| 5-Cy-Cy-Ph5-O2 | 4% |
| 3-Ph-Ph5-Ph-2 | 4% |
| 4-Ph-Ph5-Ph-2 | 4% |
| Liquid Crystal Composition 9 | |
| $T_{NI}$ / °C | 85.1 |
| $\Delta n$ | 0.103 |
| $\Delta\varepsilon$ | -2.6 |
| $\eta$ / mPa·s | 22.7 |
| $\gamma_1$ / mPa·s | 130 |
| $\gamma_1 / \Delta n^2 \times 10^{-2}$ | 122 |
| 3-Cy-Cy-2 | 10% |
| 3-Cy-Cy-4 | 15% |
| 3-Cy-Cy-5 | 12% |
| 3-Cy-Ph-O1 | 9% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 4% |
| 4-Cy-Cy-Ph5-O2 | 6% |
| 5-Cy-Cy-Ph5-O2 | 4% |
| 3-Ph-Ph5-Ph-2 | 4% |
| 4-Ph-Ph5-Ph-2 | 4% |

[Table 8]

| | Example 7 | Example 8 | Example 9 |
|---|---|---|---|
| VHR | 99.5 | 99.6 | 99.5 |
| ID | 25 | 16 | 21 |
| Image-sticking | A | A | A |

The liquid crystal display devices of Examples 7 to 9 had high VHRs and low IDs. These liquid crystal display devices also exhibited no or only slight and acceptable image-sticking.

Examples 10 to 12

Liquid Crystal Compositions 10 to 12 shown in the following tables were injected as in Example 1 to obtain liquid crystal display devices of Examples 10 to 12. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 9]

| Liquid Crystal Composition 10 | |
|---|---|
| $T_{NI}$ / °C | 76.7 |
| $\Delta n$ | 0.109 |
| $\Delta E$ | -3.0 |
| $\eta$ / mPa·s | 22.4 |
| $\gamma_1$ / mPa·s | 131 |
| $\gamma_1 / \Delta n^2 \times 10^{-2}$ | 110 |
| 3-Cy-Cy-2 | 24% |
| 3-Cy-Cy-4 | 6% |
| 3-Cy-Ph-O1 | 5% |
| 3-Cy-Ph5-O4 | 6% |
| 3-Ph-Ph5-O2 | 6% |
| 2-Cy-Ph-Ph5-O2 | 8% |
| 3-Cy-Ph-Ph5-O2 | 8% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 6% |
| Liquid Crystal Composition 11 | |
| $T_{NI}$ / °C | 80.3 |
| $\Delta n$ | 0.105 |
| $\Delta \varepsilon$ | -3.1 |
| $\eta$ / mPa·s | 21.8 |

(continued)

| Liquid Crystal Composition 11 | |
|---|---|
| $\gamma_1$ / mPa·s | 126 |
| $\gamma_1 / \Delta n^2 \times 10^{-2}$ | 114 |
| 3-Cy-Cy-2 | 24% |
| 3-Cy-Cy-4 | 10% |
| 3-Cy-Ph-O1 | 4% |
| 3-Cy-Ph5-O4 | 6% |
| 3-Ph-Ph5-O2 | 6% |
| 2-Cy-Ph-Ph5-O2 | 8% |
| 3-Cy-Ph-Ph5-O2 | 8% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 3% |
| Liquid Crystal Composition 12 | |
| $T_{NI}$ / °C | 85.8 |
| $\Delta n$ | 0.104 |
| $\Delta\varepsilon$ | -3.2 |
| $\eta$ / mPa·s | 22.0 |
| $y_1$ / mPa·s | 128 |
| $\gamma_1 / \Delta n^2 \times 10^{-2}$ | 119 |
| 3-Cy-Cy-2 | 24% |
| 3-Cy-Cy-4 | 10% |
| 3-Cy-Ph-O1 | 4% |
| 3-Cy-Ph5-O4 | 6% |
| 3-Ph-Ph5-O2 | 6% |
| 2-Cy-Ph-Ph5-O2 | 8% |
| 3-Cy-Ph-Ph5-O2 | 8% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 3-Cy-Cy-Ph-1 | 3% |

[Table 10]

| | Example 10 | Example 11 | Example 12 |
|---|---|---|---|
| VHR | 99.5 | 99.7 | 99.8 |
| ID | 21 | 18 | 12 |
| Image-sticking | A | A | A |

The liquid crystal display devices of Examples 10 to 12 had high VHRs and low IDs. These liquid crystal display devices also exhibited no or only slight and acceptable image-sticking.

Examples 13 to 15

Liquid Crystal Compositions 13 to 15 shown in the following tables were injected as in Example 1 to obtain liquid crystal display devices of Examples 13 to 15. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 11]

| Liquid Crystal Composition 13 | |
|---|---|
| $T_{NI}$ / °C | 71.9 |
| $\Delta n$ | 0.116 |
| $\Delta s$ | -3.6 |
| $\eta$ / mPa·s | 21.2 |
| $\gamma_1$ / mPa·s | 123 |
| $\gamma_1 / \Delta n^2 \times 10^{-2}$ | 92 |
| 3-Cy-Cy-2 | 24% |
| 3-Cy-Ph-O1 | 7% |
| 2-Cy-Ph5-O2 | 6% |
| 3-Cy-Ph5-O4 | 6% |
| 3-Ph-Ph5-O2 | 5% |
| 5-Ph-Ph5-O2 | 5% |
| 2-Cy-Ph-Ph5-O2 | 7% |
| 3-Cy-Ph-Ph5-O2 | 9% |
| 3-Cy-Cy-Ph5-O3 | 5% |
| 4-Cy-Cy-Ph5-O2 | 5% |
| 5-Cy-Cy-Ph5-O2 | 4% |
| 3-Ph-Ph5-Ph-2 | 5% |
| 4-Ph-Ph5-Ph-2 | 6% |
| 3-Cy-Cy-Ph-1 | 6% |
| Liquid Crystal Composition 14 | |
| $T_{NI}$ / °C | 78.8 |
| $\Delta n$ | 0.113 |
| $\Delta \varepsilon$ | -3.5 |
| $\eta$ / mPa·s | 21.1 |

(continued)

| Liquid Crystal Composition 14 | |
|---|---|
| $\gamma_1$ / mPa·s | 122 |
| $\gamma_1 / \Delta n^2 \times 10^{-2}$ | 95 |
| 3-Cy-Cy-2 | 23% |
| 3-Cy-Cy-4 | 5% |
| 3-Cy-Ph-O1 | 3% |
| 2-Cy-Ph5-O2 | 5% |
| 3-Cy-Ph5-O4 | 5% |
| 3-Ph-Ph5-O2 | 5% |
| 5-Ph-Ph5-O2 | 5% |
| 2-Cy-Ph-Ph5-O2 | 7% |
| 3-Cy-Ph-Ph5-O2 | 7% |
| 3-Cy-Cy-Ph5-O3 | 5% |
| 4-Cy-Cy-Ph5-O2 | 6% |
| 5-Cy-Cy-Ph5-O2 | 5% |
| 3-Ph-Ph5-Ph-2 | 5% |
| 4-Ph-Ph5-Ph-2 | 6% |
| 3-Cy-Cy-Ph-1 | 8% |
| Liquid Crystal Composition 15 | |
| $T_{NI}$ /°C | 73.8 |
| $\Delta n$ | 0.113 |
| $\Delta\varepsilon$ | -3.9 |
| $\eta$ / mPa·s | 21.8 |
| $\gamma_1$ / mPa·s | 123 |
| $\gamma_1 / \Delta n^2 \times 10^{-2}$ | 97 |
| 3-Cy-Cy-2 | 16% |
| 3-Cy-Cy-4 | 9% |
| 3-Cy-Ph-O1 | 6% |
| 2-Cy-Ph5-O2 | 6% |
| 3-Cy-Ph5-O4 | 6% |
| 3-Ph-Ph5-O2 | 6% |
| 5-Ph-Ph5-O2 | 6% |
| 2-Cy-Ph-Ph5-O2 | 5% |
| 3-Cy-Ph-Ph5-O2 | 7% |
| 3-Cy-Cy-Ph5-O3 | 5% |
| 4-Cy-Cy-Ph5-O2 | 6% |
| 5-Cy-Cy-Ph5-O2 | 6% |
| 3-Ph-Ph5-Ph-2 | 5% |
| 4-Ph-Ph5-Ph-2 | 5% |

(continued)

| Liquid Crystal Composition 15 | |
|---|---|
| 3-Cy-Cy-Ph-1 | 6% |

[Table 12]

| | Example 13 | Example 14 | Example 15 |
|---|---|---|---|
| VHR | 99.6 | 99.5 | 99.4 |
| ID | 21 | 22 | 28 |
| Image-sticking | A | A | A |

The liquid crystal display devices of Examples 13 to 15 had high VHRs and low IDs. These liquid crystal display devices also exhibited no or only slight and acceptable image-sticking.

Examples 16 to 18

Liquid Crystal Compositions 16 to 18 shown in the following tables were injected as in Example 1 to obtain liquid crystal display devices of Examples 16 to 18. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 13]

| Liquid Crystal Composition 16 | |
|---|---|
| $T_{NI}$ / °C | 75.9 |
| $\Delta n$ | 0.112 |
| $\Delta\varepsilon$ | -2.8 |
| $\eta$ / mPa·s | 19.8 |
| $\gamma_1$ / mPa·s | 121 |
| $\gamma_1 / \Delta n^2 \times 10^{-2}$ | 96 |
| 3-Cy-Cy-2 | 19% |
| 3-Cy-Cy-4 | 12% |
| 3-Cy-Cy-5 | 5% |
| 3-Cy-Ph-O1 | 5% |
| 2-Cy-Ph5-O2 | 4% |
| 3-Cy-Ph5-O4 | 4% |
| 3-Ph-Ph5-O2 | 3% |
| 5-Ph-Ph5-O2 | 4% |
| 2-Cy-Ph-Ph5-O2 | 6% |
| 3-Cy-Ph-Ph5-O2 | 6% |
| 3-Cy-Cy-Ph5-O3 | 5% |
| 4-Cy-Cy-Ph5-O2 | 5% |
| 5-Cy-Cy-Ph5-O2 | 5% |
| 3-Ph-Ph5-Ph-2 | 8% |

(continued)

| Liquid Crystal Composition 16 | |
|---|---|
| 4-Ph-Ph5-Ph-2 | 9% |
| Liquid Crystal Composition 17 | |
| $T_{NI}$ / °C | 82.3 |
| $\Delta n$ | 0.111 |
| $\Delta\varepsilon$ | -2.7 |
| $\eta$ / mPa·s | 19.2 |
| $\gamma_1$ / mPa·s | 114 |
| $\gamma_1 / \Delta n^2 \times 10^{-2}$ | 94 |
| 3-Cy-Cy-2 | 21% |
| 3-Cy-Cy-4 | 12% |
| 3-Cy-Cy-5 | 5% |
| 2-Cy-Ph5-O2 | 4% |
| 3-Cy-Ph5-O4 | 4% |
| 3-Ph-Ph5-O2 | 3% |
| 5-Ph-Ph5-O2 | 4% |
| 2-Cy-Ph-Ph5-O2 | 6% |
| 3-Cy-Ph-Ph5-O2 | 6% |
| 3-Cy-Cy-Ph5-O3 | 5% |
| 4-Cy-Cy-Ph5-O2 | 5% |
| 5-Cy-Cy-Ph5-O2 | 4% |
| 3-Ph-Ph5-Ph-2 | 7% |
| 4-Ph-Ph5-Ph-2 | 8% |
| 3-Cy-Cy-Ph-1 | 6% |
| Liquid Crystal Composition 18 | |
| $T_{NI}$ / °C | 85.7 |
| $\Delta n$ | 0.112 |
| $\Delta\varepsilon$ | -2.8 |
| $\eta$ / mPa·s | 20.1 |
| $\gamma_1$ / mPa·s | 119 |
| $\gamma_1 / \Delta n^2 \times 10^{-2}$ | 95 |
| 3-Cy-Cy-2 | 19% |
| 3-Cy-Cy-4 | 12% |
| 3-Cy-Cy-5 | 4% |
| 2-Cy-Ph5-O2 | 4% |
| 3-Cy-Ph5-O4 | 4% |
| 3-Ph-Ph5-O2 | 3% |
| 5-Ph-Ph5-O2 | 4% |
| 2-Cy-Ph-Ph5-O2 | 6% |

(continued)

| Liquid Crystal Composition 18 | |
|---|---|
| 3-Cy-Ph-Ph5-O2 | 6% |
| 3-Cy-Cy-Ph5-O3 | 5% |
| 4-Cy-Cy-Ph5-O2 | 5% |
| 5-Cy-Cy-Ph5-O2 | 4% |
| 3-Ph-Ph5-Ph-2 | 7% |
| 4-Ph-Ph5-Ph-2 | 8% |
| 3-Cy-Cy-Ph-1 | 9% |

[Table 14]

| | Example 16 | Example 17 | Example 18 |
|---|---|---|---|
| VHR | 99.5 | 99.4 | 99.5 |
| ID | 30 | 32 | 24 |
| Image-sticking | A | A | A |

The liquid crystal display devices of Examples 16 to 18 had high VHRs and low IDs. These liquid crystal display devices also exhibited no or only slight and acceptable image-sticking.

Examples 19 to 21

Liquid Crystal Compositions 19 to 21 shown in the following tables were injected as in Example 1 to obtain liquid crystal display devices of Examples 19 to 21. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 15]

| Liquid Crystal Composition 19 | |
|---|---|
| $T_{NI}$ / °C | 77.1 |
| $\Delta n$ | 0.104 |
| $\Delta\varepsilon$ | -3.5 |
| $\eta$ / mPa·s | 25.1 |
| $\gamma_1$ / mPa·s | 141 |
| $\gamma_1 / \Delta n^2 \times 10^{-2} \times 10^{-2}$ | 131 |
| 3-Cy-Cy-2 | 22% |
| 3-Cy-Ph-O1 | 14% |
| 2-Cy-Ph5-O2 | 7% |
| 3-Cy-Ph5-O4 | 8% |
| 2-Cy-Ph-Ph5-O2 | 7% |
| 3-Cy-Ph-Ph5-O2 | 9% |
| 3-Cy-Cy-Ph5-O3 | 8% |
| 4-Cy-Cy-Ph5-O2 | 8% |

(continued)

| Liquid Crystal Composition 19 | |
|---|---|
| 5-Cy-Cy-Ph5-O2 | 8% |
| 3-Ph-Ph5-Ph-2 | 5% |
| 4-Ph-Ph5-Ph-2 | 4% |
| Liquid Crystal Composition 20 | |
| $T_{NI}$ / °C | 82.7 |
| $\Delta n$ | 0.107 |
| $\Delta\varepsilon$ | -3.0 |
| $\eta$ / mPa·s | 24.2 |
| $\gamma_1$ / mPa·s | 141 |
| $\gamma_1 / \Delta n^2 \times 10^{-2}$ | 123 |
| 3-Cy-Cy-2 | 24% |
| 3-Cy-Cy-4 | 5% |
| 3-Cy-Ph-O1 | 6% |
| 2-Cy-Ph5-O2 | 5% |
| 3-Cy-Ph5-O4 | 5% |
| 2-Cy-Ph-Ph5-O2 | 7% |
| 3-Cy-Ph-Ph5-O2 | 9% |
| 3-Cy-Cy-Ph5-O3 | 8% |
| 4-Cy-Cy-Ph5-O2 | 8% |
| 5-Cy-Cy-Ph5-O2 | 8% |
| 3-Ph-Ph5-Ph-2 | 5% |
| 4-Ph-Ph5-Ph-2 | 5% |
| 5-Ph-Ph-1 | 5% |
| Liquid Crystal Composition 21 | |
| $T_{NI}$ / °C | 86.4 |
| $\Delta n$ | 0.106 |
| $\Delta\varepsilon$ | -3.0 |
| $\eta$ / mPa· s | 24.4 |
| $\gamma_1$ / mPa·s | 142 |
| $\gamma_1 / \Delta n^2 \times 10^{-2}$ | 126 |
| 3-Cy-Cy-2 | 24% |
| 3-Cy-Cy-4 | 5% |
| 3-Cy-Ph-O1 | 6% |
| 2-Cy-Ph5-O2 | 5% |
| 3-Cy-Ph5-O4 | 5% |
| 2-Cy-Ph-Ph5-O2 | 7% |
| 3-Cy-Ph-Ph5-O2 | 9% |
| 3-Cy-Cy-Ph5-O3 | 8% |

(continued)

| Liquid Crystal Composition 21 | |
|---|---|
| 4-Cy-Cy-Ph5-O2 | 8% |
| 5-Cy-Cy-Ph5-O2 | 8% |
| 3-Ph-Ph5-Ph-2 | 5% |
| 4-Ph-Ph5-Ph-2 | 5% |
| 5-Ph-Ph-1 | 3% |
| 3-Cy-Cy-Ph-1 | 2% |

[Table 16]

| | Example 19 | Example 20 | Example 21 |
|---|---|---|---|
| VHR | 99.6 | 99.7 | 99.5 |
| ID | 19 | 16 | 26 |
| Image-sticking | A | A | A |

The liquid crystal display devices of Examples 19 to 21 had high VHRs and low IDs. These liquid crystal display devices also exhibited no or only slight and acceptable image-sticking.

Examples 22 to 24

Liquid Crystal Compositions 22 to 24 shown in the following tables were injected as in Example 1 to obtain liquid crystal display devices of Examples 22 to 24. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 17]

| Liquid Crystal Composition 22 | |
|---|---|
| $T_{NI}$ / °C | 75.5 |
| $\Delta n$ | 0.102 |
| $\Delta\varepsilon$ | -2.8 |
| $\eta$ / mPa·s | 22.2 |
| $\gamma_1$ / mPa·s | 121 |
| $\gamma_1 / \Delta n^2 \times 10^{-2}$ | 117 |
| 3-Cy-Cy-2 | 14% |
| 3-Cy-Cy-4 | 12% |
| 3-Cy-Cy-5 | 5% |
| 3-Cy-Ph-O1 | 7% |
| 2-Cy-Ph5-O2 | 7% |
| 3-Cy-Ph5-O4 | 7% |
| 2-Cy-Ph-Ph5-O2 | 8% |
| 3-Cy-Ph-Ph5-O2 | 8% |
| 3-Cy-Cy-Ph5-O3 | 6% |

(continued)

| Liquid Crystal Composition 22 | |
|---|---|
| 4-Cy-Cy-Ph5-O2 | 7% |
| 5-Cy-Cy-Ph5-02 | 6% |
| 3-Ph-Ph5-Ph-2 | 3% |
| 4-Ph-Ph5-Ph-2 | 3% |
| 5-Ph-Ph-1 | 6% |
| 3-Cy-Cy-Ph-1 | 1 % |
| Liquid Crystal Composition 23 | |
| $T_{NI}$ / °C | 80.3 |
| $\Delta n$ | 0.101 |
| $\Delta\varepsilon$ | -2.9 |
| $\eta$ / mPa·s | 22.0 |
| $\gamma_1$ / mPa·s | 118 |
| $y_1 / \Delta n^2 \times 10^{-2}$ | 117 |
| 3-Cy-Cy-2 | 17% |
| 3-Cy-Cy-4 | 12% |
| 3-Cy-Cy-5 | 5% |
| 3-Cy-Ph-O1 | 6% |
| 2-Cy-Ph5-O2 | 12% |
| 2-Cy-Ph-Ph5-O2 | 9% |
| 3-Cy-Ph-Ph5-O2 | 9% |
| 3-Cy-Cy-Ph5-O3 | 6% |
| 4-Cy-Cy-Ph5-O2 | 8% |
| 5-Cy-Cy-Ph5-O2 | 6% |
| 3-Ph-Ph5-Ph-2 | 3% |
| 4-Ph-Ph5-Ph-2 | 3% |
| 5-Ph-Ph-1 | 4% |
| Liquid Crystal Composition 24 | |
| 80.3 | 85.0 |
| $\Delta n$ | 0.102 |
| $\Delta\varepsilon$ | -3.0 |
| $\eta$ / mPa·s | 22.7 |
| $\gamma_1$ / mPa·s | 122 |
| $\gamma_1 / \Delta n^2 \times 10^{-2}$ | 118 |
| 3-Cy-Cy-2 | 16% |
| 3-Cy-Cy-4 | 12% |
| 3-Cy-Cy-5 | 5% |
| 3-Cy-Ph-O1 | 5% |
| 2-Cy-Ph5-O2 | 12% |

(continued)

| Liquid Crystal Composition 24 | |
|---|---|
| 2-Cy-Ph-Ph5-O2 | 9% |
| 3-Cy-Ph-Ph5-O2 | 9% |
| 3-Cy-Cy-Ph5-O3 | 6% |
| 4-Cy-Cy-Ph5-O2 | 8% |
| 5-Cy-Cy-Ph5-O2 | 6% |
| 3-Ph-Ph5-Ph-2 | 3% |
| 4-Ph-Ph5-Ph-2 | 3% |
| 5-Ph-Ph-1 | 3% |
| 3-Cy-Cy-Ph-1 | 3% |

[Table 18]

| | Example 22 | Example 23 | Example 24 |
|---|---|---|---|
| VHR | 99.5 | 99.5 | 99.8 |
| ID | 27 | 34 | 12 |
| Image-sticking | A | A | A |

The liquid crystal display devices of Examples 22 to 24 had high VHRs and low IDs. These liquid crystal display devices also exhibited no or only slight and acceptable image-sticking.

Examples 25 to 27

Liquid Crystal Compositions 25 to 27 shown in the following tables were injected as in Example 1 to obtain liquid crystal display devices of Examples 25 to 27. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 19]

| Liquid Crystal Composition 25 | |
|---|---|
| $T_{NI}$ / °C | 75.6 |
| $\Delta n$ | 0.104 |
| $\Delta\varepsilon$ | -2.8 |
| $\eta$ / mPa·s | 20.2 |
| $\gamma_1$ / mPa·s | 117 |
| $\gamma_1 / \Delta n^2 \times 10^{-2}$ | 107 |
| 3-Cy-Cy-2 | 25% |
| 3-Cy-Cy-4 | 10% |
| 3-Cy-Ph-O1 | 4% |
| 2-Cy-Ph5-O2 | 7% |
| 3-Cy-Ph5-O4 | 8% |
| 2-Cy-Ph-Ph5-O2 | 5% |

(continued)

| Liquid Crystal Composition 25 | |
|---|---|
| 3-Cy-Ph-Ph5-O2 | 6% |
| 3-Cy-Cy-Ph5-O3 | 6% |
| 4-Cy-Cy-Ph5-O2 | 7% |
| 5-Cy-Cy-Ph5-O2 | 6% |
| 3-Ph-Ph5-Ph-2 | 8% |
| 4-Ph-Ph5-Ph-2 | 8% |
| Liquid Crystal Composition 26 | |
| $T_{NI}$ / °C | 81.1 |
| $\Delta n$ | 0.105 |
| $\Delta\varepsilon$ | -2.8 |
| $\eta$ / mPa·s | 20.8 |
| $\gamma_1$ / mPa·s | 119 |
| $\gamma_1 / \Delta n^2 \times 10^2$ | 107 |
| 3-Cy-Cy-2 | 25% |
| 3-Cy-Cy-4 | 10% |
| 3-Cy-Ph-O1 | 4% |
| 2-Cy-Ph5-O2 | 12% |
| 2-Cy-Ph-Ph5-O2 | 5% |
| 3-Cy-Ph-Ph5-O2 | 6% |
| 3-Cy-Cy-Ph5-O3 | 7% |
| 4-Cy-Cy-Ph5-O2 | 8% |
| 5-Cy-Cy-Ph5-O2 | 7% |
| 3-Ph-Ph5-Ph-2 | 8% |
| 4-Ph-Ph5-Ph-2 | 8% |
| Liquid Crystal Composition 27 | |
| $T_{NI}$ / °C | 85.7 |
| $\Delta n$ | 0.105 |
| $\Delta\varepsilon$ | -2.9 |
| $\eta$ / mPa·s | 21.0 |
| $\gamma_1$ / mPa·s | 92 |
| $\gamma_1 / \Delta n^2 \times 10^{-2}$ | 82 |
| 3-Cy-Cy-2 | 25% |
| 3-Cy-Cy-4 | 12% |
| 2-Cy-Ph5-O2 | 12% |
| 2-Cy-Ph-Ph5-O2 | 5% |
| 3-Cy-Ph-Ph5-O2 | 6% |
| 3-Cy-Cy-Ph5-O3 | 7% |
| 4-Cy-Cy-Ph5-O2 | 8% |

(continued)

| Liquid Crystal Composition 27 | |
|---|---|
| 5-Cy-Cy-Ph5-O2 | 7% |
| 3-Ph-Ph5-Ph-2 | 8% |
| 4-Ph-Ph5-Ph-2 | 8% |
| 3-Cy-Cy-Ph-1 | 2% |

[Table 20]

| | Example 25 | Example 26 | Example 27 |
|---|---|---|---|
| VHR | 99.8 | 99.6 | 99.6 |
| ID | 14 | 19 | 21 |
| Image-sticking | A | A | A |

The liquid crystal display devices of Examples 25 to 27 had high VHRs and low IDs. These liquid crystal display devices also exhibited no or only slight and acceptable image-sticking.

Example 28

Liquid Crystal Composition 1 was mixed with 0.3% by mass of 4-{2-[4-(2-acryloyloxy-ethyl)-phenoxycarbonyl]-ethyl}-biphenyl-4'-yl 2-methyl-acrylate to obtain Liquid Crystal Composition 28. Liquid Crystal Composition 28 was injected into a VA cell as used in Example 1 and was polymerized by exposing the liquid crystal composition to ultraviolet radiation for 600 seconds (3.0 J/$cm^2$) while applying a drive voltage across the electrodes to obtain a liquid crystal display device of Example 28. The resulting liquid crystal display device was tested for VHR and ID and was evaluated for image-sticking. The following table summarizes the composition and physical properties of the liquid crystal composition, the VHR and ID of the liquid crystal display device, and the results of the image-sticking evaluation.

[Table 21]

| | Example 28 |
|---|---|
| VHR | 99.4 |
| ID | 30 |
| Image-sticking | A |

The liquid crystal display device of Example 28 had a high VHR and a low ID. The liquid crystal display device also exhibited no or only slight and acceptable image-sticking.

Example 29

Liquid Crystal Composition 13 was mixed with 0.3% by mass of biphenyl-4,4'-diyl bismethacrylate to obtain Liquid Crystal Composition 29. Liquid Crystal Composition 29 was injected into a VA cell as used in Example 1 and was polymerized by exposing the liquid crystal composition to ultraviolet radiation for 600 seconds (3.0 J/$cm^2$) while applying a drive voltage across the electrodes to obtain a liquid crystal display device of Example 29. The resulting liquid crystal display device was tested for VHR and ID and was evaluated for image-sticking. The following table summarizes the composition and physical properties of the liquid crystal composition, the VHR and ID of the liquid crystal display device, and the results of the image-sticking evaluation.

[Table 22]

| | Example 29 |
|---|---|
| VHR | 99.5 |

(continued)

| | Example 29 |
|---|---|
| ID | 28 |
| Image-sticking | A |

The liquid crystal display device of Example 29 had a high VHR and a low ID. The liquid crystal display device also exhibited no or only slight and acceptable image-sticking.

Example 30

Liquid Crystal Composition 19 was mixed with 0.3% by mass of 3-fluorobiphenyl-4,4'-diyl bismethacrylate to obtain Liquid Crystal Composition 30. Liquid Crystal Composition 30 was injected into a VA cell as used in Example 1 and was polymerized by exposing the liquid crystal composition to ultraviolet radiation for 600 seconds (3.0 J/$cm^2$) while applying a drive voltage across the electrodes to obtain a liquid crystal display device of Example 30. The resulting liquid crystal display device was tested for VHR and ID and was evaluated for image-sticking. The following table summarizes the composition and physical properties of the liquid crystal composition, the VHR and ID of the liquid crystal display device, and the results of the image-sticking evaluation.

[Table 23]

| | Example 30 |
|---|---|
| VHR | 99.5 |
| ID | 22 |
| Image-sticking | A |

The liquid crystal display device of Example 30 had a high VHR and a low ID. The liquid crystal display device also exhibited no or only slight and acceptable image-sticking.

Examples 31 to 33

Liquid Crystal Compositions 31 to 33 shown in the following tables were injected as in Example 1 to obtain liquid crystal display devices of Examples 31 to 33. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 24]

Liquid Crystal Composition 31

| | |
|---|---|
| $T_{NI}$ / °C | 75.5 |
| Δn | 0.104 |
| Δε | -2.88 |
| η / mPa·s | 22.5 |
| $γ_1$ / mPa·s | 123 |
| $γ_1 / Δn^2 × 10^{-2}$ | 114 |
| 3-Cy-Cy-2 | 24% |
| 3-Cy-Cy-4 | 4% |
| 3-Cy-Ph5-O2 | 7% |
| 3-Cy-Ph5-O4 | 8% |
| 2-Cy-Ph-Ph5-O2 | 4% |
| 3-Cy-Ph-Ph5-O2 | 5% |
| 3-Cy-Cy-Ph5-O3 | 8% |
| 4-Cy-Cy-Ph5-O2 | 10% |
| 5-Cy-Cy-Ph5-O2 | 8% |
| 3-Ph-Ph5-Ph-2 | 4% |
| 4-Ph-Ph5-Ph-2 | 4% |
| 5-Ph-Ph-1 | 10% |
| 3-Cy-Cy-Ph-1 | 4% |

Liquid Crystal Composition 32

| | |
|---|---|
| $T_{NI}$ / °C | 80.7 |
| Δn | 0.104 |
| Δε | -2.88 |
| η / mPa·s | 22.3 |
| $γ_1$ / mPa·s | 122 |
| $γ_1 / Δn^2 × 10^{-2}$ | 113 |
| 3-Cy-Cy-2 | 24% |
| 3-Cy-Cy-4 | 4% |
| 3-Cy-Ph5-O2 | 7% |
| 3-Cy-Ph5-O4 | 8% |
| 2-Cy-Ph-Ph5-O2 | 5% |
| 3-Cy-Ph-Ph5-O2 | 6% |
| 3-Cy-Cy-Ph5-O3 | 7% |
| 4-Cy-Cy-Ph5-O2 | 9% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 7% |
| 3-Cy-Cy-Ph-1 | 8% |

Liquid Crystal Composition 33

| | |
|---|---|
| $T_{NI}$ / °C | 85.8 |
| Δn | 0.104 |
| Δε | -2.95 |
| η / mPa·s | 22.4 |
| $γ_1$ / mPa·s | 124 |
| $γ_1 / Δn^2 × 10^{-2}$ | 114 |
| 3-Cy-Cy-2 | 24% |
| 3-Cy-Cy-4 | 4% |
| 3-Cy-Ph5-O2 | 7% |
| 3-Cy-Ph5-O4 | 8% |
| 2-Cy-Ph-Ph5-O2 | 6% |
| 3-Cy-Ph-Ph5-O2 | 7% |
| 3-Cy-Cy-Ph5-O3 | 7% |
| 4-Cy-Cy-Ph5-O2 | 7% |
| 5-Cy-Cy-Ph5-O2 | 7% |
| 3-Ph-Ph5-Ph-2 | 4% |
| 4-Ph-Ph5-Ph-2 | 4% |
| 5-Ph-Ph-1 | 4% |
| 3-Cy-Cy-Ph-1 | 11% |

[Table 25]

| | Example 31 | Example 32 | Example 33 |
|---|---|---|---|
| VHR | 98.3 | 98.4 | 98.5 |
| ID | 74 | 68 | 70 |
| Image-sticking | B | B | B |

Although the liquid crystal display devices of Examples 31 to 33 had high IDs, they exhibited only slight and acceptable image-sticking.

Examples 34 to 36

Liquid Crystal Compositions 34 to 36 shown in the following tables were injected as in Example 1 to obtain liquid crystal display devices of Examples 34 to 36. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 26]

| Liquid Crystal Composition 34 | |
|---|---|
| $T_{NI}$ / °C | 73.6 |
| Δn | 0.099 |
| Δε | -2.15 |

(continued)

| Liquid Crystal Composition 34 | |
|---|---|
| η / mPa·s | 17.7 |
| $\gamma_1$ / mPa·s | 104 |
| $\gamma_1/\Delta n^2 \times 10^{-2}$ | 106 |
| 3-Cy-Cy-2 | 20% |
| 3-Cy-Cy-4 | 12% |
| 3-Cy-Cy-5 | 7% |
| 3-Cy-Ph-O1 | 12% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 3% |
| 4-Cy-Cy-Ph5-O2 | 3% |
| 5-Cy-Cy-Ph5-O2 | 3% |
| 3-Ph-Ph5-Ph-2 | 4% |
| 4-Ph-Ph5-Ph-2 | 4% |
| Liquid Crystal Composition 35 | |
| $T_{NI}$ / °C | 80.9 |
| Δn | 0.094 |
| Δε | -2.16 |
| η / mP·s | 17.0 |
| $\gamma_1$ / mPa·s | 97 |
| $\gamma_1 / \Delta n^2 \times 10^{-2}$ | 109 |
| 3-Cy-Cy-2 | 24% |
| 3-Cy-Cy-4 | 12% |
| 3-Cy-Cy-5 | 15% |
| 3-Cy-Ph5-O2 | 5% |
| 3-Cy-Ph5-O4 | 5% |
| 2-Cy-Ph-Ph5-O2 | 11% |
| 3-Cy-Ph-Ph5-O2 | 11% |
| 3-Cy-Cy-Ph5-O3 | 3% |
| 4-Cy-Cy-Ph5-O2 | 3% |
| 6-Cy-Cy-Ph5-O2 | 3% |
| 3-Ph-Ph5-Ph-2 | 4% |
| 4-Ph-Ph5-Ph-2 | 4% |
| Liquid Crystal Composition 36 | |
| $T_{NI}$ / °C | 84.7 |
| Δn | 0.086 |

(continued)

| Liquid Crystal Composition 36 | |
|---|---|
| $\Delta\varepsilon$ | -2.13 |
| $\eta$ / mPa·s | 17.5 |
| $\gamma_1$ / mPa·s | 98 |
| $\gamma_1 / \Delta n^2 \times 10^{-2}$ | 136 |
| 3-Cy-Cy-2 | 21% |
| 3-Cy-Cy-4 | 15% |
| 3-Cy-Cy-5 | 15% |
| 3-Cy-Ph5-O2 | 5% |
| 3-Cy-Ph5-O4 | 5% |
| 2-Cy-Ph-Ph5-O2 | 4% |
| 3-Cy-Ph-Ph5-O2 | 6% |
| 3-Cy-Cy-Ph5-O3 | 7% |
| 4-Cy-Cy-Ph5-O2 | 8% |
| 6-Cy-Cy-Ph5-O2 | 7% |
| 3-Ph-Ph5-Ph-2 | 4% |
| 4-Ph-Ph5-Ph-2 | 4% |

[Table 27]

| | Example 34 | Example 35 | Example 36 |
|---|---|---|---|
| VHR | 98.5 | 98.5 | 98.4 |
| ID | 80 | 72 | 71 |
| Image-sticking | B | B | B |

Although the liquid crystal display devices of Examples 34 to 36 had high IDs, they exhibited only slight and acceptable image-sticking.

Examples 37 and 38

Liquid Crystal Compositions 37 and 38 shown in the following tables were injected as in Example 1 to obtain liquid crystal display devices of Examples 37 and 38. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 28]

Liquid Crystal Composition 37

| | |
|---|---|
| $T_{NI}$ / °C | 62.2 |
| Δn | 0.087 |
| Δε | -4.1 |
| η / mPa·s | 21.3 |
| $\gamma_1$ / mPa·s | 97 |
| $\gamma_1 / \Delta n^2 \times 10^{-2}$ | 129 |
| 3-Cy-Cy-2 | 12% |
| 3-Cy-Cy-4 | 12% |
| 3-Cy-Cy-5 | 5% |
| 3-Cy-Ph-O1 | 8% |
| 2-Cy-Ph5-O2 | 16% |
| 3-Cy-Ph5-O4 | 16% |
| 2-Cy-Ph-Ph5-O2 | 7% |
| 3-Cy-Ph-Ph5-O2 | 8% |
| 3-Cy-Cy-Ph5-O3 | 5% |
| 4-Cy-Cy-Ph5-O2 | 5% |
| 5-Cy-Cy-Ph5-O2 | 5% |
| 3-Cy-Cy-Ph-1 | 3% |

Liquid Crystal Composition 38

| | |
|---|---|
| $T_{NI}$ / °C | 72.4 |
| Δn | 0.088 |
| Δε | -4.2 |
| η / mPa·s | 23.8 |
| $\gamma_1$ / mPa·s | 106 |
| $\gamma_1 / \Delta n^2 \times 10^{-2}$ | 138 |
| 3-Cy-Cy-4 | 20% |
| 3-Cy-Cy-5 | 15% |
| 2-Cy-Ph5-O2 | 16% |
| 3-Cy-Ph5-O4 | 16% |
| 2-Cy-Ph-Ph5-O2 | 7% |
| 3-Cy-Ph-Ph5-O2 | 8% |
| 3-Cy-Cy-Ph5-O3 | 5% |
| 4-Cy-Cy-Ph5-O2 | 5% |
| 5-Cy-Cy-Ph5-O2 | 5% |
| 3-Cy-Cy-Ph-1 | 3% |

[Table 29]

| | Example 37 | Example 38 |
|---|---|---|
| VHR | 98.3 | 98.4 |
| ID | 85 | 81 |
| Image-sticking | B | B |

Although the liquid crystal display devices of Examples 37 and 38 had high IDs, they exhibited only slight and acceptable image-sticking.

Examples 39 to 41

Liquid Crystal Compositions 39 to 41 shown in the following tables were injected as in Example 1 to obtain liquid crystal display devices of Examples 39 to 41. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 30]

| Liquid Crystal Composition 39 | |
|---|---|
| $T_{NI}$/°C | 74.9 |
| Δn | 0.103 |
| Δε | -2.34 |

(continued)

| Liquid Crystal Composition 39 | |
|---|---|
| η/mPa·s | 18.4 |
| $\gamma_1$/mPa·s | 106 |
| $\gamma_1/\Delta n^2 \times 10^{-2}$ | 99 |
| 3-Cy-Cy-2 | 20% |
| 3-Cy-Cy-4 | 12% |
| 3-Cy-Cy-5 | 5% |
| 3-Cy-Rh-O1 | 5% |
| 2-Cy-Ph5-O2 | 7% |
| 3-Cy-Ph5-O4 | 8% |
| 2-Cy-Ph-Ph5-O2 | 6% |
| 3-Cy-Ph-Ph5-O2 | 6% |
| 3-Cy-Cy-Fh5-O3 | 4% |
| 4-Cy-Cy-Ph5-O2 | |
| 5-Cy-Cy-Ph5-O2 | 4% |
| 3-Ph-Ph5-Ph-2 | 7% |
| 4-Ph-Ph5-Ph-2 | 8% |
| 3-Cy-Cy-Ph-1 | 4% |
| Liquid Crystal Composition 40 | |
| $T_{NI}$/°C | 79.6 |
| Δn | 0.104 |
| Δε | -2.39 |
| η/mPa·s | 18.9 |
| $\gamma_1$/mPa·s | 108 |
| $\gamma_1/\Delta n^2 \times 10^{-2}$ | 99 |
| 3-Cy-Cy-2 | 20% |
| 3-Cy-Cy-4 | 12% |
| 3-Cy-Cy-5 | 5% |
| 3-Cy-Ph-O1 | 2% |
| 2-Cy-Ph5-O2 | 7%. |
| 3-Cy-PH5-O4 | 8% |
| 2-Cy-Ph-Ph5-O2 | 6% |
| 2-Cy-Ph-Ph5-O2 | 6% |
| 3-Cy-Cy-Ph5-O3 | 4% |
| 4-Cy-Cy-Ph5-O2 | 4% |
| 5-Cy-Cy-Ph5-O2 | 4% |
| 3-Ph-Ph5-Ph-2 | 7% |
| 4-Ph-Ph5-Ph-2 | 8% |
| 3-Cy-Cy-Ph-1 | 7% |

(continued)

| Liquid Crystal Composition 41 | |
|---|---|
| $T_{NI}$/°C | 85.4 |
| $\Delta n$ | 0.107 |
| $\Delta\varepsilon$ | -2.46 |
| $\eta$/mPa·s | 20.0 |
| $\gamma_1$/mPa·s | 114 |
| $\gamma_1/\Delta n^2 \times 10^{-2}$ | 99 |
| 3-Cy-Cy-2 | 18% |
| 3-Cy-Cy-4 | 12% |
| 3-Cy-Cy-5 | 5% |
| 2-Cy-Ph5-O2 | 7% |
| 3-Cy-Ph5-O4 | 8% |
| 2-Cy-Ph-Ph5-O2 | 6% |
| 3-Cy-Ph5-O2 | 6% |
| 3-Cy-Cy-Ph5-O3 | 4% |
| 4-Cy-Cy-Ph5-O2 | 4% |
| 5-Cy-Cy-Ph5-O2 | 4% |
| 3-Ph-Ph5-Ph-2 | 7% |
| 4-Ph-Ph5-Ph-2 | 8% |
| 3-Cy-Cy-Ph-1 | 11% |

[Table 31]

| | Example 39 | Example 40 | Example 41 |
|---|---|---|---|
| VHR | 98.3 | 98.4 | 98.5 |
| ID | 73 | 66 | 64 |
| Image-sticking | B | B | B |

Although the liquid crystal display devices of Examples 39 to 41 had high IDs, they exhibited only slight and acceptable image-sticking.

Example 42

Liquid Crystal Composition 42 shown in the following table was injected as in Example 1 to obtain a liquid crystal display device of Example 42. The resulting liquid crystal display device was tested for VHR and ID and was evaluated for image-sticking. The following tables summarize the composition and physical properties of the liquid crystal composition, the VHR and ID of the liquid crystal display device, and the results of the image-sticking evaluation.

[Table 32]

| Liquid Crystal Composition 42 | |
|---|---|
| $T_{NI}$/°C | 86.3 |
| $\Delta n$ | 0.105 |
| $\Delta\varepsilon$ | -3.41 |

(continued)

| Liquid Crystal Composition 42 | |
|---|---|
| η/mPa·s | 26.4 |
| $\gamma_1$/mPa·s | 149 |
| $\gamma_1/\Delta n^2 \times 10^{-2}$ | 135 |
| 3-Cy-Cy-2 | 24% |
| 3-Cy-Ph-O1 | 11% |
| 2-Cy-Ph5-O2 | 10% |
| 2-Cy-Ph-Ph5-O2 | 7% |
| 3-Cy-Ph-Ph5-O2 | 9% |
| 3-Cy-Cy-Ph5-O3 | 10% |
| 4-Cy-Cy-Fh5-O2 | 10% |
| 5-Cy-Cy-Ph5-O2 | 10% |
| 3-Ph-Ph5-Ph-2 | 4% |
| 4-Ph-Ph5-Ph-2 | 4% |
| 5-Ph-Ph-1 | 1% |

[Table 33]

| | Example 42 |
|---|---|
| VHR | 98.4 |
| ID | 68 |
| Image-sticking | B |

Although the liquid crystal display device of Example 42 had a high ID, it exhibited only slight and acceptable image-sticking.

Comparative Example 1

Comparative Liquid Crystal Composition 1 shown in the following table was injected as in Example 1 to obtain a liquid crystal display device of Comparative Example 1. The resulting liquid crystal display device was tested for VHR and ID and was evaluated for image-sticking. The liquid crystal display device of Comparative Example 1 was also tested for transmittance.

The following tables summarize the composition and physical properties of the liquid crystal composition, the VHR, ID, and transmittance of the liquid crystal display device, and the results of the image-sticking evaluation.

[Table 34]

| Comparative Liquid Crystal Composition 1 | |
|---|---|
| 4-Cy-VO-Ph-1 | 27% |
| 5-Cy-VO-Ph-1 | 20% |
| 5-Cy-VO-Ph-3 | 20% |
| 3-Cy-Ph5-O2 | 3% |
| 3-Cy-Ph5-O4 | 3% |
| 2-Cy-Ph-Ph5-O2 | 6% |

(continued)

| Comparative Liquid Crystal Composition 1 | |
|---|---|
| 3-Cy-Ph-Ph5-02 | 6% |
| 3-Cy-Cy-Ph5-O3 | 3% |
| 4-Cy-Cy-Ph5-O2 | 3% |
| 5-Cy-Cy-Ph5-O2 | 3% |
| 3-Ph-Ph5-Ph-2 | 3% |
| 4-Ph-Ph5-Ph-2 | 3% |

[Table 35]

| | Comparative Example 1 |
|---|---|
| Liquid crystal composition | Comparative Liquid Crystal Composition 1 |
| VHR | 98.2 |
| ID | 162 |
| Image-sticking | D |
| Maximum transmittance | 88.0% |

Comparative Examples 2 to 4

Comparative Liquid Crystal Compositions 2 to 4 shown in the following tables were injected as in Example 1 to obtain liquid crystal display devices of Comparative Examples 2 to 4. The resulting liquid crystal display devices were tested for VHR and ID and were evaluated for image-sticking. The results are summarized in the following tables.

[Table 36]

| Comparative Liquid Crystal Composition 2 | | | Comparative Liquid Crystal Composition 3 | |
|---|---|---|---|---|
| 0d3-Ph-T-Ph-3d0 | 15% | | 0d3-Ph-T-Ph-3d0 | 10% |
| 3-Cy-Ph-T-Ph-2 | 14% | | 3-Cy-Ph3-T-Ph9-1 | 4% |
| 0d3-Ph-N-Ph-3d0 | 4% | | 4-Ph-T-Ph-O2 | 4% |
| 3-Ph-VO-Cy-VO-Ph-3 | 4% | | 3-Cy-Ph-T-Ph-2 | 4% |
| 3-Cy-Cy-VO-Ph-Cy-3 | 3% | | 5-Cy-VO-Ph-1 | 5% |
| 3-Cy-Ph5-O2 | 7% | | 3-Ph-VO-Cy-VO-Ph-3 | 7% |
| 3-Cy-Ph5-O4 | 7% | | 3-Cy-Cy-VO-Ph-Cy-3 | 3% |
| 2-Cy-Ph-Ph5-O2 | 8% | | 3-Cy-Ph5-O2 | 8% |
| 3-Cy-Ph-Ph5-O2 | 8% | | 3-Cy-Ph5-O4 | 8% |
| 3-Cy-Cy-Ph5-O3 | 6% | | 2-Cy-Ph-Ph5-O2 | 8% |
| 4-Cy-Cy-Ph5-O2 | 6% | | 3-Cy-Ph-Ph5-O2 | 8% |
| 5-Cy-Cy-Ph5-O2 | 6% | | 3-Cy-Cy-Ph5-O3 | 7% |
| 3-Ph-Ph5-Ph-2 | 6% | | 4-Cy-Cy-Ph5-O2 | 6% |
| 4-Ph-Ph5-Ph-2 | 6% | | 5-Cy-Cy-Ph5-O2 | 6% |
| | | | 3-Ph-Ph5-Ph-2 | 6% |
| | | | 4-Ph-Ph5-Ph-2 | 6% |

[Table 37]

| Comparative Liquid Crystal Composition 4 | |
|---|---|
| 0d3-Ph-T-Ph-3d0 | 10% |
| 3-Cy-Ph3-T-Ph9-1 | 4% |
| 4-Ph-T-Ph-O2 | 4% |
| 0d3-Ph-N-Ph-3d0 | 7% |
| 5-Cy-VO-Ph-1 | 5% |
| 3-Ph-VO-Cy-VO-Ph-3 | 7% |
| 3-Cy-Cy-VO-Ph-Cy-3 | 3% |
| 3-Cy-Ph5-O2 | 8% |
| 3-Cy-Ph5-O4 | 8% |
| 2-Cy-Ph-Ph5-O2 | 8% |
| 3-Cy-Ph-Ph5-O2 | 8% |
| 3-Cy-Cy-Ph5-O3 | 6% |
| 4-Cy-Cy-Ph5-O2 | 6% |
| 5-Cy-Cy-Ph5-O2 | 6% |
| 3-Ph-Ph5-Ph-2 | 5% |
| 4-Ph-Ph5-Ph-2 | 5% |

[Table 38]

| | Comparative Example 2 | Comparative Example 3 | Comparative Example 4 |
|---|---|---|---|
| Liquid crystal composition | Comparative Liquid Crystal Composition 2 | Comparative Liquid Crystal Composition 3 | Comparative Liquid Crysal Composition 4 |
| VHR | 98.3 | 98.5 | 98.4 |
| ID | 151 | 129 | 145 |
| Image-sticking | D | D | C |

Comparative Examples 5 to 12

The procedures of Examples 1, 2, 8, 13, 14, 19, 20, and 26 were repeated except that the In-Ga-Zn oxide film was replaced with an amorphous silicon film to obtain liquid crystal display devices of Comparative Examples 5 to 12. The resulting liquid crystal display devices were tested for VHR and ID and were evaluated for image-sticking. The liquid crystal display devices of Comparative Examples 5 and 6 were also tested for transmittance. The results are summarized in the following tables.

[Table 39]

| | Comparative Example 5 | Comparative Example 6 | Comparative Example 7 | Comparative Example 8 |
|---|---|---|---|---|
| Liquid crystal composition | Liquid Crystal Composition 1 | Liquid Crystal Composition 2 | Liquid Crystal Composition 8 | Liquid Crystal Composition 13 |
| VHR | 99.4 | 99.6 | 99.5 | 99.5 |
| ID | 18 | 16 | 16 | 25 |
| Image-sticking | A | A | A | A |

(continued)

| | Comparative Example 5 | Comparative Example 6 | Comparative Example 7 | Comparative Example 8 |
|---|---|---|---|---|
| Liquid crystal composition | Liquid Crystal Composition 1 | Liquid Crystal Composition 2 | Liquid Crystal Composition 8 | Liquid Crystal Composition 13 |
| Maximum transmittance | 87.0% | 86.5% | | |

[Table 40]

| | Comparative Example 9 | Comparative Example 10 | Comparative Example 11 | Comparative Example 12 |
|---|---|---|---|---|
| Liquid crystal composition | Liquid Crystal Composition 14 | Liquid Crystal Composition 19 | Liquid Crystal Composition 20 | Liquid Crystal Composition 26 |
| VHR | 99.4 | 99.4 | 99.5 | 99.4 |
| ID | 23 | 22 | 20 | 20 |
| Image-sticking | A | A | A | A |

The liquid crystal display devices of Comparative Examples 5 to 12 had high VHRs and low IDs and also exhibited no or only slight and acceptable image-sticking. These liquid crystal display devices, however, had lower transmittances than the liquid crystal display devices of Examples 1 and 2, which had a thin-film transistor layer including an In-Ga-Zn oxide film.

Examples 43 to 45

An electrode structure was formed on at least one of first and second substrates. Horizontal alignment layers were formed on the opposing surfaces of the first and second substrates and were subjected to weak rubbing. FFS cells were assembled, and Liquid Crystal Compositions 43 to 45 shown in the following tables were injected between the first and second substrates to obtain liquid crystal display devices of Comparative Examples 43 to 45 ($d_{gap}$ = 3.0 μm, alignment layer: AL-1051) ($d_{gap}$ = 3.0 μm).

The liquid crystal display devices of Examples 43 to 45 were tested for VHR, ID, and transmittance and were evaluated for image-sticking. The following tables summarize the composition and physical properties of the liquid crystal compositions, the VHR, ID, and transmittance of the liquid crystal display devices, and the results of the image-sticking evaluation.

[Table 41]

| Liquid Crystal Composition 43 | |
|---|---|
| TNI/°C, | 75.5 |
| Δn | 0.103 |
| Δε | -3.1 |
| η/mPa·s | 15.8 |
| γ1/mPa·s | 113 |
| γ1/Δn2 × 10-2 | 113 |
| 3-Cy-Cy-2 | 13% |
| 3-Cy-Cy-V1 | 12% |
| 3-Cy-Cy-4 | 5% |
| 3-Ph-Ph-1 | 3% |

(continued)

| Liquid Crystal Composition 43 | |
|---|---|
| 5-Ph-Ph-1 | 12% |
| 3-Cy-Cy-Ph-1 | 3% |
| V-Cy-Ph-Ph-3 | 6% |
| 3-Cy-1O-Ph5-O2 | 11% |
| 2-Cy-1O-Ph5-O2 | 12% |
| 3-Cy-Cy-1O-Ph5-O2 | 12% |
| 4-Cy-Cy-1O-Ph5-O2 | 2% |
| V-Cy-Cy-1O-Ph5-O2 | 3% |
| 1V-Cy-Cy-1O-Ph5-O2 | 6% |
| Liquid Crystal Composition 44 | |
| TNI/°C | 75.4 |
| Δn | 0.109 |
| Δε | -3.1 |
| η/mPa·s | 14.9 |
| γ1/mPa·s | 110 |
| γ1/Δn2 × 10-2 | 92 |
| 2-Cy-Cy-V1 | 20% |
| 3-Cy-Cy-V1 | 13% |
| 3-Ph-Ph-1 | 10% |
| 5-Ph-Ph-1 | 5% |
| 3-Cy-Ph-Ph-2 | 6% |
| 1V-Cy-1O-Ph5-O2 | 8% |
| 2-Cy-Cy-1O-Ph5-O2 | 10% |
| 3-Cy-Cy-1O-Ph5-O2 | 10% |
| V-Cy-Cy-1O-Ph5-O2 | 10% |
| 1V-Cy-Cy-1O-Ph5-O2 | 4% |
| 3-Ph-Ph5-Ph-2 | 4% |
| Liquid Crystal Composition 45 | |
| TNI/°C | 83.1 |
| Δn | 0.114 |
| Δε | -2.9 |
| η/mPa·s | 14.8 |
| γ1/mPa·s | 92 |
| γ1/Δn2 × 10-2 | 71 |
| V2-Ph-Ph-1 | 5% |
| 3-Cy-Cy-V | 39% |
| 3-Cy-1O-Ph5-O2 | 5% |
| 2-Cy-Cy-1O-Ph5-O2 | 11% |

(continued)

| Liquid Crystal Composition 45 | |
|---|---|
| 3-Cy-Cy-1O-Ph5-O1 | 11% |
| 3-Cy-Cy-1O-Ph5-O2 | 6% |
| 2-Cy-Ph-Ph5-O2 | 6% |
| 3-Ph-Ph5-Ph-1 | 8% |
| 3-Ph-Ph5-Ph-2 | 9% |

[Table 42]

| | Example 43 | Example 44 | Example 45 |
|---|---|---|---|
| VHR | 99.6 | 99.5 | 99.5 |
| ID | 15 | 20 | 22 |
| Image-sticking | A | A | A |
| Maximum transmittance | 89.8% | | |

The liquid crystal display devices of Examples 43 to 45 had high VHRs, low IDs, and high transmittances. These liquid crystal display devices also exhibited no or only slight and acceptable image-sticking.

Examples 46 and 47

Liquid Crystal Compositions 46 and 47 shown in the following tables were injected as in Example 1 to obtain liquid crystal display devices of Examples 46 and 47. The resulting liquid crystal display devices were tested for VHR and ID and were evaluated for image-sticking. The following tables summarize the composition and physical properties of the liquid crystal compositions, the VHR and ID of the liquid crystal display devices, and the results of the image-sticking evaluation.

[Table 43]

Liquid Crystal Composition 46

| | |
|---|---|
| TNI / °C | 76.3 |
| Δn | 0.106 |
| Δε | -3.0 |
| η / mPa·s | 16.6 |
| γ1 / mPa·s | 106 |
| γ1 / Δn2 × 10-2 | 95 |
| 3-Cy-Cy-2 | 17% |
| 3-Cy-Ph-Ph-2 | 12% |
| 3-Cy-1O-Ph5-O1 | 11% |
| 3-Cy-1O-Ph5-O2 | 17% |
| 3-Nd-Ph5-Ph-2 | 4% |
| 3-Cy-Cy-V | 5% |
| 3-Cy-Cy-V1 | 10% |
| V-Cy-Ph-Ph-3 | 12% |
| V-Cy-Cy-1O-Ph5-O3 | 12% |

Liquid Crystal Composition 47

| | |
|---|---|
| TNI / °C | 76.6 |
| Δn | 0.109 |
| Δε | -3.2 |
| η / mPa·s | 13.9 |
| γ1 / mPa·s | 95 |
| γ1 / Δn2 × 10-2 | 80 |
| 1V-Cy-1O-Ph5-O2 | 12% |
| 1V-Cy-Cy-1O-Ph5-O2 | 12% |
| 3-Cy-1O-Ph5-O2 | 2% |
| 2-Cy-Cy-1O-Ph5-O2 | 5% |
| 3-Cy-Cy-1O-Ph5-O2 | 4% |
| 3-Cy-Ph-Ph5-O2 | 4% |
| 3-Cy-Cy-V | 38% |
| 3-Cy-Cy-V1 | 3% |
| 3-Ph-Ph-1 | 3% |
| V2-Ph-Ph5-Ph-2V | 12% |
| 1V2-Ph-Ph5-Ph2-V1 | 5% |

[Table 44]

| | Example 46 | Example 47 |
|---|---|---|
| VHR | 99.5 | 99.4 |
| I0 | 21 | 24 |
| Image-sticking | A | A |

The liquid crystal display devices of Examples 46 and 47 had high VHRs and low IDs. These liquid crystal display devices also exhibited no or only slight and acceptable image-sticking.

## Claims

**1.** A liquid crystal display device comprising:

first and second opposing substrates;
a liquid crystal layer comprising a liquid crystal composition between the first and second substrates;
a plurality of gate lines and data lines arranged in a matrix on the first substrate;
thin-film transistors disposed at intersections of the gate lines and the data lines; and
pixel electrodes that are driven by the transistors and that comprise a transparent conductive material,
each thin-film transistor comprising a gate electrode, an oxide semiconductor layer disposed over the gate electrode with an insulating layer therebetween, and source and drain electrodes electrically connected to the oxide semiconductor layer,
wherein the liquid crystal composition comprises:
at least one compound selected from the group consisting of compounds represented by general formulas (LC3) to (LC5):

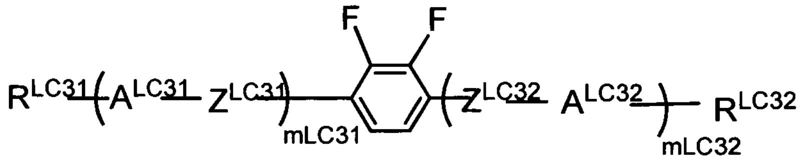

(LC3)

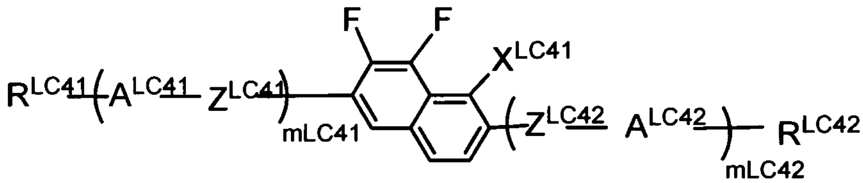

(LC4)

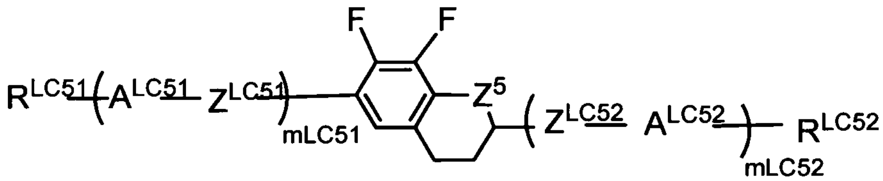

(LC5)

wherein $R^{LC31}$, $R^{LC32}$, $R^{LC41}$, $R^{LC42}$, $R^{LC51}$, and $R^{LC52}$ are each independently an alkyl group of 1 to 15 carbon atoms, wherein one or more $-CH_2-$ groups in the alkyl group are optionally replaced with -O-, -CH=CH-, -CO-, -OCO-, -COO-, or -C≡C- such that no oxygen atoms are directly adjacent to each other, and one or more hydrogen atoms in the alkyl group are optionally replaced with halogen; $A^{LC31}$, $A^{LC32}$, $A^{LC41}$, $A^{LC42}$, $A^{LC51}$, and $A^{LC52}$ are each independently any of the following structures:

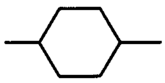 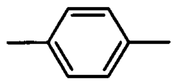 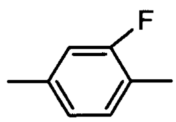 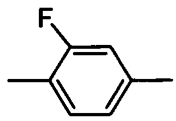 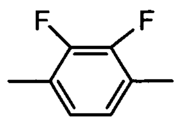

(wherein one or more $-CH_2-$ groups in the cyclohexylene group are optionally replaced with oxygen; one or more -CH= groups in the 1,4-phenylene group are optionally replaced with nitrogen; and one or more hydrogen atoms in the structures are optionally replaced with fluorine, chlorine, $-CF_3$, or-$OCF_3$) ; $Z^{LC31}$, $Z^{LC32}$, $Z^{LC41}$, $Z^{LC42}$, $Z^{LC51}$, and $Z^{LC51}$ are each independently a single bond, -CH=CH-, -C≡C-, $-CH_2CH_2-$,$-(CH_2)_4-$, -COO-, $-OCH_2-$, $-CH_2O-$, $-OCF_2-$, or $-CF_2O-$; $Z^5$ is $-CH_2$-or oxygen; $X^{LC41}$ is hydrogen or fluorine; $m^{LC31}$, $m^{LC32}$, $m^{LC41}$, $m^{LC42}$, $m^{LC51}$, and $m^{LC52}$ are each independently 0 to 3; and $m^{LC31}$ + $m^{LC32}$, $m^{LC41}$ + $m^{LC42}$, and $m^{LC51}$ + $m^{LC52}$ are each 1, 2, or 3, wherein each occurrence of $A^{LC31}$ to $A^{LC52}$ and $Z^{LC31}$ to $Z^{LC52}$, if present, may be the same or different; and at least one compound selected from the group consisting of compounds represented by general formulas (II-a) to (II-f):

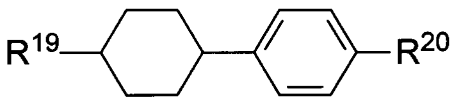

(II-a)

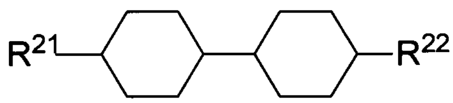

(II-b)

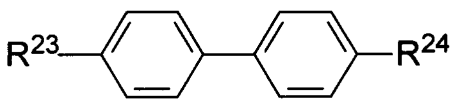

(II-c)

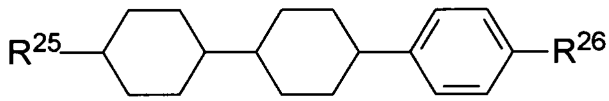 (II-d)

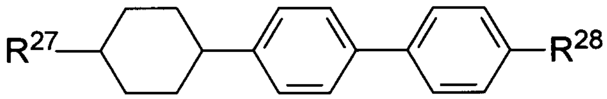 (II-e)

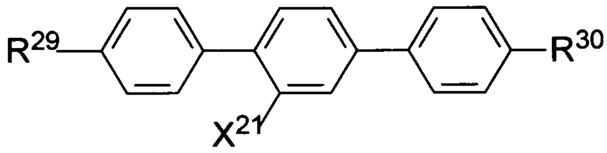 (II-f)

wherein $R^{19}$ to $R^{30}$ are each independently an alkyl group of 1 to 10 carbon atoms, an alkoxy group of 1 to 10 carbon atoms, or an alkenyl group of 2 to 10 carbon atoms; and $X^{21}$ is hydrogen or fluorine.

**2.** The liquid crystal display device according to Claim 1, wherein the oxide semiconductor layer comprises an oxide containing at least one element selected from In, Ga, Zn, and Sn.

**3.** The liquid crystal display device according to Claim 1 or 2, wherein the oxide semiconductor layer comprises an oxide containing In, Ga, and Zn.

**4.** The liquid crystal display device according to any one of Claims 1 to 3, wherein the liquid crystal layer further comprises a compound represented by general formula (LC):

$$R^{LC}\left(A^{LC1}-Z^{LC}\right)_a A^{LC2}-Y^{LC} \qquad (LC)$$

wherein

$R^{LC}$ is an alkyl group of 1 to 15 carbon atoms, wherein one or more $-CH_2-$ groups in the alkyl group are optionally replaced with -O-, -CH=CH-, -CO-, -OCO-, -COO-, or -C≡C- such that no oxygen atoms are directly adjacent to each other, and one or more hydrogen atoms in the alkyl group are optionally replaced with halogen;
$A^{LC1}$ and $A^{LC2}$ are each independently a group selected from the group consisting of

(a) trans-1,4-cyclohexylene (wherein one or more non-adjacent $-CH_2-$ groups present in the group are optionally replaced with oxygen or sulfur),
(b) 1,4-phenylene (wherein one or more non-adjacent-CH= groups present in the group are optionally replaced with nitrogen), and
(c) 1,4-bicyclo(2.2.2)octylene, naphthalene-2,6-diyl, decahydronaphthalene-2,6-diyl, 1,2,3,4-tetrahydronaphthalene-2,6-diyl, and chromane-2,6-diyl, wherein one or more hydrogen atoms present in groups (a), (b), and (c) are each optionally replaced with fluorine, chlorine, $-CF_3$, or $-OCF_3$;

$Z^{LC}$ is a single bond, -CH=CH-, -CF=CF-, -C≡C-, $-CH_2CH_2-$, $-(CH_2)_4-$, $-OCH_2-$, $-CH_2O-$, $-OCF_2-$, $-CF_2O-$, -COO-, or -OCO-;
$Y^{LC}$ is hydrogen, fluorine, chlorine, cyano, or an alkyl group of 1 to 15 carbon atoms, wherein one or more $-CH_2-$ groups in the alkyl group are optionally replaced with -O-, -CH=CH-, -CO-, -OCO-, -COO-, -C≡C-, $-CF_2O-$, or $-OCF_2-$ such that no oxygen atoms are directly adjacent to each other, and one or more hydrogen atoms in the alkyl group are optionally replaced with halogen; and
a is an integer of 1 to 4, wherein if a is 2, 3, or 4, each occurrence of $A^{LC1}$ may be the same or different, and each occurrence of $Z^{LC}$ may be the same or different,
with the proviso that compounds represented by general formulas (LC3), (LC4), (LC5), and (II-a) to (II-f) are excluded.

5. The liquid crystal display device according to any one of Claims 1 to 4, wherein the liquid crystal composition comprises, as the compounds represented by general formulas (LC3), (LC4), and (LC5), at least one compound selected from the group consisting of compounds represented by general formulas (LC3-1), (LC4-1), and (LC5-1):

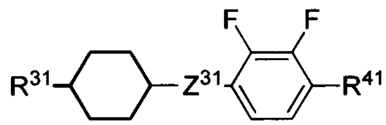
(LC3-1)

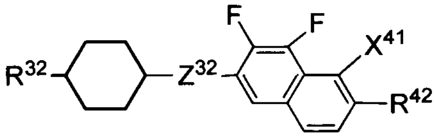
(LC4-1)

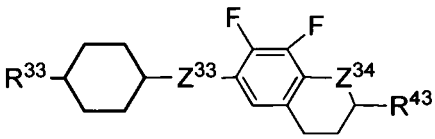
(LC5-1)

wherein $R^{31}$ to $R^{33}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $R^{41}$ to $R^{43}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $Z^{31}$ to $Z^{33}$ are each a single bond,-CH=CH-, -C≡C-, $-CH_2CH_2-$, $-(CH_2)_4-$, -COO-, -OCO-, $-OCH_2-$,$-CH_2O-$, $-OCF_2-$, or $-CF_2O-$; $X^{41}$ is hydrogen or fluorine; and $Z^{34}$ is $-CH_2-$ or oxygen.

6. The liquid crystal display device according to any one of Claims 1 to 5, wherein the liquid crystal composition comprises, as the compounds represented by general formulas (LC3), (LC4), and (LC5), at least one compound selected from the group consisting of compounds represented by general formulas (LC3-2), (LC4-2), and (LC5-2):

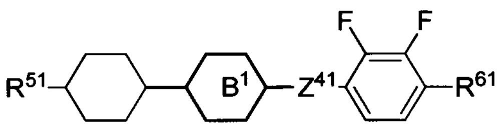
(LC3-2)

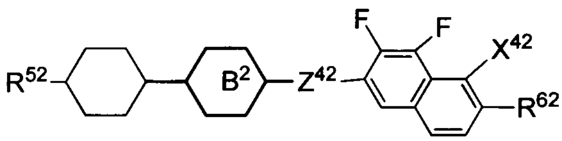
(LC4-2)

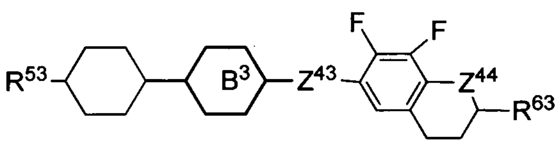
(LC5-2)

wherein $R^{51}$ to $R^{53}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $R^{61}$ to $R^{63}$ are each an alkyl group of 1 to 8 carbon atoms, an alkenyl group of 2 to 8 carbon atoms, an alkoxy group of 1 to 8 carbon atoms, or an alkenyloxy group of 2 to 8 carbon atoms; $B^1$ to $B^3$ are each 1,4-phenylene or trans-1,4-cyclohexylene optionally substituted with fluorine; $Z^{41}$ to $Z^{43}$ are each a single bond, -CH=CH-, -C≡C-,$-CH_2CH_2-$, $-(CH_2)_4-$, -COO-, -OCO-, $-OCH_2-$, $-CH_2O-$, $-OCF_2-$, or-$CF_2O-$; $X^{42}$ is hydrogen or fluorine; and $Z^{44}$ is $-CH_2-$ or oxygen.

7. The liquid crystal display device according to any one of Claims 1 to 6, wherein the liquid crystal composition forming the liquid crystal layer has a rotational viscosity $\gamma1$ of 150 or less, a refractive index anisotropy $\Delta n$ of 0.08 to 0.13, and a Z of 13,000 or less, wherein Z is represented by the following equation:

[Math. 1]

$$Z = \gamma 1 / \Delta n^2$$

8. The liquid crystal display device according to any one of Claims 1 to 7, wherein the liquid crystal composition forming the liquid crystal layer has an upper nematic liquid crystal phase temperature limit of 60°C to 120°C, a lower nematic liquid crystal phase temperature limit of -20°C or lower, and a difference between the upper and lower nematic liquid crystal phase temperature limits of 100 to 150.

9. The liquid crystal display device according to any one of Claims 1 to 8, wherein the liquid crystal composition forming the liquid crystal layer has a resistivity of $10^{12}$ Ω·m or more.

10. The liquid crystal display device according to any one of Claims 1 to 9, wherein the liquid crystal layer further comprises a polymer of a liquid crystal composition comprising at least one polymerizable compound selected from the group consisting of:

polymerizable compounds represented by general formula (VI) :

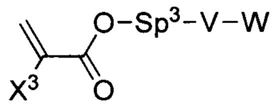
(VI)

wherein $X^3$ is hydrogen or methyl; $Sp^3$ is a single bond, an alkylene group of 1 to 8 carbon atoms, or $-O-(CH_2)_t-$ (wherein t is an integer of 2 to 7, and the oxygen atom is linked to the aromatic ring); V is a linear or branched polyvalent alkylene group of 2 to 20 carbon atoms or a polyvalent cyclic substituent of 5 to 30 carbon atoms, wherein the alkylene group in the polyvalent alkylene group is optionally substituted with oxygen such that no oxygen atoms are adjacent to each other and is optionally substituted with an alkyl group of 5 to 20 carbon atoms (wherein the alkylene group in the group is optionally substituted with oxygen such that no oxygen atoms are adjacent to each other) or a cyclic substituent; and W is hydrogen, halogen, or an alkylene group of 1 to 8 carbon atoms; and
polymerizable compounds represented by general formula (V) :

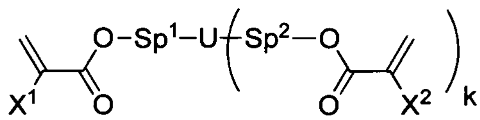
(V)

wherein $X^1$ and $X^2$ are each independently hydrogen or methyl; $Sp^1$ and $Sp^2$ are each independently a single bond, an alkylene group of 1 to 8 carbon atoms, or $-O-(CH_2)_s-$ (wherein s is an integer of 2 to 7, and the oxygen atom is linked to the aromatic ring); U is a linear or branched polyvalent alkylene group of 2 to 20 carbon atoms or a polyvalent cyclic substituent of 5 to 30 carbon atoms, wherein the alkylene group in the polyvalent alkylene group is optionally substituted with oxygen such that no oxygen atoms are adjacent to each other and is optionally substituted with an alkyl group of 5 to 20 carbon atoms (wherein the alkylene group in the group is optionally substituted with oxygen such that no oxygen atoms are adjacent to each other) or a cyclic substituent; and k is an integer of 1 to 5.

11. The liquid crystal display device according to any one of Claims 1 to 10, further comprising a common electrode comprising a transparent conductive material on the second substrate,
wherein the liquid crystal layer is homeotropically aligned when no voltage is applied.

12. The liquid crystal display device according to any one of Claims 1 to 10, further comprising:

common electrodes disposed on the first or second substrate and separated from the pixel electrodes; and

alignment layers that are disposed between the first and second substrates and the liquid crystal layer and in contact with the liquid crystal layer and that induce homogeneous alignment to the liquid crystal composition, the first and second substrates being transparent insulating substrates,
wherein the shortest path from the pixel electrodes to the common electrodes located close to the pixel electrodes comprises a component parallel to the first or second substrate.

**13.** The liquid crystal display device according to any one of Claims 1 to 10, further comprising:

common electrodes disposed on the first substrate and separated from the pixel electrodes; and
alignment layers that are disposed between the first and second substrates and the liquid crystal layer and in contact with the liquid crystal layer and that induce homogeneous alignment to the liquid crystal composition,
wherein the shortest distance d between the common electrodes and the pixel electrodes located close to each other is shorter than the shortest distance G between the alignment layers.

## Patentansprüche

**1.** Flüssigkristallanzeigevorrichtung, umfassend:

erste und zweite gegenüberliegende Substrate;
eine Flüssigkristallschicht, umfassend eine Flüssigkristallzusammensetzung zwischen den ersten und zweiten Substraten;
eine Mehrzahl von Gate-Leitungen und Daten-Leitungen, die in einer Matrix auf dem ersten Substrat angeordnet sind;
Dünnfilmtransistoren, die an den Schnittpunkten der Gate-Leitungen und der Daten-Leitungen angeordnet sind; und
Pixelelektroden, die angesteuert werden durch die Transistoren und die ein transparentes leitfähiges Material umfassen,
wobei jeder Dünnfilmtransistor umfasst: eine Gate-Elektrode, eine Oxidhalbleiterschicht, die angeordnet ist über der Gate-Elektrode mit einer isolierenden Schicht dazwischen, und Source- und Drain-Elektroden, die elektrisch mit der Oxidhalbleiterschicht verbunden sind,
wobei die Flüssigkristallzusammensetzung umfasst:

mindestens eine Verbindung, ausgewählt aus der Gruppe, bestehend aus den Verbindungen der allgemeinen Formeln (LC3) bis (LC5) :

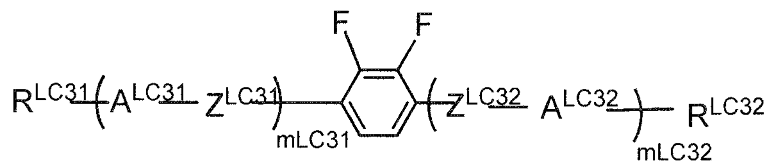
(LC3)

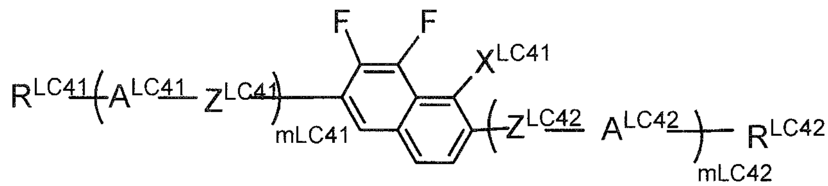
(LC4)

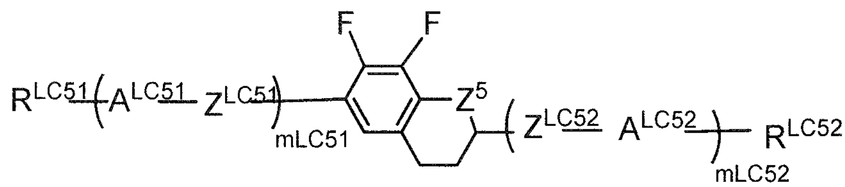
(LC5)

wobei gilt: $R^{LC31}$, $R^{LC32}$, $R^{LC41}$, $R^{LC42}$, $R^{LC51}$ und $R^{LC52}$ sind jeweils unabhängig eine Alkylgruppe mit 1

bis 15 Kohlenstoffatom(en), wobei eine oder mehrere $-CH_2$-Gruppe(n) in der Alkylgruppe optional ersetzt ist/sind durch -O-, -CH=CH-, -CO-, -OCO-, -COO- oder -C≡C-, so dass keine Sauerstoffatome direkt benachbart zueinander sind, und ein oder mehr Wasserstoffatom(e) in der Alkylgruppe optional ersetzt ist/sind durch Halogen; $A^{LC31}$, $A^{LC32}$, $A^{LC41}$, $A^{LC42}$, $A^{LC51}$ und $A^{LC52}$ sind jeweils unabhängig eine der folgenden Strukturen:

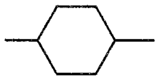 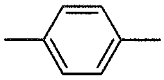 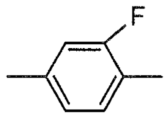 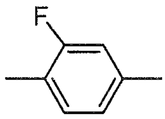 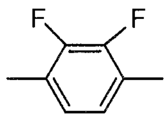

(wobei gilt: eine oder mehrere $-CH_2$-Gruppe(n) in der Cyclohexylengruppe ist/sind optional ersetzt durch Sauerstoff; eine oder mehrere -CH=-Gruppe(n) in der 1,4-Phenylengruppe ist/sind optional ersetzt durch Stickstoff; und ein oder mehrere Wasserstoffatom(e) in den Strukturen ist/sind optional ersetzt durch Fluor, Chlor, $-CF_3$ oder $-OCF_3$); $Z^{LC31}$, $Z^{LC32}$, $Z^{LC41}$, $Z^{LC42}$, $Z^{LC51}$ und $Z^{LC51}$ sind jeweils unabhängig eine Einfachbindung, -CH=CH-, -C≡C-, $-CH_2CH_2-$, $-(CH_2)_4-$, -COO-, $-OCH_2-$, $-CH_2O-$, $-OCF_2-$ oder $-CF_2O-$; $Z^5$ ist $-CH_2-$ oder Sauerstoff; $X^{LC41}$ ist Wasserstoff oder Fluor; $m^{LC31}$, $m^{LC32}$, $m^{LC41}$, $m^{LC42}$, $m^{LC51}$ und $m^{LC52}$ sind jeweils unabhängig 0 bis 3; und $m^{LC31} + m^{LC32}$, $m^{LC41} + m^{LC42}$ und $m^{LC51} + m^{LC52}$ sind jeweils 1, 2 oder 3, wobei jedes Vorkommen von $A^{LC31}$ bis $A^{LC52}$ und $Z^{LC31}$ bis $Z^{LC52}$, falls vorhanden, gleich oder verschieden sein kann und

mindestens eine Verbindung, ausgewählt aus der Gruppe, bestehend aus Verbindungen der allgemeinen Formeln (II-a) bis (II-f) :

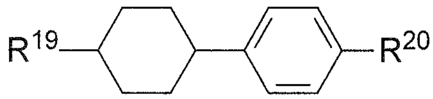 (II-a)

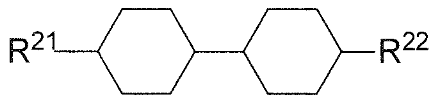 (II-b)

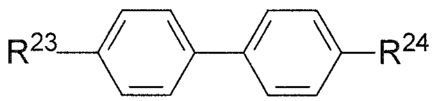 (II-c)

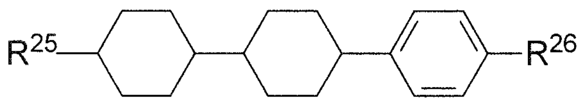 (II-d)

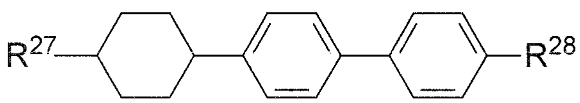 (II-e)

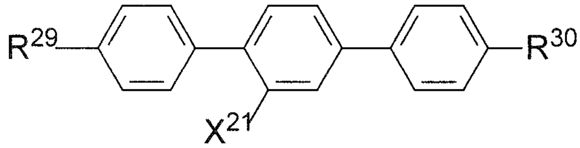 (II-f)

wobei gilt: $R^{19}$ bis $R^{30}$ sind jeweils unabhängig eine Alkylgruppe mit 1 bis 10 Kohlenstoffatom(en), eine Alkoxygruppe mit 1 bis 10 Kohlenstoffatom(en) oder eine Alkenylgruppe mit 2 bis 10 Kohlenstoffatomen; und $X^{21}$ ist Wasserstoff oder Fluor.

**2.** Flüssigkristallanzeigevorrichtung nach Anspruch 1, wobei die Oxidhalbleiterschicht umfasst: ein Oxid, enthaltend mindestens ein Element, ausgewählt aus In, Ga, Zn und Sn.

**3.** Flüssigkristallanzeigevorrichtung nach Anspruch 1 oder 2, wobei die Oxidhalbleiterschicht umfasst: ein Oxid, enthaltend In, Ga und Zn.

**4.** Flüssigkristallanzeigevorrichtung nach einem der Ansprüche 1 bis 3, wobei die Flüssigkristallschicht des Weiteren umfasst: eine Verbindung der allgemeinen Formel (LC):

$$R^{LC}\left(A^{LC1}-Z^{LC}\right)_a A^{LC2}-Y^{LC} \qquad \text{(LC)}$$

wobei gilt:

$R^{LC}$ ist eine Alkylgruppe mit 1 bis 15 Kohlenstoffatom(en), wobei eine oder mehrere $-CH_2$-Gruppe(n) in der Alkylgruppe optional ersetzt ist/sind durch -O-, -CH=CH-, -CO-, -OCO-, -COO- oder -C=C-, so dass keine Sauerstoffatome direkt benachbart zueinander sind, und ein oder mehrere Wasserstoffatom(e) in der Alkylgruppe ist/sind optional ersetzt durch Halogen;
$A^{LC1}$ und $A^{LC2}$ sind jeweils unabhängig eine Gruppe, ausgewählt aus der Gruppe, bestehend aus

(a) trans-1,4-Cyclohexylen (wobei eine oder mehrere nicht benachbarte $-CH_2$-Gruppe(n), die in der Gruppe vorhanden ist/sind, optional ersetzt ist/sind durch Sauerstoff oder Schwefel),
(b) 1,4-Phenylen (wobei eine oder mehrere nicht benachbarte -CH=-Gruppe(n), die in der Gruppe vorhanden ist/sind, optional ersetzt ist/sind durch Stickstoff) und
(c) 1,4-Bicyclo(2.2.2)octylen, Naphthalin-2,6-diyl, Decahydronaphthalin-2,6-diyl, 1,2,3,4-Tetrahydronaphthalin-2,6-diyl und Chroman-2,6-diyl, wobei ein oder mehrere Wasserstoffatom(e), das/die in den Gruppen (a), (b) und (c) vorhanden ist/sind, jeweils optional ersetzt ist/sind durch Fluor, Chlor, $-CF_3$ oder $-OCF_3$;

$Z^{LC}$ ist eine Einfachbindung, -CH=CH-, -CF=CF-, -C≡C-, $-CH_2CH_2-$, $-(CH_2)_4-$, $-OCH_2-$, $-CH_2O-$, $-OCF_2-$, $-CF_2O-$, -COO- oder -OCO-;
$Y^{LC}$ ist Wasserstoff, Fluor, Chlor, Cyano oder eine Alkylgruppe mit 1 bis 15 Kohlenstoffatom(en), wobei eine oder mehrere $-CH_2$-Gruppe(n) in der Alkylgruppe optional ersetzt ist/sind durch -O-, -CH=CH-, -CO-, -OCO-, -COO-, -C≡C-, $-CF_2O-$ oder $-OCF_2-$, so dass keine Sauerstoffatome direkt benachbart zueinander sind, und ein oder mehrere Wasserstoffatom(e) in der Alkylgruppe ist/sind optional ersetzt durch Halogen; und
a ist eine ganze Zahl von 1 bis 4, wobei, wenn a 2, 3 oder 4 ist, jedes Vorkommen von $A^{LC1}$ gleich oder verschieden sein kann, und jedes Vorkommen von $Z^{LC}$ gleich oder verschieden sein kann,
mit der Maßgabe, dass die Verbindungen der allgemeinen Formeln (LC3), (LC4), (LC5) und (II-a) bis (II-f) ausgenommen sind.

**5.** Flüssigkristallanzeigevorrichtung nach einem der Ansprüche 1 bis 4, wobei die Flüssigkristallzusammensetzung umfasst, als die Verbindungen der allgemeinen Formeln (LC3), (LC4) und (LC5), mindestens eine Verbindung, ausgewählt aus der Gruppe, bestehend aus Verbindungen der allgemeinen Formeln (LC3-1), (LC4-1) und (LC5-1):

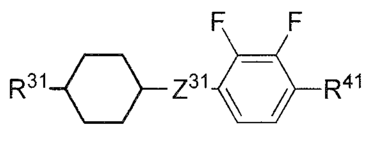
(LC3-1)

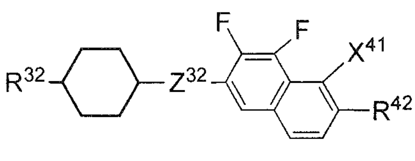
(LC4-1)

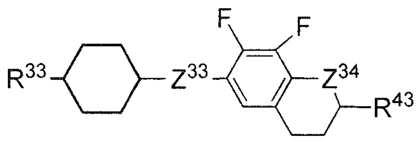

(LC5-1)

wobei gilt: $R^{31}$ bis $R^{33}$ sind jeweils eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen; $R^{41}$ bis $R^{43}$ sind jeweils eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen; $Z^{31}$ bis $Z^{33}$ sind jeweils eine Einfachbindung, -CH=CH-, -C≡C-, $-CH_2CH_2-$, - $(CH_2)_4-$, -COO-, -OCO-, $-OCH_2-$, $-CH_2O-$, $-OCF_2-$ oder $-CF_2O-$; $X^{41}$ ist Wasserstoff oder Fluor; und $Z^{34}$ ist $-CH_2-$ oder Sauerstoff.

6. Flüssigkristallanzeigevorrichtung nach einem der Ansprüche 1 bis 5, wobei die Flüssigkristallzusammensetzung umfasst, als die Verbindungen der allgemeinen Formeln (LC3), (LC4) und (LC5), mindestens eine Verbindung, ausgewählt aus der Gruppe, bestehend aus Verbindungen der allgemeinen Formeln (LC3-2), (LC4-2) und (LC5-2):

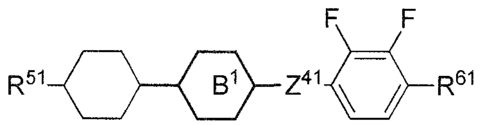

(LC3-2)

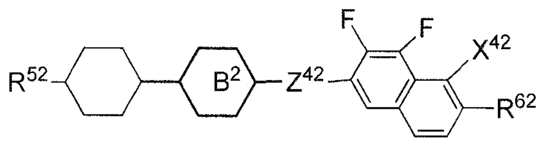

(LC4-2)

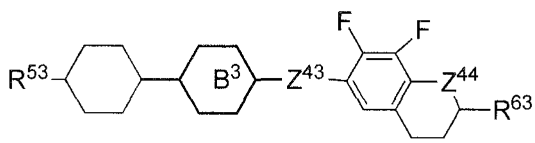

(LC5-2)

wobei gilt: $R^{51}$ bis $R^{53}$ sind jeweils eine Alkylgruppe mit 1 bis 8 Kohlenstoffatom(en), eine Alkenylgruppe mit 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen; $R^{61}$ bis $R^{63}$ sind jeweils eine Alkylgruppe mit 1 bis 8 Kohlenstoffatom(en), eine Alkenylgruppe bis 2 bis 8 Kohlenstoffatomen, eine Alkoxygruppe mit 1 bis 8 Kohlenstoffatom(en) oder eine Alkenyloxygruppe mit 2 bis 8 Kohlenstoffatomen; $B^1$ bis $B^3$ sind jeweils 1,4-Phenylen oder trans-1,4-Cyclohexylen, optional substituiert mit Fluor; $Z^{41}$ bis $Z^{43}$ sind jeweils eine Einfachbindung, -CH=CH-, -C≡C-, $-CH_2CH_2-$, $-(CH_2)_4-$, -COO-, -OCO-, $-OCH_2-$, $-CH_2O-$, $-OCF_2-$ oder $-CF_2O-$; $X^{42}$ ist Wasserstoff oder Fluor; und $Z^{44}$ ist $-CH_2-$ oder Sauerstoff.

7. Flüssigkristallanzeigevorrichtung nach einem der Ansprüche 1 bis 6, wobei die Flüssigkristallzusammensetzung, die die Flüssigkristallschicht bildet, eine Rotationsviskosität $\gamma 1$ von 150 oder weniger, eine Brechungsindexanisotropie $\Delta n$ von 0,08 bis 0,13 und einen Z-Wert von 13.000 oder weniger aufweist, wobei der Z-Wert durch folgende Gleichung ausgedrückt wird:

[Math. 1]

$$Z = \gamma 1 / \Delta n^2$$

8. Flüssigkristallanzeigevorrichtung nach einem der Ansprüche 1 bis 7, wobei die Flüssigkristallzusammensetzung, die die Flüssigkristallschicht bildet, eine obere nematische Flüssigkristallphasentemperaturgrenze von 60°C bis

120°C, eine untere nematische Flüssigkristallphasentemperaturgrenze von -20°C oder weniger und eine Differenz zwischen der oberen und der unteren nematischen Flüssigkristallphasentemperaturgrenze von 100 bis 150 aufweist.

**9.** Flüssigkristallanzeigevorrichtung nach einem der Ansprüche 1 bis 8, wobei die Flüssigkristallzusammensetzung, die die Flüssigkristallschicht bildet, einen spezifischen Widerstand von $10^{12}$ $\Omega \cdot m$ oder mehr aufweist.

**10.** Flüssigkristallanzeigevorrichtung nach einem der Ansprüche 1 bis 9, wobei die Flüssigkristallschicht des Weiteren umfasst: ein Polymer einer Flüssigkristallzusammensetzung, umfassend mindestens eine polymerisierbare Verbindung, ausgewählt aus der Gruppe, bestehend aus:

polymerisierbaren Verbindungen der allgemeinen Formel (VI):

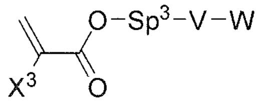

(VI)

wobei gilt: $X^3$ ist Wasserstoff oder Methyl; $Sp^3$ ist eine Einfachbindung, eine Alkylengruppe mit 1 bis 8 Kohlenstoffatom(en) oder $-O-(CH_2)_t-$ (wobei gilt: t ist eine ganze Zahl von 2 bis 7 und das Sauerstoffatom ist an den aromatischen Ring gebunden); V ist eine lineare oder verzweigte mehrwertige Alkylengruppe mit 2 bis 20 Kohlenstoffatomen oder ein mehrwertiger cyclischer Substituent mit 5 bis 30 Kohlenstoffatomen, wobei die Alkylengruppe in der mehrwertigen Alkylengruppe optional substituiert ist mit Sauerstoff, so dass keine Sauerstoffatome direkt benachbart zueinander sind, und optional substituiert ist mit einer Alkylgruppe mit 5 bis 20 Kohlenstoffatomen (wobei die Alkylengruppe in der Gruppe optional substituiert ist mit Sauerstoff, so dass keine Sauerstoffatome benachbart zueinander sind) oder einem cyclischen Substituenten; und W ist Wasserstoff, Halogen oder eine Alkylengruppe mit 1 bis 8 Kohlenstoffatom(en); und
polymerisierbaren Verbindungen der allgemeinen Formel (V):

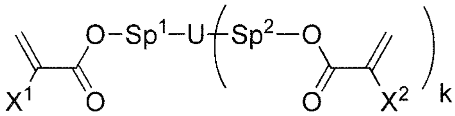

(V)

wobei gilt: $X^1$ und $X^2$ sind jeweils unabhängig Wasserstoff oder Methyl; $Sp^1$ und $Sp^2$ sind jeweils unabhängig eine Einfachbindung, eine Alkylengruppe mit 1 bis 8 Kohlenstoffatom(en) oder $-O-(CH_2)_s-$ (wobei gilt: s ist eine ganze Zahl von 2 bis 7 und das Sauerstoffatom ist an den aromatischen Ring gebunden); U ist eine lineare oder verzweigte mehrwertige Alkylengruppe mit 2 bis 20 Kohlenstoffatomen oder ein mehrwertiger cyclischer Substituent mit 5 bis 30 Kohlenstoffatomen, wobei die Alkylengruppe in der mehrwertigen Alkylengruppe optional substituiert ist mit Sauerstoff, so dass keine Sauerstoffatome benachbart zueinander sind, und ist optional substituiert mit einer Alkylgruppe mit 5 bis 20 Kohlenstoffatomen (wobei die Alkylengruppe in der Gruppe optional substituiert ist mit Sauerstoff, so dass keine Sauerstoffatome benachbart zueinander sind) oder einem cyclischen Substituenten; und k ist eine ganze Zahl von 1 bis 5.

**11.** Flüssigkristallanzeigevorrichtung nach einem der Ansprüche 1 bis 10, des Weiteren umfassend eine gemeinsame Elektrode, umfassend ein transparentes leitfähiges Material auf dem zweiten Substrat,
wobei die Flüssigkristallschicht homeotrop ausgerichtet ist, wenn keine Spannung angelegt ist.

**12.** Flüssigkristallanzeigevorrichtung nach einem der Ansprüche 1 bis 10, des Weiteren umfassend:
gemeinsame Elektroden, die angeordnet sind auf dem ersten oder zweiten Substrat, und die getrennt sind von den Pixelelektroden; und
Ausrichtungsschichten, die angeordnet sind zwischen dem ersten und dem zweiten Substrat und der Flüssigkristallschicht, und die in Kontakt sind mit der Flüssigkristallschicht und die eine homogene Ausrichtung der Flüssigkristallzusammensetzung induzieren, wobei die ersten und zweiten Substrate transparente isolierende Substrate sind,
wobei der kürzeste Weg von den Pixelelektroden zu den gemeinsamen Elektroden, die nahe der Pixelelektroden lokalisiert sind, eine Komponente umfasst, die parallel zu dem ersten oder zweiten Substrat ist.

**13.** Flüssigkristallanzeigevorrichtung nach einem der Ansprüche 1 bis 10, des Weiteren umfassend:

gemeinsame Elektroden, die auf dem ersten Substrat angeordnet sind und von den Pixelelektroden getrennt sind; und
Ausrichtungsschichten, die angeordnet sind zwischen den ersten und zweiten Substraten und der Flüssigkristallschicht und die in Kontakt sind mit der Flüssigkristallschicht und die eine homogene Ausrichtung der Flüssigkristallzusammensetzung induzieren,
wobei der kürzeste Abstand d zwischen den gemeinsamen Elektroden und den Pixelelektroden, die nahe zueinander lokalisiert sind, kürzer ist als der kürzeste Abstand G zwischen den Ausrichtungsschichten.

## Revendications

**1.** Dispositif d'affichage à cristaux liquides comprenant :

des premier et second substrats opposés ;
une couche de cristaux liquides comprenant une composition de cristaux liquides entre les premier et second substrats ;
une pluralité de lignes de porte et de lignes de données agencées dans une matrice sur le premier substrat ;
des transistors à couche mince disposés aux intersections des lignes de portes et des lignes de données ; et
des électrodes de pixels qui sont excitées par les transistors et qui comprennent un matériau conducteur transparent,
chaque transistor à couche mince comprenant une électrode de grille, une couche de semi-conducteur à base d'oxyde disposée sur l'électrode de grille avec une couche isolante entre elles, et des électrodes source et déversoir connectées électriquement à la couche de semi-conducteur à base d'oxyde,
dans lequel la composition de cristaux liquides comprend :
au moins un composé sélectionné dans le groupe constitué des composés représentés par les formules générales (LC3) à (LC5) :

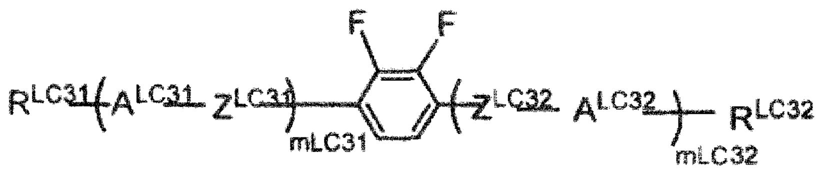
(LC3)

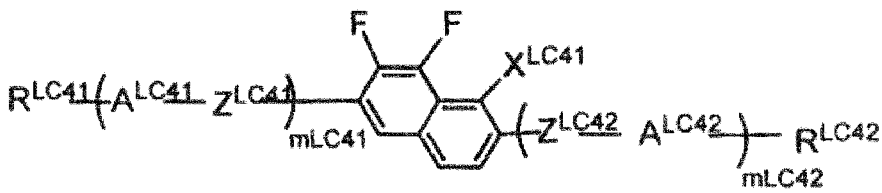
(LC4)

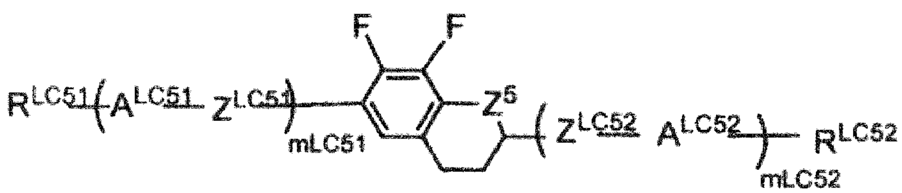
(LC5)

dans lesquelles $R^{LC31}$, $R^{LC32}$, $R^{LC41}$, $R^{LC42}$, $R^{LC51}$, et $R^{LC52}$ sont chacun indépendamment un groupe alkyle de 1 à 15 atomes de carbone, dans lequel un ou plusieurs groupes $-CH_2-$ dans le groupe alkyle sont remplacés facultativement par -O-, -CH=CH-, -CO-, -OCO-, -COO-, ou -C≡C- de telle sorte que des atomes d'oxygène ne sont pas directement adjacents l'un à l'autre, et un ou plusieurs atomes d'hydrogène dans le groupe alkyle sont remplacés facultativement par un halogène; $A^{LC31}$, $A^{LC32}$, $A^{LC41}$, $A^{LC42}$, $A^{LC51}$, et $A^{LC52}$ sont chacun indépendamment l'une quelconque des structures suivantes :

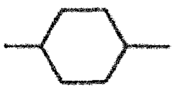 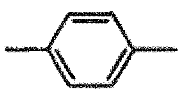 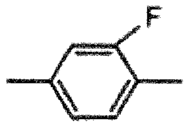 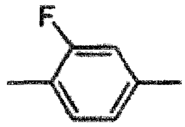 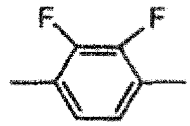

(dans lesquelles un ou plusieurs groupes $-CH_2-$ dans le groupe cyclohexylène sont remplacés facultativement par un oxygène ; un ou plusieurs groupes -CH= dans le groupe 1,4-phénylène sont remplacés facultativement par un azote ; et un ou plusieurs atomes d'hydrogène dans les structures sont remplacés facultativement par un fluor, un chlore, $-CF_3$, ou $-OCF_3$) ; $Z^{LC31}$, $Z^{LC32}$, $Z^{LC41}$, $Z^{LC42}$, $Z^{LC51}$, et $Z^{LC51}$ sont chacun indépendamment une liaison simple, -CH=CH-, -C≡C-, $-CH_2CH_2-$, $-(CH_2)_4-$, -COO-, $-OCH_2-$, $-CH_2O-$, $-OCF_2-$, ou $-CF_2O-$ ; $Z^5$ est $-CH_2-$ ou un oxygène ; $X^{LC41}$ est un hydrogène ou un fluor; $m^{LC31}$, $m^{LC32}$, $m^{LC41}$, $m^{LC42}$, $m^{LC51}$, et $m^{LC52}$ sont chacun indépendamment 0 à 3 ; et $m^{LC31} + m^{LC32}$, $m^{LC41} + m^{LC42}$, et $m^{LC51} + m^{LC52}$ sont chacun 1, 2, ou 3, dans lequel chaque occurrence de $A^{LC31}$ à $A^{LC52}$ et $Z^{LC31}$ à $Z^{LC52}$, si elle est présente, peut être identique ou différente ; et

au moins un composé sélectionné dans le groupe constitué des composés représentés par les formules générales (II-a) à (II-f) :

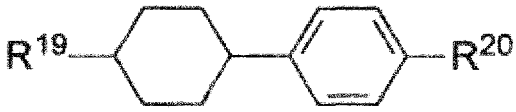

(II-a)

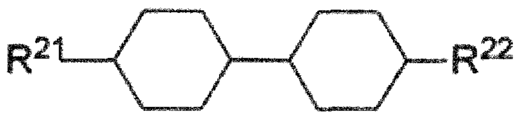

(II-b)

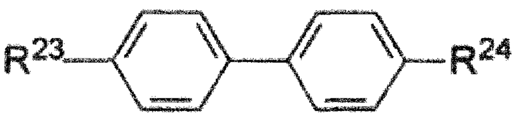

(II-c)

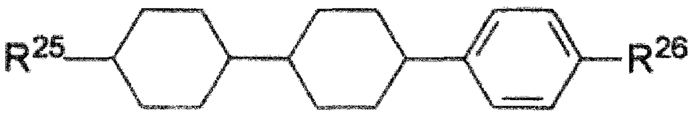

(II-d)

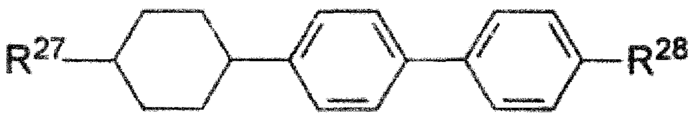

(II-e)

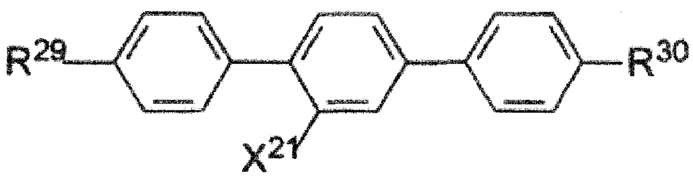

(II-f)

dans lesquelles $R^{19}$ à $R^{30}$ sont chacun indépendamment un groupe alkyle de 1 à 10 atomes de carbone, un groupe alcoxy de 1 à 10 atomes de carbone, ou un groupe alcényle de 2 à 10 atomes de carbone ; et $X^{21}$ est un hydrogène ou un fluor.

**2.** Dispositif d'affichage à cristaux liquides selon la revendication 1, dans lequel la couche de semi-conducteur à base d'oxyde comprend un oxyde contenant au moins un élément sélectionné parmi In, Ga, Zn, et Sn.

**3.** Dispositif d'affichage à cristaux liquides selon la revendication 1 ou 2, dans lequel la couche de semi-conducteur à

base d’oxyde comprend un oxyde contenant In, Ga, et Zn.

**4.** Dispositif d’affichage à cristaux liquides selon l’une quelconque des revendications 1 à 3, dans lequel la couche de cristaux liquides comprend en outre un composé représenté par la formule générale (LC) :

$$R^{LC}\left(A^{LC1}-Z^{LC}\right)_a A^{LC2}-Y^{LC} \qquad (LC)$$

dans laquelle

$R^{LC}$ est un groupe alkyle de 1 à 15 atomes de carbone, dans lequel un ou plusieurs groupes $-CH_2-$ dans le groupe alkyle sont remplacés facultativement par -O-, -CH=CH-, -CO-, -OCO-, -COO-, ou -C≡C- de telle sorte que des atomes d’oxygène ne sont pas directement adjacents l’un à l’autre, et un ou plusieurs atomes d’hydrogène dans le groupe alkyle sont remplacés facultativement par un halogène ;
$A^{LC1}$ et $A^{LC2}$ sont chacun indépendamment un groupe sélectionné dans le groupe constitué de

(a) un trans-1,4-cyclohexylène (dans lequel un ou plusieurs groupes $-CH_2-$ non adjacents présents dans le groupe sont remplacés facultativement par un oxygène ou un soufre),
(b) un 1,4-phénylène (dans lequel un ou plusieurs groupes -C= non adjacents présents dans le groupe sont remplacés facultativement par un azote), et
(c) un 1,4-bicyclo(2.2.2)octylène, un naphtalène-2,6-diyle, un décahydronaphtalène-2,6-diyle, un 1,2,3,4-tétrahydronaphtalène-2,6-diyle, et un chromane-2,6-diyle, dans lequel un ou plusieurs atomes d’hydrogène présents dans les groupes (a), (b), et (c) sont remplacés chacun facultativement par un fluor, un chlore, $-CF_3$, ou $-OCF_3$ ;

$Z^{LC}$ est une liaison simple, -CH=CH-, -CF=CF-, -C≡C-, $-CH_2CH_2-$, $-(CH_2)_4-$, $-OCH_2-$, $-CH_2O-$, $-OCF_2-$, $-CF_2O-$, -COO-, ou -OCO-;
$Y^{LC}$ est un hydrogène, un fluor, un chlore, un cyano, ou un groupe alkyle de 1 à 15 atomes de carbone, dans lequel un ou plusieurs groupes $-CH_2-$ dans le groupe alkyle sont remplacés facultativement par -O-, -CH=CH-, -CO-, -OCO-, -COO-, -C≡C-, $-CF_2O-$, ou $-OCF_2-$ de telle sorte que des atomes d’oxygène ne sont pas directement adjacents l’un à l’autre, et un ou plusieurs atomes d’hydrogène dans le groupe alkyle sont remplacés facultativement par un halogène ; et
a est un nombre entier allant de 1 à 4, dans lequel si a est 2, 3, ou 4, chaque occurrence de $A^{LC1}$ peut être identique ou différente, et chaque occurrence de $Z^{LC}$ peut être identique ou différente,
à condition que les composés représentés par les formules générales (LC3), (LC4), (LC5), et (II-a) à (II-f) soient exclus.

**5.** Dispositif d’affichage à cristaux liquides selon l’une quelconque des revendications 1 à 4, dans lequel la composition de cristaux liquides comprend, comme composés représentés par les formules générales (LC3), (LC4), et (LC5), au moins un composé sélectionné dans le groupe constitué des composés représentés par les formules générales (LC3-1), (LC4-1), et (LC5-1) :

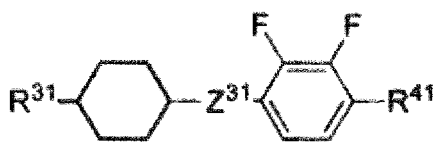

(LC3-1)

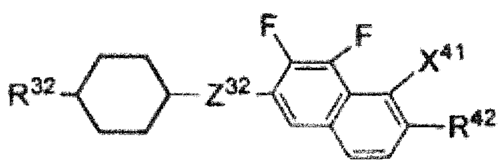

(LC4-1)

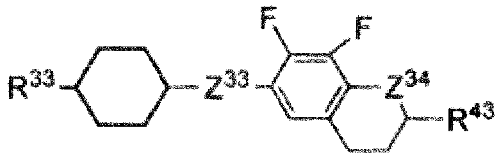

(LC5-1)

dans lesquelles $R^{31}$ à $R^{33}$ sont chacun un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; $R^{41}$ à $R^{43}$ sont chacun un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; $Z^{31}$ à $Z^{33}$ sont chacun une liaison simple, -CH=CH-, -C≡C-, $-CH_2CH_2-$, $-(CH_2)_4-$, -COO-, -OCO-, $-OCH_2-$, $-CH_2O-$, $-OCF_2-$, ou $-CF_2O-$ ; $X^{41}$ est un hydrogène ou un fluor ; et $Z^{34}$ est $-CH_2-$ ou un oxygène.

**6.** Dispositif d'affichage à cristaux liquides selon l'une quelconque des revendications 1 à 5, dans lequel la composition de cristaux liquides comprend, comme composés représentés par les formules générales (LC3), (LC4), et (LC5), au moins un composé sélectionné dans le groupe constitué des composés représentés par les formules générales (LC3-2), (LC4-2), et (LC5-2) :

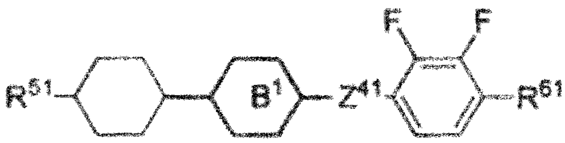

(LC3-2)

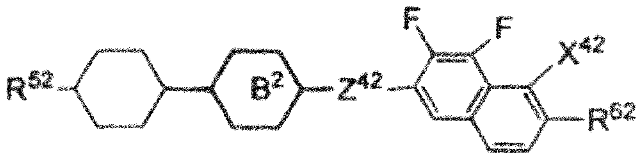

(LC4-2)

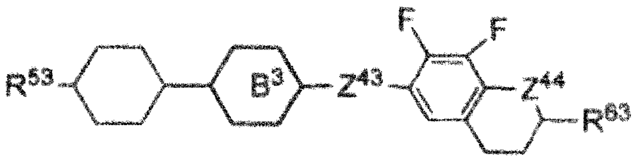

(LC5-2)

dans lesquelles $R^{51}$ à $R^{53}$ sont chacun un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; $R^{61}$ à $R^{63}$ sont chacun un groupe alkyle de 1 à 8 atomes de carbone, un groupe alcényle de 2 à 8 atomes de carbone, un groupe alcoxy de 1 à 8 atomes de carbone, ou un groupe alcényloxy de 2 à 8 atomes de carbone ; $B^1$ à $B^3$ sont chacun un 1,4-phénylène ou un trans-1,4-cyclohexylène facultativement substitué avec un fluor ; $Z^{41}$ à $Z^{43}$ sont chacun une liaison simple, -CH=CH-, -C≡C-, $-CH_2CH_2-$, $-(CH_2)_4-$, -COO-, -OCO-, $-OCH_2-$, $-CH_2O-$, $-OCF_2-$, ou $-CF_2O-$; $X^{42}$ est un hydrogène ou un fluor ; et $Z^{44}$ est $-CH_2-$ ou un oxygène.

**7.** Dispositif d'affichage à cristaux liquides selon l'une quelconque des revendications 1 à 6, dans lequel la composition de cristaux liquides formant la couche de cristaux liquides présente une viscosité de rotation $\gamma 1$ de 150 ou moins, une anisotropie d'indice de réfraction $\Delta n$ de 0,08 à 0,13, et un Z de 13 000 ou moins, dans laquelle Z est représenté par l'équation suivante :

[Math. 1]

$$Z = \gamma 1 / \Delta n^2$$

**8.** Dispositif d'affichage à cristaux liquides selon l'une quelconque des revendications 1 à 7, dans lequel la composition de cristaux liquides formant la couche de cristaux liquides présente une limite de température de phase cristalline liquide nématique supérieure de 60 °C à 120 °C, une limite de température de phase cristalline liquide nématique inférieure de -20 °C ou moins, et une différence entre les limites de température de phase cristalline liquide nématique supérieure et inférieure de 100 à 150.

**9.** Dispositif d'affichage à cristaux liquides selon l'une quelconque des revendications 1 à 8, dans lequel la composition de cristaux liquides formant la couche de cristaux liquides présente une résistivité de $10^{12}$ Ω.m ou plus.

**10.** Dispositif d'affichage à cristaux liquides selon l'une quelconque des revendications 1 à 9, dans lequel la couche de cristaux liquides comprend en outre un polymère d'une composition de cristaux liquides comprenant au moins un composé polymérisable sélectionné dans le groupe constitué :

des composés polymérisables représentés par la formule générale (VI) :

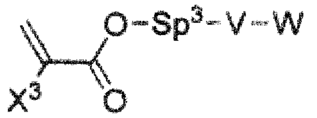
(VI)

dans laquelle $X^3$ est un hydrogène ou un méthyle ; $Sp^3$ est une liaison simple, un groupe alkylène de 1 à 8 atomes de carbone, ou $-O-(CH_2)_t-$ (dans lequel t est un nombre entier allant de 2 à 7, et l'atome d'oxygène est lié au cycle aromatique) ; V est un groupe alkylène polyvalent linéaire ou ramifié de 2 à 20 atomes de carbone ou un substituant cyclique polyvalent de 5 à 30 atomes de carbone, dans lequel le groupe alkylène dans le groupe alkylène polyvalent est facultativement substitué avec un oxygène de telle sorte que des atomes d'oxygène ne sont pas adjacents l'un à l'autre et est facultativement substitué avec un groupe alkyle de 5 à 20 atomes de carbone (dans lequel le groupe alkylène dans le groupe est facultativement substitué avec un oxygène de telle sorte que des atomes d'oxygène ne sont pas adjacents l'un à l'autre) ou un substituant cyclique ; et W est un hydrogène, un halogène, ou un groupe alkylène de 1 à 8 atomes de carbone ; et
des composés polymérisables représentés par la formule générale (V) :

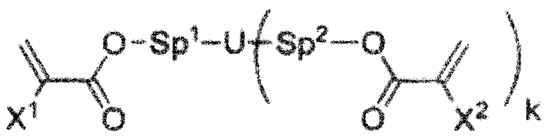
(V)

dans laquelle $X^1$ et $X^2$ sont chacun indépendamment un hydrogène ou un méthyle ; $Sp^1$ et $Sp^2$ sont chacun indépendamment une liaison simple, un groupe alkylène de 1 à 8 atomes de carbone, ou $-O-(CH_2)_s-$ (dans lequel s est un nombre entier allant de 2 à 7, et l'atome d'oxygène est lié au cycle aromatique) ; U est un groupe alkylène polyvalent linéaire ou ramifié de 2 à 20 atomes de carbone ou un substituant cyclique polyvalent de 5 à 30 atomes de carbone, dans lequel le groupe alkylène dans le groupe alkylène polyvalent est facultativement substitué avec un oxygène de telle sorte que des atomes d'oxygène ne sont pas adjacents l'un à l'autre et est facultativement substitué avec un groupe alkyle de 5 à 20 atomes de carbone (dans lequel le groupe alkylène dans le groupe est facultativement substitué avec un oxygène de telle sorte que des atomes d'oxygène ne sont pas adjacents l'un à l'autre) ou un substituant cyclique ; et k est un nombre entier allant de 1 à 5.

**11.** Dispositif d'affichage à cristaux liquides selon l'une quelconque des revendications 1 à 10, comprenant en outre une électrode commune comprenant un matériau conducteur transparent sur le second substrat,
dans lequel la couche de cristaux liquides est alignée de manière homéotrope quand aucune tension n'est appliquée.

**12.** Dispositif d'affichage à cristaux liquides selon l'une quelconque des revendications 1 à 10, comprenant en outre :

des électrodes communes disposées sur le premier ou second substrat et séparées des électrodes de pixels ; et des couches d'alignement qui sont disposées entre les premier et second substrats et la couche de cristaux liquides et en contact avec la couche de cristaux liquides et qui induisent un alignement homogène de la composition de cristaux liquides, les premier et second substrats étant des substrats isolants transparents, dans lequel le trajet le plus court depuis les électrodes de pixels vers les électrodes communes situées à proximité des électrodes de pixel comprend un composant parallèle au premier ou second substrat.

**13.** Dispositif d'affichage à cristaux liquides selon l'une quelconque des revendications 1 à 10, comprenant en outre :

des électrodes communes disposées sur le premier substrat et séparées des électrodes de pixels ; et des couches d'alignement qui sont disposées entre les premier et second substrats et la couche de cristaux liquides et en contact avec la couche de cristaux liquides et qui induisent un alignement homogène de la composition de cristaux liquides, dans lequel la distance d la plus courte entre les électrodes communes et les électrodes de pixels situées à proximité les unes des autres est plus courte que la distance G la plus courte entre les couches d'alignement.

FIG. 1

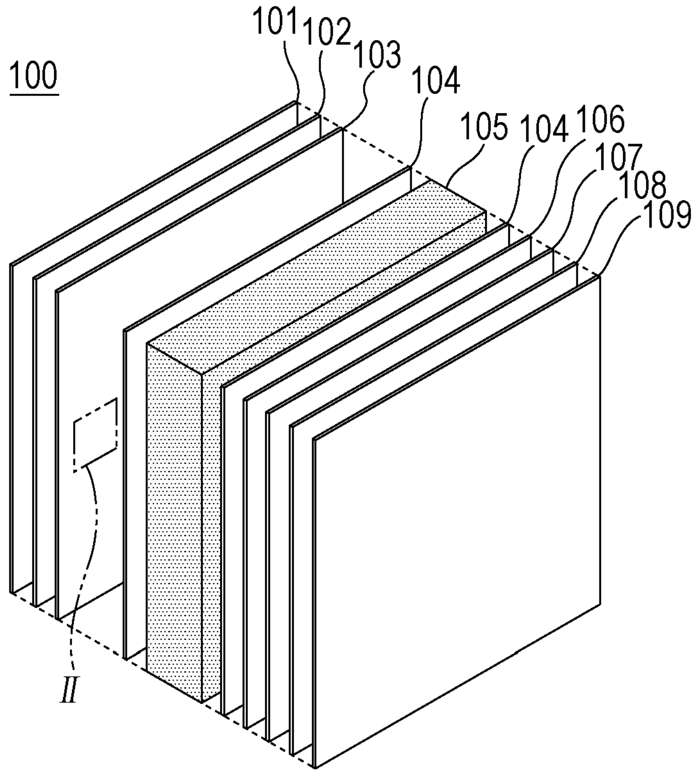
100
101
102
103
104
105
104
106
107
108
109
II

FIG. 2

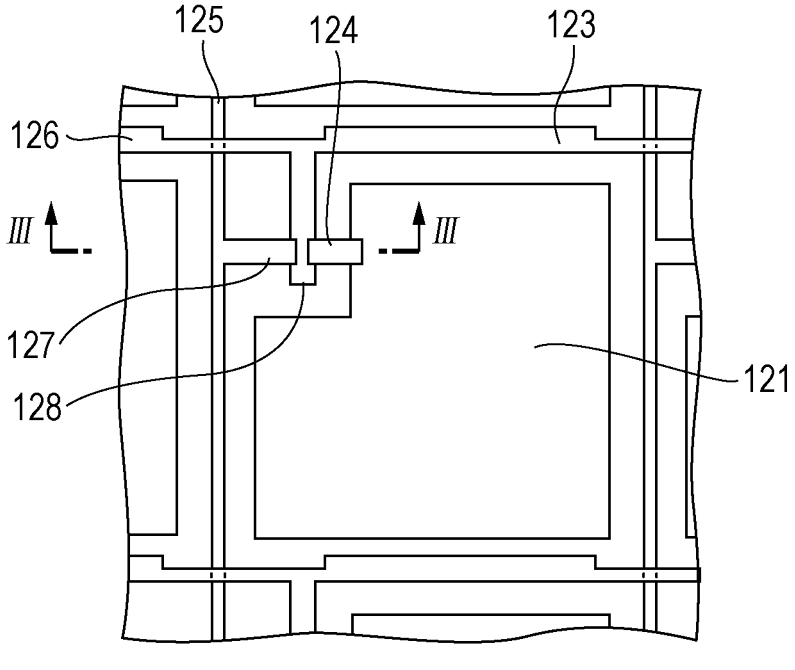
125
124
123
126
III
III
127
128
121

FIG. 3

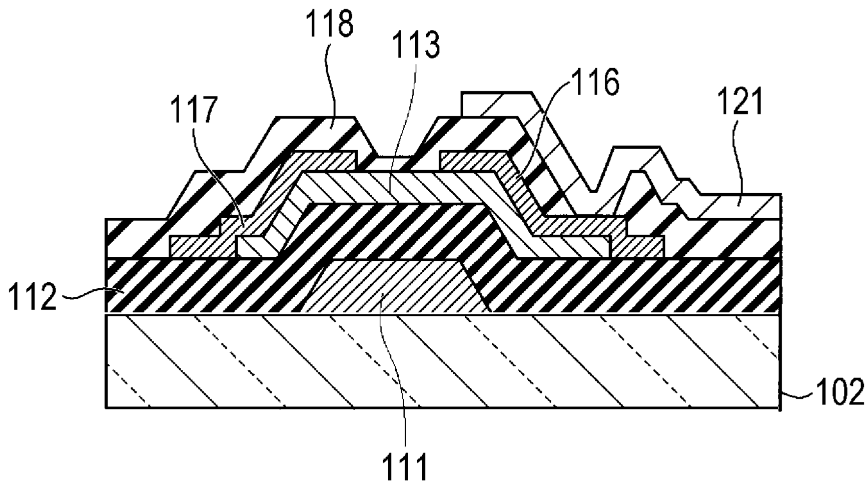


FIG. 4

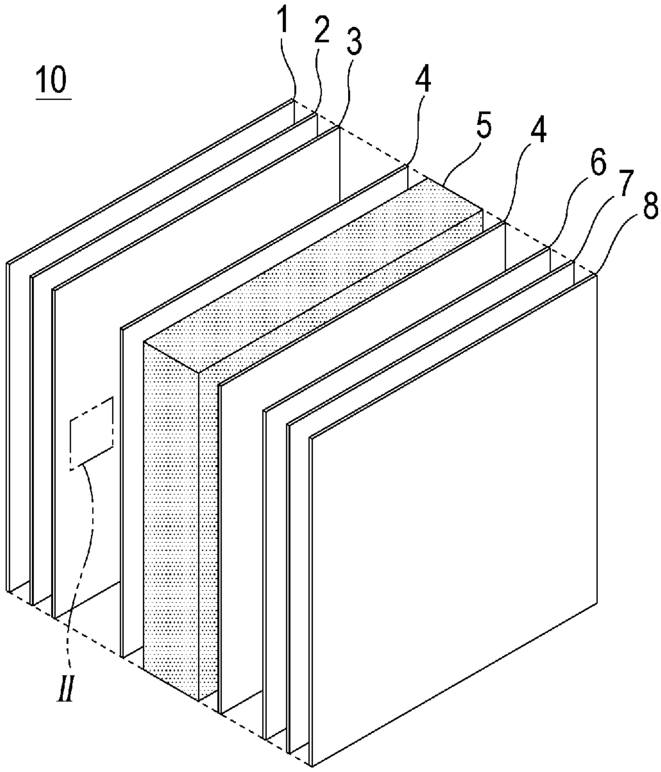

FIG. 5

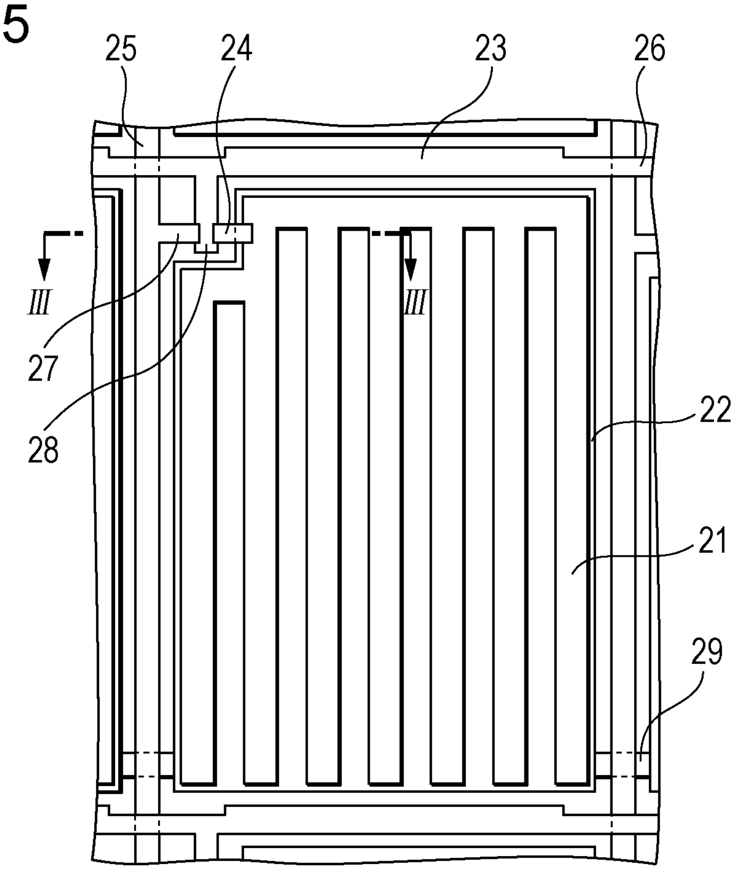
25
24
23
26
III
III
27
28
22
21
29

FIG. 6

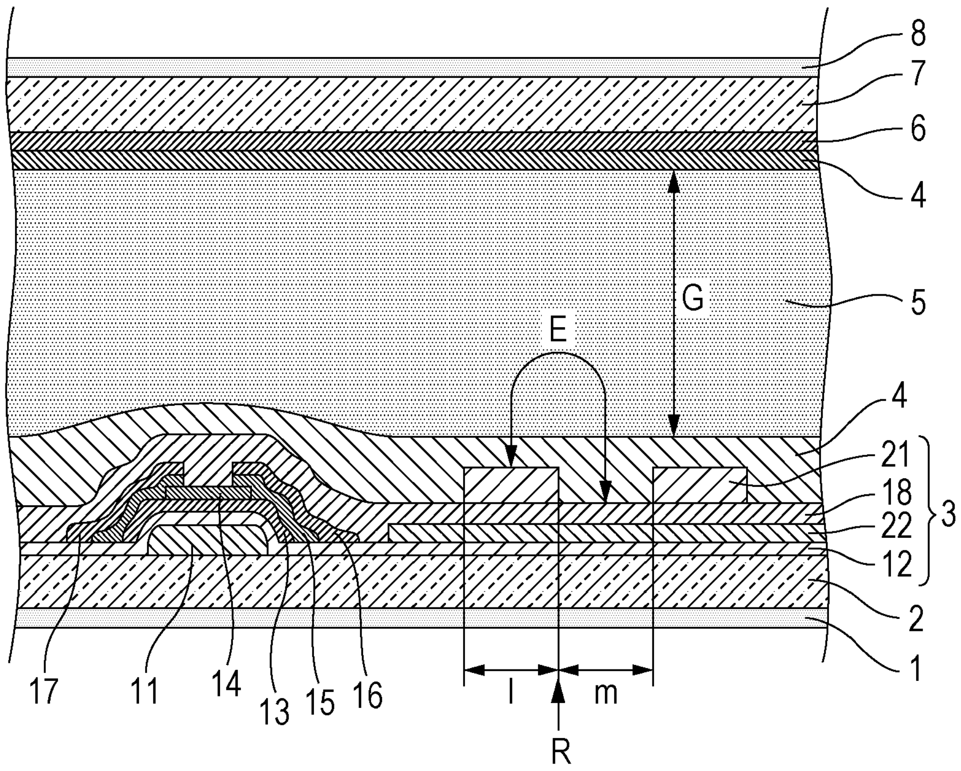
8
7
6
4
G
5
E
4
21
18
22
3
12
2
1
17
11
14
13
15
16
l
m
R

FIG. 7

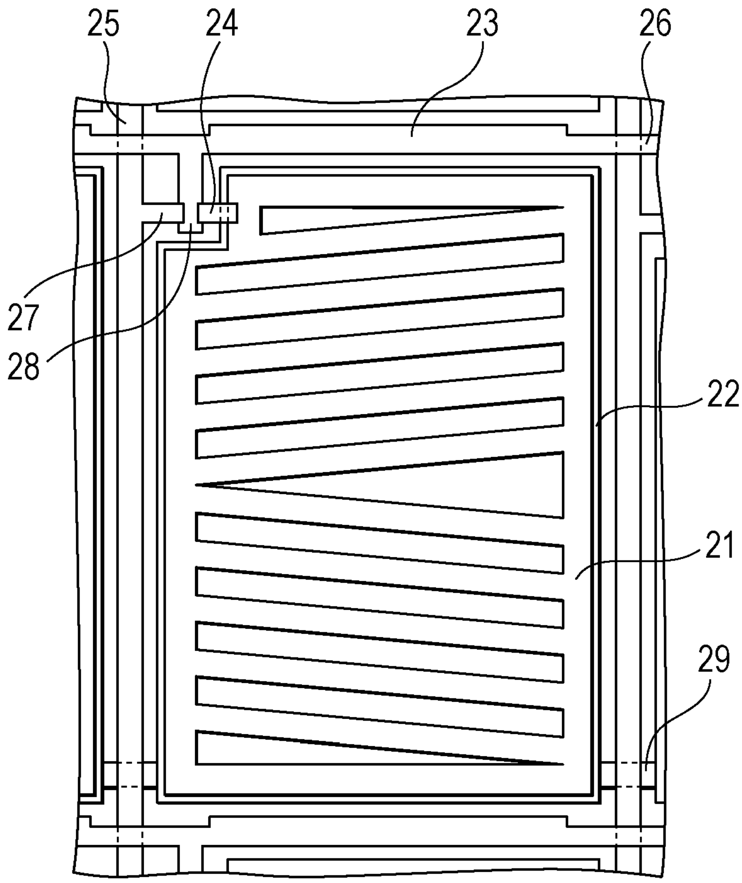
25
24
23
26
27
28
22
21
29

FIG. 8

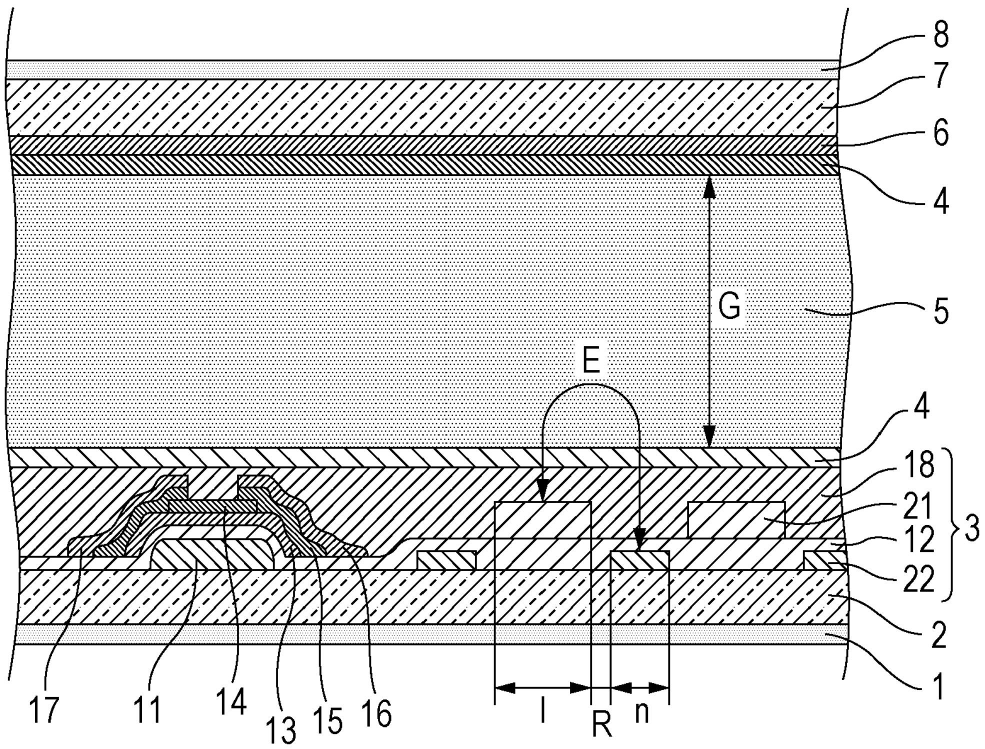
8
7
6
4
G
5
E
4
18
21
12
22
3
2
1
17
11
14
13
15
16
l
R
n

FIG. 9

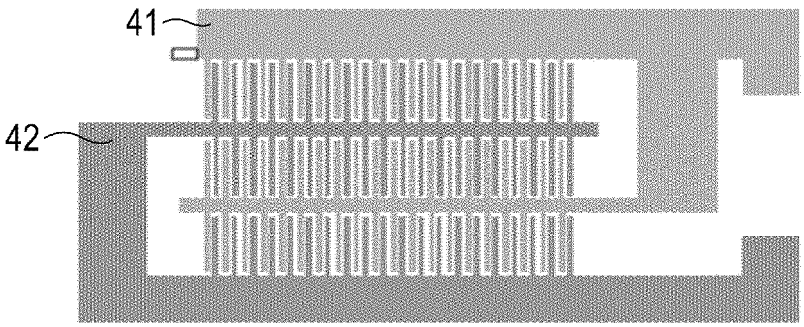


FIG. 10

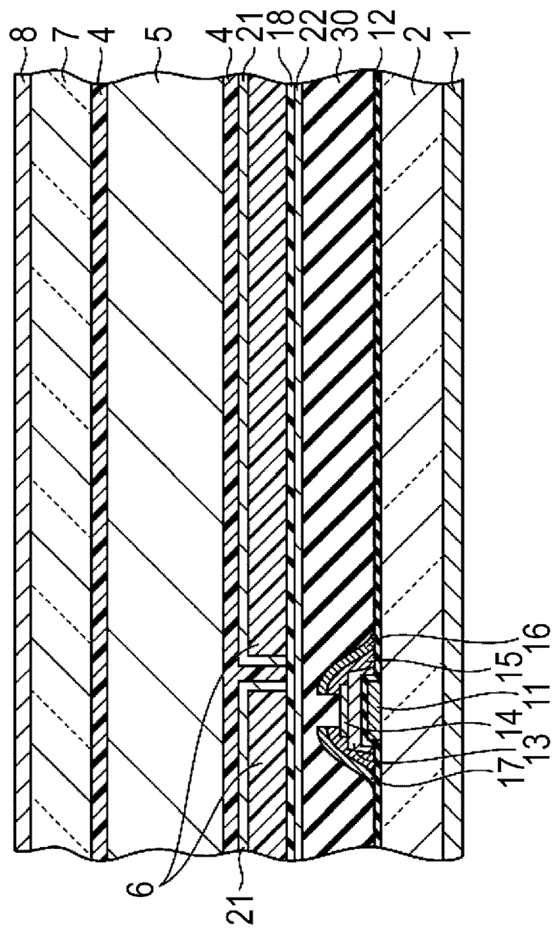

FIG. 11

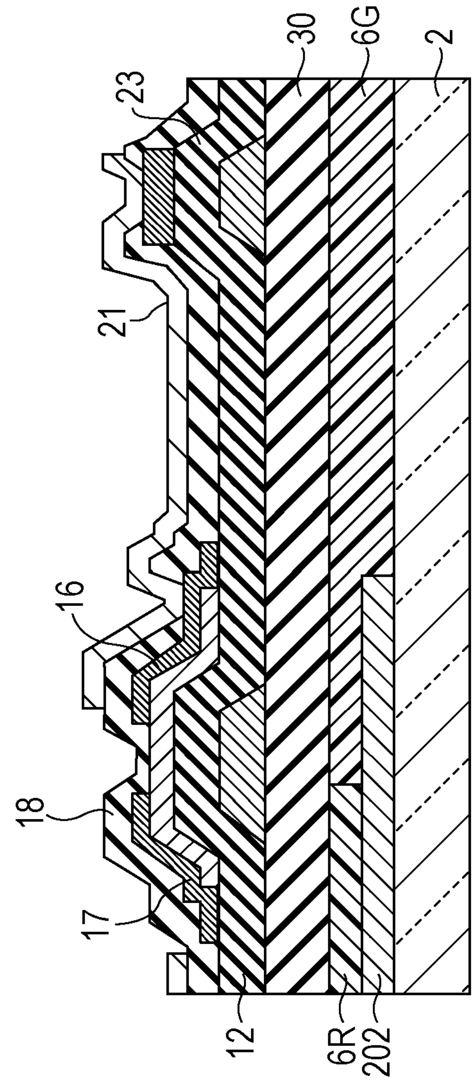

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100140614 A
- EP 2607451 A1
- JP 2013173915 A
- JP 2007096055 A
- JP 2006165528 A